# EUROPEAN PATENT SPECIFICATION

(11) **EP 4 472 356 B1**
(45) Date of publication and mention of the grant of the patent: **01.04.2026**
(21) Application number: 23812126.3
(22) Date of filing: 23.05.2023
(51) Int. Cl.: H05B 6/12, H05B 6/06, H05B 1/02, H02J 50/10

(54) **HOME APPLIANCE AND POWER TRANSMISSION DEVICE FOR DETECTING EMPTY HEATING**
HAUSHALTSGERÄT UND KRAFTÜBERTRAGUNGSVORRICHTUNG ZUR ERKENNUNG EINER LEEREN ERWÄRMUNG
APPAREIL MÉNAGER ET DISPOSITIF DE TRANSMISSION DE PUISSANCE POUR DÉTECTER UN CHAUFFAGE À VIDE

(30) Priority: 27.05.2022 KR 20220065641; 15.11.2022 KR 20220152735
(43) Date of publication of application: 04.12.2024
(73) Proprietor: Samsung Electronics Co., Ltd., Gyeonggi-do, 16677 (KR)
(72) Inventor: KIM, Jaejin, Suwon-si, Gyeonggi-do 16677 (KR); YU, Sojeong, Suwon-si, Gyeonggi-do 16677 (KR); LEE, Taeho, Suwon-si, Gyeonggi-do 16677 (KR); KIM, Yongwook, Suwon-si, Gyeonggi-do 16677 (KR); CHOI, Jiwoong, Suwon-si, Gyeonggi-do 16677 (KR); CHOO, Hyunjoon, Suwon-si, Gyeonggi-do 16677 (KR)
(74) Representative: Walaski, Jan Filip
(86) International application number: PCT/KR2023/007031
(87) International publication number: WO 2023/229352

(56) References cited:
- EP-A1- 3 550 933
- JP-A- 2009 259 740
- JP-B2- 5 052 567
- KR-A- 20160 123 456
- KR-A- 20190 109 966
- KR-B1- 101 703 676
- US-A1- 2007 080 158
- US-A1- 2021 259 061

## Description

### [Technical Field]

The disclosure relates to a method of detecting empty heating that occurs when a wireless power transmission apparatus heats a cooking appliance without an object to be cooked being placed therein, and the wireless power transmission apparatus employing the method. More particularly, the disclosure relates to a method, performed by a cooking appliance, of detecting empty heating when an object to be cooked is not present in the cooking appliance, and the cooking appliance employing the method.

### [Background Art]

An induction range as a wireless power transmission apparatus is a heating apparatus for cooking using the principle of inductive heating and is often also referred to as an induction apparatus. Unlike gas ranges, induction ranges do not consume oxygen and do not discharge waste gas, which may reduce indoor air pollution and an indoor temperature. Furthermore, induction ranges use an indirect method of inducing heat into a target to be heated, have high energy efficiency and high stability, and have a low risk of burns because heat is generated directly in the target without heating a contact surface, and due to these advantages, the demand for induction ranges has continuously increased in recent years.

However, when cooking with an induction range, a user may not easily determine with the naked eye whether a cooking appliance is being heated because the cooking appliance is heated via wireless power transfer, compared to when cooking with a gas range. As a result, the induction range may perform empty heating on a cooking appliance without an object to be cooked being placed therein, which may cause damage to a heater included in the cooking appliance.

Therefore, when using an induction range, there is a need to control the induction range to prevent empty heating by recognizing whether a cooking appliance undergoes empty heating.

In addition, when empty heating occurs in a cooking appliance heated via a wire instead of via a wireless power transmission apparatus, there is a need to control the cooking appliance to prevent overheating due to the empty heating by recognizing the empty heating.

US 2007/080158 A1, EP 3 550 933 Al and JP 5 052567 B2 disclose a wireless power transmission apparatus according to the preamble of claim 1.

### [Disclosure]

### [Technical Solution]

According to the invention, a wireless power transmission apparatus for detecting empty heating as defined in claim is provided. The wireless power transmission apparatus includes a wireless power transmitter including a transmission coil configured to transmit power wirelessly and an inverter circuit configured to drive the transmission coil, at least one processor configured to control the inverter circuit, and a communication interface configured to communicate with a cooking appliance, wherein the communication interface is further configured to receive, from the cooking appliance, a temperature of a bottom surface of the cooking appliance and an internal temperature of the cooking appliance for a first time period during which a heating operation is performed via the transmission coil and for a second time period following the first time period, during which the heating operation via the transmission coil is stopped, and the at least one processor is further configured to control the inverter circuit to stop the heating operation via the transmission coil for the second time period, and determine whether the cooking appliance undergoes empty heating based on a relationship between the temperature of the bottom surface and the internal temperature of the cooking appliance for the second time period.

### [Description of Drawings]

The above and other aspects, features, and advantages of certain embodiments of the disclosure will be more apparent from the following description taken in conjunction with the accompanying drawings, in which:
FIG. 1 is a diagram illustrating a cooking system according to an embodiment of the disclosure;
FIG. 2 is a diagram illustrating types of cooking appliances according to an embodiment of the disclosure;
FIG. 3 is a diagram illustrating types of cooking appliances according to an embodiment of the disclosure;
FIG. 4 is a diagram illustrating a coil arrangement in a cooking appliance, according to an embodiment of the disclosure;
FIG. 5A is a diagram illustrating a load structure in a cooking appliance, according to an embodiment of the disclosure;
FIG. 5B is a block diagram illustrating a path through which power is transmitted from a cooking appliance to a heater, according to an embodiment of the disclosure;
FIG. 6A is a block diagrams illustrating functions of a heating apparatus according to an embodiment of the disclosure;
FIG. 6B is a block diagrams illustrating functions of a heating apparatus according to an embodiment of the disclosure;
FIG. 7A a block diagram illustrating functions of a heating apparatus according to an embodiment of the disclosure;
FIG. 7B is a block diagram illustrating a wired cooking appliance according to an embodiment of the disclosure;
FIG. 8 is a diagram illustrating a wireless power transmitter of a heating apparatus according to an embodiment of the disclosure;
FIG. 9A is a waveform diagram illustrating a power transmission pattern output from a heating apparatus to determine whether a cooking appliance undergoes empty heating, according to an embodiment of the disclosure;
FIG. 9B is a diagram illustrating a power pattern output from a heating apparatus to determine empty heating, according to an embodiment of the disclosure;
FIG. 10 is a temperature change graph for determining empty heating, according to an embodiment of the disclosure;
FIG. 11 is a graph of a temperature change with respect to amount of water, according to an embodiment of the disclosure;
FIG. 12 is a graph for determining empty heating when reheating a heating apparatus, according to an embodiment of the disclosure;
FIG. 13A illustrates a location of a first temperature sensor for detecting a temperature of an object being cooked, according to an embodiment of the disclosure;
FIG. 13B illustrates a location of a first temperature sensor for detecting a temperature of an object being cooked, according to an embodiment of the disclosure;
FIG. 13C illustrates a structure of a cooking appliance according to an embodiment of the disclosure;
FIG. 13D illustrates a coffee dripper according to an embodiment of the disclosure;
FIG. 14 is a flowchart of a method, performed by a heating apparatus, of identifying a location of a cooking appliance, according to an embodiment of the disclosure;
FIG. 15 is a diagram illustrating a power transmission pattern according to an embodiment of the disclosure;
FIG. 16 is a diagram illustrating a power transmission pattern according to an embodiment of the disclosure;
FIG. 17A is a flowchart of a method of determining whether a cooking appliance undergoes empty heating, according to an embodiment of the disclosure;
FIG. 17B is a flowchart of a method of determining whether a cooking appliance undergoes empty heating, according to an embodiment of the disclosure;
FIG. 17C is a flowchart of a method of determining whether a cooking appliance undergoes empty heating, according to an embodiment of the disclosure;
FIG. 17D is a flowchart of a method of determining whether a cooking appliance undergoes empty heating, according to an embodiment of the disclosure;
FIG. 17E is a flowchart of a method of determining whether a cooking appliance undergoes empty heating, according to an embodiment of the disclosure;
FIG. 18 is a flowchart of a method, performed by a heating apparatus, of identifying a location of a cooking appliance, according to an embodiment of the disclosure;
FIG. 19 is a diagram illustrating an operation of a heating apparatus when a cooking appliance (a small appliance) is placed on the heating apparatus, according to an embodiment of the disclosure;
FIG. 20 is a flowchart of a method, performed by a heating apparatus, of providing a graphical user interface (GUI) according to identification information about a cooking appliance, according to an embodiment of the disclosure;
FIG. 21 is a diagram illustrating an operation of providing a GUI according to identification information about a cooking appliance and whether a cooking appliance undergoes empty heating, according to an embodiment of the disclosure;
FIG. 22 is a flowchart of a method, performed by a heating apparatus, of determining a location of a cooking appliance, according to an embodiment of the disclosure;
FIG. 23 is a flowchart of a method, performed by a heating apparatus, of identifying a location of a cooking appliance by using a Near Field Communication (NFC) tag included in the cooking appliance, according to an embodiment of the disclosure;
FIG. 24 is a diagram illustrating an operation in which a heating apparatus identifies a location of a cooking appliance by using an NFC tag embedded in the cooking appliance, according to an embodiment of the disclosure;
FIG. 25 is a flowchart illustrating operations between a heating apparatus and a cooking appliance when it is determined that the cooking appliance undergoes empty heating, according to an embodiment of the disclosure;
FIG. 26 is a flowchart of a method, performed by a heating apparatus, of determining empty heating while reheating a cooking appliance, according to an embodiment of the disclosure;
FIG. 27 is a diagram illustrating an operation in which a heating apparatus interworks with a server apparatus and a display device, according to an embodiment of the disclosure;
FIG. 28 is a diagram illustrating an operation of providing information about a heating apparatus via a display device, according to an embodiment of the disclosure;
FIG. 29 is a diagram illustrating an operation of providing, via a display device, a screen for setting the order of detection operations and empty heating, according to an embodiment of the disclosure; and
FIG. 30 is a diagram illustrating an operation of notifying that empty heating is occurring via a display device, according to an embodiment of the disclosure.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Throughout the specification, when a part "includes" or "comprises" an element, unless there is a particular description contrary thereto, it is understood that the part may further include other elements, not excluding the other elements. Furthermore, terms, such as "portion," "module," or the like, used herein indicate a unit for processing at least one function or operation and may be embodied as hardware or software or a combination of hardware and software.

An embodiment of the disclosure will now be described more fully hereinafter with reference to the accompanying drawings so that the embodiment be easily implemented by one of ordinary skill in the art. However, an embodiment of the disclosure may be implemented in different forms and should not be construed as being limited to an embodiment set forth herein. In addition, parts not related to descriptions of the disclosure are omitted to clearly explain embodiments of the disclosure in the drawings, and like reference numerals denote like elements throughout.

According to an embodiment of the disclosure, a method of preventing a cooking appliance from being overheated by identifying a state in which the cooking appliance undergoes empty heating and a wireless power transmission apparatus employing the method may be provided.

According to an embodiment of the disclosure, a method and wireless power transmission apparatus for preventing empty heating according to a type of a cooking appliance placed on a top plate of the wireless power transmission apparatus may be provided.

A wireless power transmission apparatus for determining whether a cooking appliance undergoes empty heating, according to the invention includes a wireless power transmitter including a transmission coil configured to transmit wireless power and an inverter circuit configured to drive the transmission coil, at least one processor configured to control the inverter circuit, and a communication interface configured to communicate with the cooking appliance, wherein the communication interface is configured to receive, from the cooking appliance, a temperature of a bottom surface of the cooking appliance and an internal temperature of the cooking appliance for a first time period during which a heating operation is performed via the transmission coil and for a second time period following the first time period, during which the heating operation via the transmission coil is stopped, and the at least one processor is configured to control the inverter circuit to stop the heating operation via the transmission coil for the second time period, and determine whether the cooking appliance undergoes empty heating based on a relationship between the temperature of the bottom surface and the internal temperature of the cooking appliance for the second time period.

In an embodiment of the disclosure, the at least one processor may be further configured to determine that the cooking appliance undergoes empty heating when a value obtained by subtracting the internal temperature of the cooking appliance from the temperature of the bottom surface increases for the second time period.

In an embodiment of the disclosure, the at least one processor may be further configured to determine that the cooking appliance does not undergo empty heating when a value obtained by subtracting the internal temperature of the cooking appliance from the temperature of the bottom surface decreases for the second time period.

In an embodiment of the disclosure, the at least one processor may be further configured to determine that the cooking appliance undergoes empty heating when a slope corresponding to a value obtained by subtracting the internal temperature of the cooking appliance from the temperature of the bottom surface has a positive value for the second time period.

In an embodiment of the disclosure, the at least one processor may be further configured to determine that the cooking appliance does not undergo empty heating when a slope corresponding to a value obtained by subtracting the internal temperature of the cooking appliance from the temperature of the bottom surface is greater than a certain value for the second time period.

In an embodiment of the disclosure, a length of the first time period is less than 10 seconds, and a length of the second time period is less than 5 seconds.

In an embodiment of the disclosure, the at least one processor may be further configured to determine that the cooking appliance undergoes empty heating when the temperature of the bottom surface of the cooking appliance increases for the second time period.

In an embodiment of the disclosure, the at least one processor may be further configured to control the inverter circuit to heat, for the first time period, the cooking appliance with certain power for determining empty heating instead of power corresponding to a user input.

In an embodiment of the disclosure, the communication interface may be further configured to receive identification information about the cooking appliance from the cooking appliance, and the at least one processor may be further configured to change, based on the identification information about the cooking appliance, a magnitude of the certain power.

In an embodiment of the disclosure, the at least one processor may be further configured to, when determining that the cooking appliance does not undergo empty heating, control the inverter circuit to output the power corresponding to the user input after the second time period.

In an embodiment of the disclosure, the at least one processor may be further configured to control the inverter circuit to transmit power for communication to the cooking appliance based on a heating start input by a user.

In an embodiment of the disclosure, the at least one processor may be further configured to, when determining that the cooking appliance undergoes empty heating, notify the cooking appliance that the cooking appliance undergoes empty heating via the communication interface.

In an embodiment of the disclosure, the communication interface may be further configured to receive a temperature of the bottom surface and an internal temperature of the cooking appliance with an object being cooked therein for a third time period during which the heating operation via the transmission coil is stopped by the at least one processor while the heating operation is performed on the cooking appliance via the transmission coil after a lapse of the second time period, and the at least one processor may be further configured to further determine whether the cooking appliance undergoes empty heating based on a relationship between the temperature of the bottom surface and the internal temperature of the cooking appliance for the third time period.

In an embodiment of the disclosure, the at least one processor may be further configured to further determine whether the cooking appliance undergoes empty heating, based on a change in the temperature of the bottom surface as well as the relationship between the temperature of the bottom surface and the internal temperature of the cooking appliance for the third time period.

In an embodiment of the disclosure, the at least one processor may be further configured to determine that the cooking appliance undergoes empty heating when the temperature of the bottom surface of the cooking appliance increases and a value obtained by subtracting the internal temperature of the cooking appliance from the temperature of the bottom surface increases for the third time period.

In an embodiment of the disclosure, the wireless power transmission apparatus may further include an output interface and a plurality of cooking zones, wherein the at least one processor may be further configured to identify, from among the plurality of cooking zones, at least one cooking zone where the cooking appliance is located according to a change in load by controlling the inverter circuit to transmit a certain power to the plurality of cooking zones and, when determining that the cooking appliance undergoes empty heating according to determination as to whether the cooking appliance undergoes empty heating, control the output interface to output the identified at least one cooking zone and whether the cooking appliance undergoes empty heating.

In an embodiment of the disclosure, a first temperature sensor may be configured to measure a temperature of a heater of the cooking appliance, and the temperature of the bottom surface may be the temperature of the heater of the cooking appliance.

A method of preventing empty heating in a wireless power transmission apparatus, according to an embodiment of the disclosure, includes heating a cooking appliance via a transmission coil for a first time period, stopping the heating of the cooking appliance via the transmission coil after the first time period has elapsed, obtaining a temperature of a bottom surface of the cooking appliance and an internal temperature of the cooking appliance for the first time period and for a second time period during which the heating via the transmission coil is stopped, and determining whether the cooking appliance undergoes empty heating based on a relationship between the temperature of the bottom surface of the cooking appliance and the internal temperature of the cooking appliance.

According to an embodiment of the disclosure, the determining of whether the cooking appliance undergoes empty heating based on the relationship between the temperature of the bottom surface and the internal temperature of the cooking appliance may include determining that the cooking appliance undergoes empty heating when a value obtained by subtracting the internal temperature of the cooking appliance from the temperature of the bottom surface increases for the second time period.

A cooking appliance for determining empty heating, according to an embodiment of the disclosure, includes a first temperature sensor configured to detect an internal temperature of the cooking appliance, a second temperature sensor configured to detect a temperature of a bottom surface of the cooking appliance,
a communication interface configured to communicate with a wireless power transmission apparatus, and at least one processor, wherein the at least one processor may be configured to obtain an internal temperature of the cooking appliance, which is detected by the first temperature sensor, and a temperature of the bottom surface of the cooking appliance, which is detected by the second temperature sensor, for a second time period during which a heating operation is stopped after a first time period during which the heating operation is performed, and determine that the cooking appliance undergoes empty heating when a value obtained by subtracting the internal temperature of the cooking appliance from the temperature of the bottom surface increases for the second time period, and the communication interface may be configured to, when it is determined that the cooking appliance undergoes empty heating, transmit a notification indicating that the cooking appliance undergoes empty heating to the wireless power transmission apparatus.

In an embodiment of the disclosure, the cooking appliance may further include a fuse configured to stop heating of the cooking appliance, and the at least one processor may be further configured to control, based on determination that the cooking appliance undergoes empty heating, the relay or the thermal fuse to stop heating the cooking appliance.

A computer-readable storage medium according to an embodiment of the disclosure may have stored therein a command for performing a method of preventing empty heating in a wireless power transmission apparatus as program code, the method including heating a cooking appliance via a transmission coil for a first time period, stopping the heating of the cooking appliance via the transmission coil after the first time period has elapsed, obtaining a temperature of a bottom surface of the cooking appliance and an internal temperature of the cooking appliance for the first time period and for a second time period during which the heating via the transmission coil is stopped, and detecting whether the cooking appliance undergoes empty heating based on a relationship between the temperature of the bottom surface and the internal temperature of the cooking appliance.

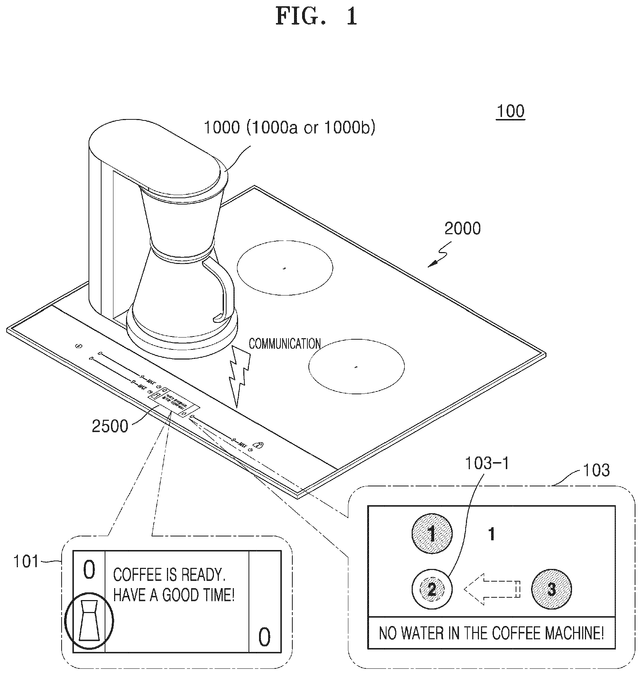

FIG. 1 is a diagram illustrating a cooking system according to an embodiment of the disclosure.

Referring to FIG. 1, a cooking system 100 according to an embodiment of the disclosure may include a cooking appliance 1000 and a heating apparatus 2000. Hereinafter, the heating apparatus 2000 may also be referred to as a wireless power transmission apparatus or a station. In an embodiment of the disclosure, the heating apparatus 2000 may include not only an apparatus for wirelessly transmitting power to the cooking appliance 1000 but also an apparatus for supplying power thereto via a wire. All components shown in FIG. 1 are not essential components. The cooking system 100 may be implemented with more or fewer components than those shown in FIG. 1.

The cooking appliance 1000 may be an apparatus for heating contents (an object being cooked) inside the cooking appliance 1000. The contents in the cooking appliance 1000 may be liquids, such as water, tea, coffee, soup, juice, wine, oil, or the like, or solids, such as butter, meat, vegetables, bread, rice, or the like, but are not limited thereto.

According to an embodiment of the disclosure, the cooking appliance 1000 may wirelessly receive power from the heating apparatus 2000 by using electromagnetic induction. Therefore, according to an embodiment of the disclosure, the cooking appliance 1000 may not include a power line connected to a power outlet. In an embodiment of the disclosure, the cooking appliance 1000 may receive power from the heating apparatus 2000 through a wire. Accordingly, according to an embodiment of the disclosure, the cooking appliance 1000 may include a power line connected to a power outlet.

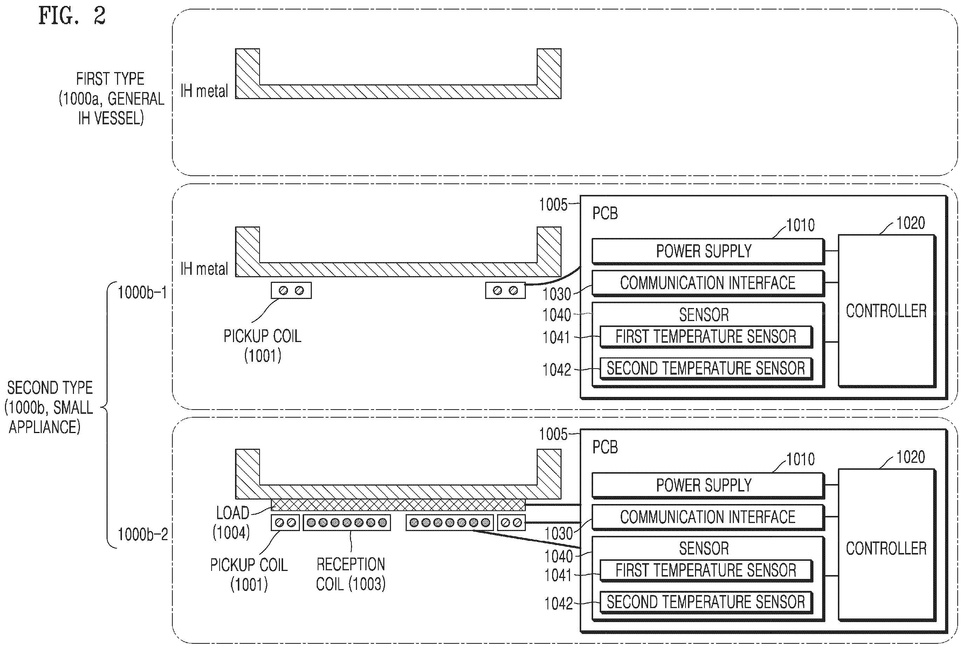

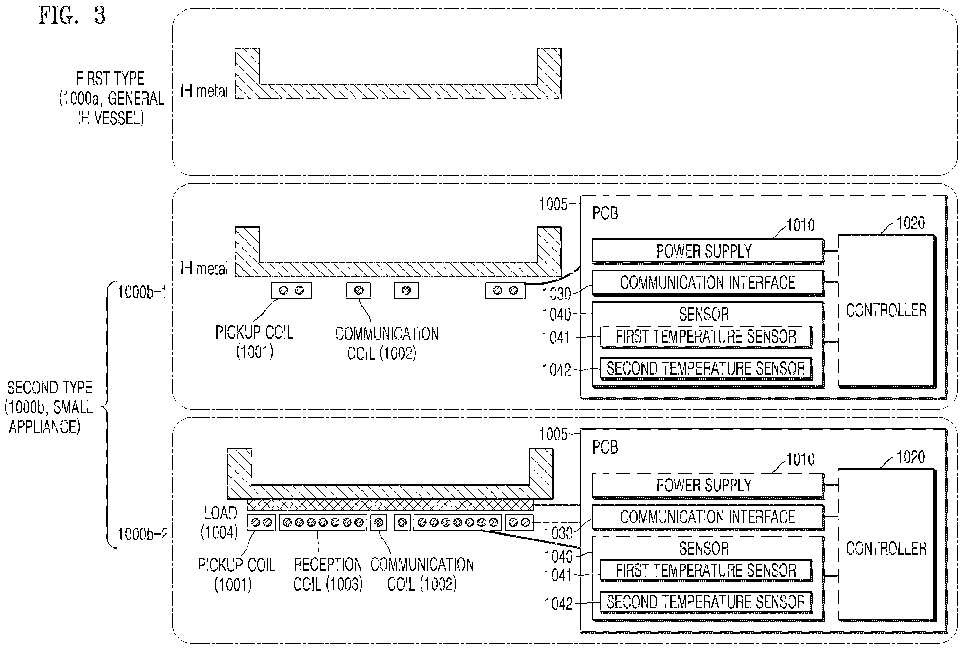

According to an embodiment of the disclosure, the cooking appliance 1000 receiving power wirelessly from the heating apparatus 2000 may be of various types. The cooking appliance 1000 may be a first type cooking appliance 1000a (See FIG. 2), which is a general induction heating (IH) vessel including a magnetic material (hereinafter, referred to as an IH vessel), or a second type cooking appliance 1000b (See FIG. 2) including a communication interface. Hereinafter, the second type cooking appliance 1000b including a communication interface may also be referred to as a small appliance. In addition, the second type cooking appliance 1000b may include a 2-1 type cooking appliance 1000b-1 receiving power via a magnetic material (an IH metal) (e.g., an iron component) and a 2-2 type cooking appliance 1000b-2 receiving power via a reception coil. In the case of the 2-1 type cooking appliance 1000b-1, a magnetic field may be induced in a vessel (IH metal) itself, and for the 2-2 type cooking appliance 1000b-2, a magnetic field may be induced in the reception coil. The type of the cooking appliance 1000 will be described with reference to FIGS. 2 and 3.

The cooking appliance 1000 may be a cooking vessel, such as a pot, a frying pan, or a steamer, or may be a small appliance, such as an electric kettle, a teapot, a coffee machine (or a coffee dripper), a toaster, a blender, an electric rice cooker, an oven, or the like, but is not limited thereto. The cooking appliance 1000 may include a cooker device. The cooker device may be an appliance into or from which a common IH vessel may be inserted or detached. According to an embodiment of the disclosure, the cooker device may be an appliance capable of automatically cooking contents according to a recipe. The cooker device may be named a pot, a rice cooker, or a steamer depending on its use. For example, when an inner pot for cooking rice is inserted into the cooker device, the cooker device may be referred to as a rice cooker. Hereinafter, a cooker device may be referred to as a smart pan (or smart pot).

According to an embodiment of the disclosure, when the cooking appliance 1000 is a small appliance including a communication interface, the cooking appliance 1000 may communicate with the heating apparatus 2000. The communication interface may include a short-range communication interface, a long-range communication interface, or the like. The short-range communication interface may include, but is not limited to, a Bluetooth communication interface, a Bluetooth low energy (BLE) communication interface, a near field communication (NFC) interface, a wireless local area network (WLAN) (or Wi-Fi) communication interface, a Zigbee communication interface, an infrared data association (IrDA) communication interface, a Wi-Fi Direct (WFD) communication interface, an ultra-wideband (UWB) communication interface, an Ant+ communication interface, or the like. The long-range communication interface may be used to communicate with a server apparatus (not shown) when the cooking appliance 1000 is remotely controlled by the server apparatus in an Internet of things (IoT) environment. The long-range communication interface may include the Internet, a computer network (e.g., a LAN or a wide area network (WAN)), and a mobile communication interface. The mobile communication interface may include, but is not limited to, a third-generation (3G) module, a fourth-generation (4G) module, a fifth-generation (5G) module, a long-term evolution (LTE) module, a narrowband IoT (NB-IoT) module, an LTE machine (LTE-M) module, or the like.

According to an embodiment of the disclosure, the cooking appliance 1000 may transmit identification information about the cooking appliance 1000 to the heating apparatus 2000 via a communication interface. The identification information about the cooking appliance 1000 is unique information for identifying the cooking appliance 1000, and may include, but is not limited to, at least one of a medium access control (MAC) address, a model name, appliance type information (e.g., an IH type identification (ID), a heater type ID, and a motor type ID), manufacturer information (e.g., a manufacturer ID), a serial number, or manufacturing time information (a manufacturing date). According to an embodiment of the disclosure, the identification information about the cooking appliance 1000 may be expressed as a series of identification numbers, a series of identification symbols, a combination of numbers and alphabets, a barcode, a quick response (QR) code, a three-dimensional (3D) code, or the like.

Furthermore, according to an embodiment of the disclosure, the cooking appliance 1000 may transmit location information of the cooking appliance 1000 to the heating apparatus 2000 via a communication interface. The location information of the cooking appliance 1000 may include information about a cooking zone (also referred to as a heating zone) where the cooking appliance 1000 is located. In an embodiment of the disclosure, regardless of information transmitted by the cooking appliance 1000, the heating apparatus 2000 may independently determine on which cooking zone the cooking appliance 1000 is located from among cooking zones of the heating apparatus 2000.

According to an embodiment of the disclosure, the cooking appliance 1000 may transmit information to the server apparatus via the heating apparatus 2000. For example, the cooking appliance 1000 may transmit, to the heating apparatus 2000, information obtained by the cooking appliance 1000 itself (e.g., temperature information of a bottom surface or heater included in the cooking appliance 1000, temperature information of contents therein, or the like) via short-range wireless communication (e.g., Bluetooth, BLE, or the like). In this case, the heating apparatus 2000 may transmit information obtained from the cooking appliance 1000 to the server apparatus or a mobile device by accessing the server apparatus or mobile device via the WLAN (Wi-Fi) communication interface or the long-range communication interface (e.g., the Internet). Moreover, the server apparatus may receive the information obtained from the cooking appliance 1000 from the heating apparatus 2000 and provide the information to a user via the mobile device connected to the server apparatus. According to an embodiment of the disclosure, the heating apparatus 2000 may directly transmit the information obtained from the cooking appliance 1000 to a user's mobile terminal via device-to-device (D2D) communication (e.g., WFD communication or BLE communication).

Moreover, according to an embodiment of the disclosure, the cooking appliance 1000 may transmit information obtained by the cooking appliance 1000 itself (e.g., temperature information of contents therein, or the like) directly to the server apparatus via a communication interface (e.g., a WLAN (Wi-Fi) communication interface). In addition, the cooking appliance 1000 may directly transmit information obtained by the cooking appliance 1000 itself (e.g., temperature information of contents therein, or the like) to a user's mobile device via short-range wireless communication (e.g., Bluetooth, BLE, or the like) or D2D communication (e.g., WFD communication).

According to an embodiment of the disclosure, the heating apparatus 2000 may be an apparatus that wirelessly transmits power to an object to be heated (e.g., the cooking appliance 1000) placed on a top plate by using electromagnetic induction. The heating apparatus 2000 may be expressed as an induction range or an electric range. The heating apparatus 2000 may include a working coil that generates a magnetic field for inductively heating the cooking appliance 1000. When the cooking appliance 1000 is the 2-2 type cooking appliance 1000b-2 including a reception coil, the working coil may be referred to as a transmission coil.

Transmitting power wirelessly may mean transferring power by using a magnetic field induced in a reception coil or an IH metal (e.g., an iron component) via magnetic induction. For example, the heating apparatus 2000 may allow current to flow through the working coil (the transmission coil) to generate a magnetic field in the working coil so that eddy currents may be generated in the cooking appliance 1000 or the magnetic field may be induced in the reception coil.

According to an embodiment of the disclosure, the heating apparatus 2000 may include a plurality of working coils. For example, when a top plate of the heating apparatus 2000 includes a plurality of cooking zones, the heating apparatus 2000 may include a plurality of working coils respectively corresponding to the plurality of cooking zones. Furthermore, the heating apparatus 2000 may include a high-power cooking zone with a first working coil provided on the inside and a second working coil provided on the outside. The high-power cooking zone may include three or more working coils.

According to an embodiment of the disclosure, the top plate of the heating apparatus 2000 may be formed of tempered glass, such as ceramic glass so as not to be easily damaged. In addition, a guide mark for guiding a cooking zone in which the cooking appliance 1000 is to be located may be provided on the top plate of the heating apparatus 2000.

According to an embodiment of the disclosure, the heating apparatus 2000 may detect that the cooking appliance 1000 including a magnetic material (e.g., the first type cooking appliance 1000a and the 2-1 type cooking appliance 1000b-1) is placed on the top plate. For example, the heating apparatus 2000 may detect that the cooking appliance 1000 is located on the top plate of the heating apparatus 2000, based on a change in a current value (inductance) of the working coil due to the cooking appliance 1000 being brought close to the heating apparatus 2000. Hereinafter, a mode in which the heating apparatus 2000 senses the cooking appliance 1000 including the magnetic material (IH metal) is referred to as an "IH vessel detection mode".

According to an embodiment of the disclosure, the heating apparatus 2000 may include a communication interface for communicating with an external device. For example, the heating apparatus 2000 may communicate with the cooking appliance 1000 and/or the server apparatus via the communication interface. The communication interface may include a short-range communication interface (e.g., an NFC communication interface, a Bluetooth communication interface, a BLE communication interface, or the like), a long-range communication interface, or the like.

According to an embodiment of the disclosure, the heating apparatus 2000 may detect the cooking appliance 1000 placed on the top plate via the communication interface. For example, the heating apparatus 2000 may detect the cooking appliance 1000 by receiving a packet transmitted from the cooking appliance 1000 placed on the top plate via short-range wireless communication (e.g., BLE or Bluetooth). Because the second type cooking appliance 1000b including the communication interface may be referred to as a small appliance (a small object), a mode in which the heating apparatus 2000 detects the cooking appliance 1000 via the communication interface is hereinafter referred to as a "small appliance detection mode".

According to an embodiment of the disclosure, the heating apparatus 2000 may receive identification information about the cooking appliance 1000 from the cooking appliance 1000 by using short-range wireless communication (e.g., BLE communication or Bluetooth communication). In this case, the cooking appliance 1000 may be the second type cooking appliance 1000b (also referred to as a small appliance) including the communication interface. In addition, when the heating apparatus 2000 determines empty heating for each cooking zone, the heating apparatus 2000 may receive information about a second cooking zone where empty heating is occurring, which is detected by the cooking appliance 1000, together with the identification information about the cooking appliance 1000. Here, the second cooking zone may be a cooking zone where the cooking appliance 1000 is located among a plurality of cooking zones included in the heating apparatus 2000. Referring to FIG. 1, the second cooking zone may be a bottom left cooking zone where the cooking appliance 1000 is placed.

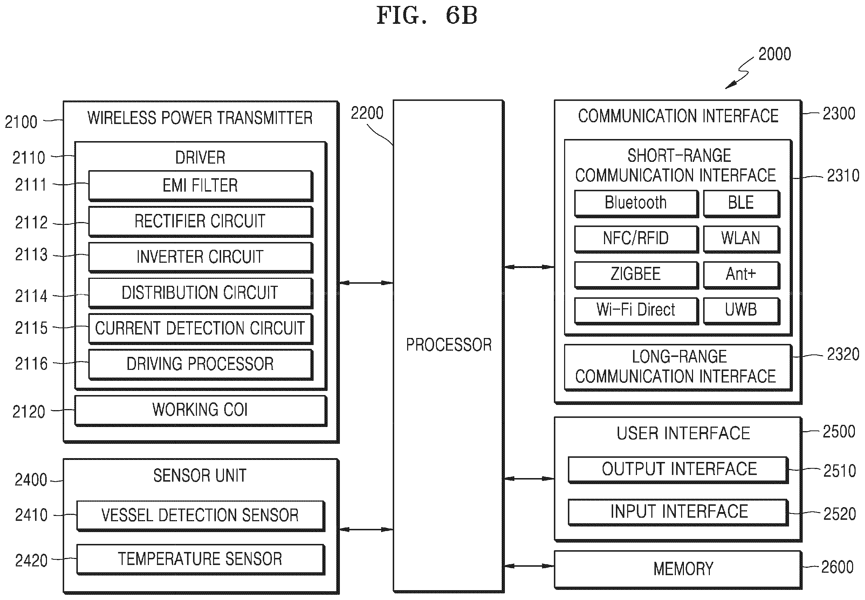

According to an embodiment of the disclosure, the heating apparatus 2000 may display information related to the cooking appliance 1000 via a user interface (2500 of FIG. 6B). For example, when the cooking appliance 1000 is detected, the heating apparatus 2000 may display identification information about the cooking appliance 1000 and location information of the cooking appliance 1000 on a display included in the user interface 2500. Referring to FIG. 1, when the user places a cooking appliance 1000 (e.g., a coffee dripper) on the top plate of the heating apparatus 2000, the heating apparatus 2000 may provide identification information (e.g., coffee dripper) and location information (e.g., the bottom left cooking zone) of the cooking appliance 1000 to the user by displaying a coffee dripper icon at a location corresponding to the bottom left cooking zone on the display.

According to an embodiment of the disclosure, the heating apparatus 2000 may provide a graphical user interface (GUI) corresponding to the identification information about the cooking appliance 1000 via an output interface (2510 of FIG. 6B) of the user interface 2500. For example, when the cooking appliance 1000 is a coffee dripper and the operation of the coffee dripper is completed, the heating apparatus 2000 may output a text "The coffee is ready. Have a good time!" as shown in an enlarged output interface 1 101. In an embodiment of the disclosure, when the cooking appliance 1000 undergoes empty heating, the heating apparatus 2000 may display the text "No water in the coffee machine!" via the output interface 2510 for the cooking appliance 1000 as shown by an enlarged output interface 2 103, notify a user of the same sentence via an audio output, or provide a simple sound alarm. In an embodiment of the disclosure, when the cooking appliance 1000 undergoes empty heating, as shown by the enlarged output interface 2 103, the heating apparatus 2000 may display that the cooking appliance 1000 undergoes empty heating by graphically displaying a cooking zone where the empty heating is occurring via the output interface 2510. Furthermore, the heating apparatus 2000 may notify the user in such a manner that the user may immediately recognize a heating zone (i.e., a cooking zone 103-1) where empty heating is occurring by graphically differentiating the cooking zone 103-1 where the empty heating is occurring from other heating zones where the empty heating is not occurring, e.g., by displaying a circular icon corresponding to the cooking zone 103-1 in a blinking manner or showing the cooking zone 103-1 in different color from a color of the other cooking zones in order to attract the user's attention.

According to an embodiment of the disclosure, in the cooking system 100, the heating apparatus 2000 is capable of automatically identifying a type and a location of the cooking appliance 1000 even when the user simply places the cooking appliance 1000 on the heating apparatus 2000, and when a heating operation is started, the heating apparatus 2000 is also capable of determining that the cooking appliance 1000 undergoes empty heating and providing a location and a type of the cooking appliance 1000 and/or information indicating that the cooking appliance 1000 undergoes empty heating to the user via an appropriate GUI, thereby increasing user convenience. Hereinafter, types of the cooking appliance 1000 according to an embodiment of the disclosure are described with reference to FIGS. 2 and 3.

FIG. 2 is a diagram illustrating types of cooking appliances according to an embodiment of the disclosure.

Referring to FIG. 2, the cooking appliance 1000 may include a first type cooking appliance 1000a, which is a general IH vessel including a magnetic material (e.g., an IH metal), and a second type cooking appliance 1000b capable of communicating with the heating apparatus 2000. The second type cooking appliance 1000b capable of communicating with the heating apparatus 2000 may also be referred to as a small appliance. According to an embodiment of the disclosure, the second type cooking appliance 1000b may be classified into the 2-1 type cooking appliance 1000b-1 including an IH metal (e.g., an iron component) and the 2-2 type cooking appliance 1000b-2 including a reception coil 1003. Each type of the cooking appliance 1000 is described.

The first type cooking appliance 1000a may be inductively heated by the heating apparatus 2000 and may be various types of vessels including a magnetic material. IH is a method of heating an IH metal using an electromagnetic induction phenomenon. For example, when an alternating current (AC) is supplied to a working coil (or a transmission coil) of the heating apparatus 2000, a time-varying magnetic field is induced in the working coil. The magnetic field generated by the working coil passes through a bottom surface of the first type cooking appliance 1000a. When the time-varying magnetic field passes through an IH metal (e.g., iron, nickel steel, or various types of alloys) included in the bottom surface of the first type cooking appliance 1000a, a current circulating around the magnetic field is generated in the IH metal. The circulating current is called an eddy current, and a phenomenon in which current is induced by a time-varying magnetic field is called an electromagnetic induction phenomenon. When the cooking appliance 1000 is the first type cooking appliance 1000a, heat is generated in the bottom surface of the first type cooking appliance 1000a due to resistance of the IH metal (e.g., iron) and eddy current. The heat generated at this time may heat contents in the first type cooking appliance 1000a.

The 2-1 type cooking appliance 1000b-1 may include a pickup coil 1001, a power supply 1010, a controller 1020, a communication interface 1030, and a sensor unit 1040. In this case, the power supply 1010, the controller 1020, and the communication interface 1030 may be mounted on a printed circuit board (PCB) 1005. The pickup coil 1001 may be a low-power coil that generates power for operating the PCB 1005. When power is supplied to the PCB 1005 through the pickup coil 1001, the components mounted on the PCB 1005 may be activated. For example, when power is supplied to the PCB 1005 through the pickup coil 1001, the power supply 1010, the controller 1020, the communication interface 1030, and the sensor unit 1040 may be activated.

In an embodiment of the disclosure, the sensor unit 1040 may include a first temperature sensor 1041 and a second temperature sensor 1042. The first temperature sensor 1041 may measure an internal temperature of the 2-1 type cooking appliance 1000b-1. When an object to be cooked is inside the 2-1 type cooking appliance 1000b-1, the first temperature sensor 1041 may measure a temperature of the object to be cooked. For example, when the 2-1 type cooking appliance 1000b-1 is a smart pot and the object to be cooked is water, the first temperature sensor 1041 may be a side temperature sensor for detecting a side temperature of the smart pot. The side temperature sensor of the smart pot may measure a temperature of water (an internal temperature of the smart pot when there is no water therein), and the measured water temperature may be transmitted to the heating apparatus 2000 via the communication interface 1030. In an embodiment of the disclosure, the side temperature sensor of the 2-1 type cooking appliance 1000b-1, such as the smart pot, may be a sensor that penetrates an outer side of the 2-1 type cooking appliance 1000b-1 and reaches an inner side thereof to measure the internal temperature.

The second temperature sensor 1042 may be used to measure a temperature of a bottom surface of the 2-1 type cooking appliance 1000b-1. Although the second temperature sensor 1042 may be directly attached to the bottom surface of the 2-1 type cooking appliance 1000b-1 to measure the temperature of the bottom surface thereof, the second temperature sensor 1042 may also be attached to the side of the smart pot close to the bottom surface of the smart pot in order to prevent damage to the second temperature sensor 1042. The temperature of the bottom surface of the cooking appliance 1000b-1 measured by the second temperature sensor 1042 may be transmitted to the heating apparatus 2000 via the communication interface 1030.

In an embodiment of the disclosure, a temperature sensor for measuring the temperature of the bottom surface of the 2-1 type cooking appliance 1000b-1, such as the smart pot may be located on a top plate of the heating apparatus 2000 and not on the cooking appliance 1000b-1. In this case, the temperature sensor for measuring the temperature of the bottom surface of the 2-1 type cooking appliance 1000b-1 may be a component of the heating apparatus 2000, not a component of the 2-1 type cooking appliance 1000b-1. When a temperature sensor for measuring the temperature of the bottom surface of the 2-1 type cooking appliance 1000b-1 is placed on the top plate of the heating apparatus 2000, the heating apparatus 2000 may directly obtain the temperature of the bottom surface of the 2-1 type cooking appliance 1000b-1 without relying on communication.

The 2-2 type cooking appliance 1000b-2 may include a pickup coil 1001, a reception coil 1003, a power supply 1010, a controller 1020, a communication interface 1030, and a sensor unit 1040. In this case, the power supply 1010, the controller 1020, and the communication interface 1030 may be mounted on a PCB 1005. The pickup coil 1001 may be a low-power coil that generates power for operating the PCB 1005. When power is supplied to the PCB 1005 through the pickup coil 1001, the components mounted on the PCB 1005 may be activated. For example, when power is supplied to the PCB 1005 through the pickup coil 1001, the power supply 1010, the controller 1020, and the communication interface 1030 may be activated. According to an embodiment of the disclosure, when power is supplied to the PCB 1005 through the pickup coil 1001, the sensor unit 1040 may also be activated in addition to the power supply 1010, the controller 1020, and the communication interface 1030.

In an embodiment of the disclosure, the sensor unit 1040 may include a first temperature sensor 1041 and a second temperature sensor 1042. The first temperature sensor 1041 may measure an internal temperature of the 2-2 type cooking appliance 1000b-2. When an object to be cooked is inside the 2-2 type cooking appliance 1000b-2, the first temperature sensor 1041 may measure a temperature of the object to be cooked. For example, when the 2-2 type cooking appliance 1000b-2 is a coffee dripper and the object to be cooked is water, the first temperature sensor 1041 may measure a temperature of the water (an internal temperature of a water heater that heats the water in the coffee dripper when there is no water therein), and the measured water temperature (or the internal temperature of the water heater) may be transmitted to the heating apparatus 2000 via the communication interface 1030. The second temperature sensor 1042 may be used to measure a temperature of a heater (not shown) included in a load 1004 of the 2-2 type cooking appliance 1000b-2. Although the second temperature sensor 1042 may be directly attached to the heater to measure the temperature of the heater, the second temperature sensor 1042 may also be attached to a bracket formed integrally with the heater in order to prevent damage to the second temperature sensor 1042. The temperature of the bracket (or heater) measured by the second temperature sensor 1042 may be transmitted to the heating apparatus 2000 via the communication interface 1030. Hereinafter, 'measuring the temperature of the heater' may include indirectly measuring the temperature of the heater by 'measuring the temperature of the bracket'. Therefore, the "temperature of the bracket' may be understood as the 'temperature of the heater'.

In an embodiment of the disclosure, the controller 1020 may include at least one processor (not shown) capable of controlling all operations of the cooking appliance 1000.

FIG. 3 is a diagram illustrating types of cooking appliances according to an embodiment of the disclosure.

Referring to FIG. 3, the second type cooking appliance 1000b may further include a communication coil 1002. The communication coil 1002 is a coil for performing short-range wireless communication with the heating apparatus 2000. Power transmitted via the communication coil 1002 may be referred to as power for communication. For example, the communication coil 1002 may be an NFC antenna coil for NFC communication. Although FIG. 3 shows that the number of turns in the communication coil 1002 is 1, the number of turns therein is not limited thereto. The communication coil 1002 may have a plurality of number of turns. For example, the communication coil 1002 may be wound with 5 to 6 turns. An NFC circuit connected to the NFC antenna coil may receive power through the pickup coil 1001. Hereinafter, the above components are described.

The power supply 1010 may be a switched- mode power supply (SMPS) that receives AC power from the pickup coil 1001 and supplies direct current (DC) power to the controller 1020 or the communication interface 1030. In addition, when other components in the cooking appliance 1000b as well as the controller 1020 and the communication interface 1030 require DC power and AC power in a form other than commercial AC power, the power supply 1010 may include an inverter and/or a converter that supply the AC power and DC power thereto.

The power supply 1010 may include a rectifier (a rectifier circuit) that converts AC power into DC power. This changing alternating current can be converted into direct current having a constant magnitude. The rectifier may convert an AC voltage whose magnitude and polarity (positive or negative voltage) change over time into a DC voltage whose polarity remains constant over time, and convert an AC current whose magnitude and direction (positive or negative current) change over time into a DC current having a constant magnitude. The rectifier may include a bridge diode. The bridge diode may convert an AC voltage whose polarity changes over time into a positive voltage having a constant polarity, and convert an AC current whose direction changes over time into a positive current that flows in a constant direction. The rectifier may include a DC link capacitor. The DC link capacitor may convert a positive voltage whose magnitude changes with time into a DC voltage having a constant magnitude. An inverter connected to the DC link capacitor may generate AC power with various frequencies and magnitudes required by the second type cooking appliance 1000b, and a converter may generate DC power with various magnitudes required by the second type cooking appliance 1000b.

The controller 1020 may include at least one processor to control all operations of the second type cooking appliance 1000b. For example, the at least one processor included in the controller 1020 may control the power supply 1010, the communication interface 1030, or the like. The processor of the controller 1020 may be a micro control unit (MCU).

According to an embodiment of the disclosure, the controller 1020 may detect a power transmission pattern of power received from the heating apparatus 2000 via the power supply 1010 to thereby identify a current location of the cooking appliance 1000b. For example, the controller 1020 may compare prestored power transmission patterns for each cooking zone with the detected power transmission pattern, thereby determining which cooking zone corresponds to the detected power transmission pattern. In this case, the second type cooking appliance 1000b may further include a voltage sensor for detecting a power transmission pattern.

The controller 1020 may control the communication interface 1030 to transmit or receive data. For example, the controller 1020 may control the communication interface 1030 to transmit at least one of identification information, location information, or communication connection information of the second type cooking appliance 1000b to the heating apparatus 2000.

According to an embodiment of the disclosure, the PCB 1005 of the second type cooking appliance 1000b may include the sensor unit 1040. In this case, the controller 1020 may control the sensor unit 1040. For example, the first temperature sensor 1041 of the sensor unit 1040 may measure a temperature of contents in the second type cooking appliance 1000b, and the controller 1020 may transmit a measurement result to the communication interface 1030. In addition, the controller 1020 may monitor the temperature of the contents at regular intervals with the first temperature sensor 1041. In addition, the controller may control the communication interface 1030 to transmit temperature information of the contents to the heating apparatus 2000 by using short-range wireless communication. According to an embodiment of the disclosure, the sensor unit 1040 may further include the second temperature sensor 1042 for measuring, when the second type cooking appliance 1000b is inductively heated, a temperature of a bottom surface of the second type cooking appliance 1000b or a temperature of a heater (not shown) heated via the reception coil 1003, and the controller 1020 may transmit a temperature measured by the second temperature sensor 1042 to the communication interface 1030. The controller 1020 may also control the communication interface 1030 to transmit temperature information of the heater or the bottom surface to the heating apparatus 2000 by using short-range wireless communication.

The communication interface 1030 may include one or more components that enable communication between the second type cooking appliance 1000b and the heating apparatus 2000, between the second type cooking appliance 1000b and a server apparatus (not shown), or between the second type cooking appliance 1000b and a mobile terminal (not shown). For example, the communication interface 1030 may include a short-range communication interface, a long-range communication interface, or the like.

The short-range communication interface may include, but is not limited to, a Bluetooth communication interface, a BLE communication interface, an NFC interface, a WLAN (or Wi-Fi) communication interface, a Zigbee communication interface, an IrDA communication interface, a WFD communication interface, a UWB communication interface, an Ant+ communication interface, or the like. The long-range communication interface may be used to communicate with a server apparatus (not shown) when the second type cooking appliance 1000b is remotely controlled by the server apparatus in an IoT environment. The long-range communication interface may include the Internet, a computer network (e.g., a LAN or a WAN), and a mobile communication interface. The mobile communication interface may include, but is not limited to, a 3G module, a 4G module, a 5G module, an LTE module, an NB-IoT module, an LTE-M module, or the like.

According to an embodiment of the disclosure, the second type cooking appliance 1000b may transmit information to the server apparatus via the heating apparatus 2000. For example, the second type cooking appliance 1000b may transmit, to the heating apparatus 2000, information obtained by the second type cooking appliance 1000b itself (e.g., temperature information of contents therein, temperature information of the bottom surface or heater, or the like) by using short-range wireless communication (e.g., Bluetooth, BLE, or the like). In this case, the heating apparatus 2000 may transmit, to the server apparatus, information obtained from the second type cooking appliance 1000b by accessing the server apparatus via the WLAN (Wi-Fi) communication interface or the long-range communication interface (e.g., the Internet). Moreover, the server apparatus may receive the information obtained from the second type cooking appliance 1000b from the heating apparatus 2000 and provide the information to the user via the mobile device connected to the server apparatus. According to an embodiment of the disclosure, the heating apparatus 2000 may directly transmit the information obtained from the second type cooking appliance 1000b to a user's mobile terminal via D2D communication (e.g., WFD communication or BLE communication).

Moreover, all of the components shown in FIGS. 2 and 3 are not essential components. The second type cooking appliance 1000b may be implemented with more or fewer components than those shown in FIG. 2 or 3. For example, the second type cooking appliance 1000b may further include, in addition to the power supply 1010, the controller 1020, the communication interface 1030, and the sensor 1040, a user interface, a memory, a battery, a heater, an insulation pad, a bracket, a relay, a thermal fuse, or the like.

Here, the user interface may include an input interface that receives a user input and an output interface that outputs information. The output interface is for outputting a video signal or an audio signal. The output interface may include a display, an audio output interface, a vibration motor, or the like. When the display and a touch pad form a layer structure to construct a touch screen, the display may serve as an input interface as well as an output interface. The audio output interface may output audio data received via the communication interface 1030 or stored in a memory (not shown).

According to an embodiment of the disclosure, when the second type cooking appliance 1000b includes a battery, the second type cooking appliance 1000b may use the battery as an auxiliary power source. For example, when the second type cooking appliance 1000b provides a keep-warm function, the second type cooking appliance 1000b may monitor a temperature of contents therein by using power from the battery even when power transmission from the heating apparatus 2000 is stopped. When the temperature of the contents therein decreases below a critical temperature, the second type cooking appliance 1000b may transmit a notification to a mobile terminal or request power transmission from the heating apparatus 2000 by using power from the battery.

In addition, before receiving power from the heating apparatus 2000, the second type cooking appliance 1000b may drive the communication interface 1030 using power from the battery and transmit a wireless communication signal to the heating apparatus 2000, so that the heating apparatus 2000 may recognize the second type cooking appliance 1000b in advance. The battery may include a secondary battery (e.g., a lithium-ion battery, a nickel-cadmium battery, a polymer battery, a nickel metal hydride battery, or the like), a super capacitor, or the like, but is not limited thereto. The super capacitor is a capacitor with a very high capacitance and is also called an ultra-capacitor or an ultra-high-capacity capacitor.

According to an embodiment of the disclosure, when the second type cooking appliance 1000b includes a memory, the memory may store programs necessary for processing or control performed by the processor included in the controller 1020 and input/output data (e.g., power transmission pattern information for each cooking zone, identification information about the second type cooking appliance 1000b, or the like).

The memory may include at least one type of storage medium, i.e., at least one of a flash memory-type memory, a hard disk-type memory, a multimedia card micro-type memory, a card-type memory (e.g., a secure digital (SD) card or an eXtreme digital (XD) memory), random access memory (RAM), static RAM (SRAM), read-only memory (ROM), electrically erasable programmable ROM (EEPROM), PROM, a magnetic memory, a magnetic disc, or an optical disc. Programs stored in the memory may be categorized into a plurality of modules according to their functions. At least one artificial intelligence (AI) model may be stored in the memory.

Moreover, according to an embodiment of the disclosure, the second type cooking appliance 1000b may include a 2-1 type cooking appliance 1000b-1 including an IH metal (e.g., an iron component) and a 2-2 type cooking appliance 1000b-2 including the reception coil 1003. In the case of the 2-1 type cooking appliance 1000b-1, like the first type cooking appliance 1000a, which is a general IH vessel, eddy current may be generated in the IH metal of the 2-1 type cooking appliance 1000b-1 and used to heat contents in the 2-1 type cooking appliance 1000b-1. The 2-1 type cooking appliance 1000b-1 may include, but is not limited to, a smart kettle, an electric rice cooker (smart pot), or the like.

The 2-2 type cooking appliance 1000b-2 may further include the reception coil 1003 and a load 1004 in comparison to the 2-1 type cooking appliance 1000b-1. The reception coil 1003 may be a coil that receives wireless power transmitted from the heating apparatus 2000 and drives the load 1004. For example, while a magnetic field created by a current flowing in a transmission coil (a working coil 2120 of FIG. 6B) of the heating apparatus 2000 passes through the reception coil 1003, an induced current flows through the reception coil 1003 so that energy may be supplied to the load 1004. Hereinafter, when an induced current flows in the reception coil 1003 due to a magnetic field created by the transmission coil, it may be considered that the reception coil 1003 receives power wirelessly from the transmission coil. According to an embodiment of the disclosure, the reception coil 1003 may have a concentric circular shape or an elliptical shape, but is not limited thereto. According to an embodiment of the disclosure, the 2-2 type cooking appliance 1000b-2 may include a plurality of reception coils 1003. For example, the 2-2 type cooking appliance 1000b-2 may include a reception coil for a warming heater and a reception coil for a heating heater. In this case, the reception coil for a heating heater may drive the heating heater, and the reception coil for a warming heater may drive the warming heater.

According to an embodiment of the disclosure, in the 2-2 type cooking appliance 1000b-2, the pickup coil 1001, the communication coil 1002, and the reception coil 1003 may be arranged on the same layer. For example, referring to FIG. 3, the communication coil 1002, the reception coil 1003, and the pickup coil 1001 may be respectively arranged at an innermost portion, an intermediate portion, and an outermost portion of the layer, but are not limited thereto.

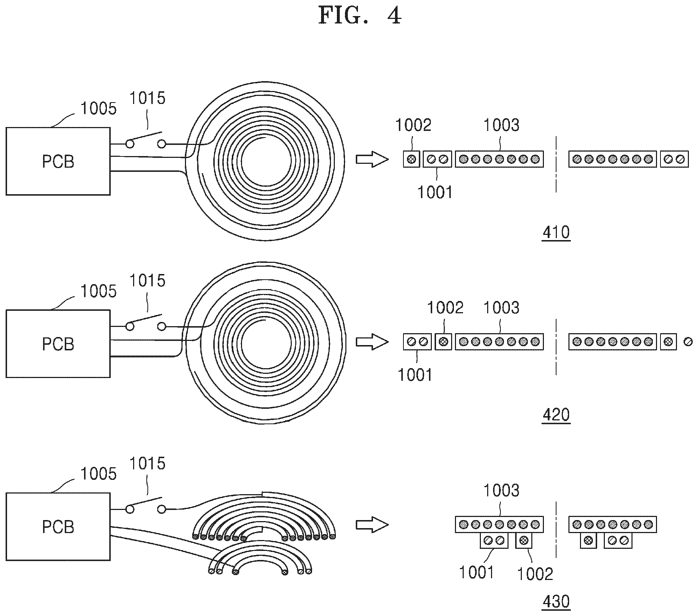

FIG. 4 is a diagram illustrating a coil arrangement in a cooking appliance, according to an embodiment of the disclosure.

Referring to 410 of FIG. 4, a reception coil 1003 may be arranged at an innermost portion, a pickup coil 1001 may be arranged at an intermediate portion, and a communication coil 1002 may be arranged at an outermost portion. In addition, referring to 420 of FIG. 4, the reception coil 1003 may be arranged at the innermost portion, the communication coil 1002 may be arranged at the intermediate portion, and the pickup coil 1001 may be arranged at the outermost portion. Moreover, although not shown, the three types of coils may be arranged in the following order from innermost to outermost:
1) pickup coil 1001 - reception coil 1003 - communication coil 1002
2) pickup coil 1001 - communication coil 1002 - reception coil 1003
3) communication coil 1002 - pickup coil 1001 - reception coil 1003

According to an embodiment of the disclosure, in the 2-2 type cooking appliance 1000b-2, the pickup coil 1001, the communication coil 1002, and the reception coil 1003 may be arranged in a stacked structure. For example, referring to 430 in FIG. 4, the pickup coil 1001 and the communication coil 1002, each not having a large number of turns, form one layer while the reception coil 1003 forms the other layer, so that the two layers may be stacked.

The load 1004 may include, but is not limited to, a heater, an insulation pad, a bracket, a bracket temperature sensor, a motor or a battery to be charged, or the like. The heater is for heating contents in the 2-2 type cooking appliance 1000b-2. The heater may have various shapes, and an outer shell of the heater may be formed of various materials (e.g., iron, stainless steel, copper, aluminum, incoloy, inconel, or the like). According to an embodiment of the disclosure, the 2-2 type cooking appliance 1000b-2 may include a plurality of heaters. For example, the 2-2 type cooking appliance 1000b-2 may include a warming heater and a heating heater. The warming heater and the heating heater may produce different levels of heating output. For example, a heating level of the warming heater may be lower than that of the heating heater.

According to an embodiment of the disclosure, the 2-2 type cooking appliance 1000b-2 may further include a resonant capacitor (not shown) between the reception coil 1003 and the load 1004. At this time, a resonance value may be set differently according to the amount of power required by the load 1004. Furthermore, according to an embodiment of the disclosure, the 2-2 type cooking appliance 1000b-2 may further include a switch 1015 (e.g., a relay switch or a semiconductor switch) for turning on/off power for an operation of the load 1004. When receiving, from the heating apparatus 2000, an empty heating notification indicating that the 2-2 type cooking appliance 1000b-2 undergoes empty heating, the controller 1020 of the PCB 1005 may control the switch 1015 to stop an operation of the reception coil 1003.

According to an embodiment of the disclosure, the 2-2 type cooking appliance 1000b-2 may include, but is not limited to, a heater-applied product (e.g., a coffee machine (coffee dripper) or a toaster), a motor-applied product (e.g., a blender), or the like.

On the other hand, according to an embodiment of the disclosure, the first type cooking appliance 1000a including an IH metal may be detected in an IH vessel detection mode of the heating apparatus 2000, but not detected in a small appliance detection mode of the heating apparatus 2000 because the first type cooking appliance 1000a is unable to communicate with the heating apparatus 2000. The 2-1 type cooking appliance 1000b-1 including an IH metal may be detected in the IH vessel detection mode of the heating apparatus 2000, and detected even in the small appliance detection mode thereof because communication with the heating apparatus 2000 is also possible. Because the 2-2 type cooking appliance 1000b-2 does not contain an IH metal, the 2-2 type cooking appliance 1000b-2 may not be detected in the IH vessel detection mode of the heating apparatus 2000, but may be detected in the small appliance detection mode of the heating apparatus 2000 because communication with the heating apparatus 2000 is possible. Hereinafter, unless otherwise specifically in the specification, the cooking appliance 1000 refers to the second type cooking appliance 1000b capable of performing a communication function.

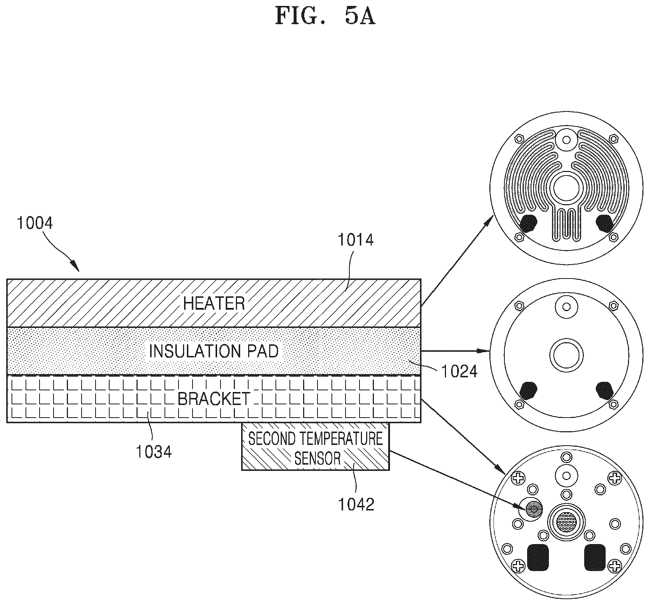

FIG. 5A is a diagram illustrating a load structure in a cooking appliance, according to an embodiment of the disclosure.

The cooking appliance 1000 shown in FIG. 5A is the 2-2 type cooking appliance 1000b-2 that is an example of the cooking appliance 1000 which heats up as a heater is heated by the reception coil 1003.

The load 1004 may include a heater 1014 heated by the reception coil 1003, an insulation pad 1024 located between the heater 1014 and a bracket 1034, the bracket 1034, and a second temperature sensor 1042 for detecting a temperature of the bracket 1034, but is not limited thereto.

As described above, the heater 1014 is for heating contents in the cooking appliance 1000. The heater 1014 may have various shapes, and an outer shell of the heater 1014 may be formed of various materials (e.g., iron, stainless steel, copper, aluminum, incoloy, inconel, or the like).

The insulation pad 1024 serves to insulate between the bracket 1034 and the heater 1014 to prevent a risk of the bracket 1034 not being insulated from the heater 1014 when the bracket 1034 is formed of a conductive material.

The bracket 1034 includes the second temperature sensor 1042 so that the temperature of the heater 1014 may be indirectly sensed. In addition, the bracket 1034 is used to fix the structure so that the heater 1014 may be combined with the cooking appliance 1000, and may be used as a heat sink that evenly distributes heat generated by the reception coil 1003 to prevent a concentration of the heat in one area on the reception coil 1003.

The second temperature sensor 1042 may also be referred to as a bracket temperature sensor or heater temperature sensor and senses the temperature of the bracket 1034 or heater 1014. Temperature information of the bracket 1034, which is detected by the second temperature sensor 1042, may be transmitted to the heating apparatus 2000 via the communication interface 1030. Because the second temperature sensor 1042 mainly senses the temperature of the heater 1014, it is desirable that the second temperature sensor 1042 may be directly attached to the heater 1014 unlike in FIG. 5A, but when the second temperature sensor 1042 is directly attached to the heater 1014, the second temperature sensor 1042 may be damaged when the heater 1014 is heated due to malfunction. Therefore, the second temperature sensor 1042 may be attached to the bracket 1034 to indirectly measure the temperature of the heater 1014, so that damage to the second temperature sensor 1042 may be prevented.

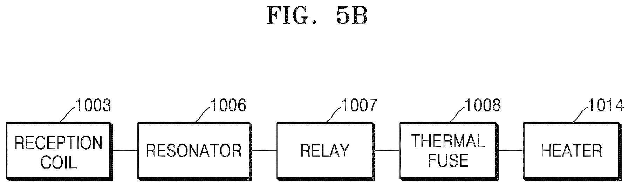

FIG. 5B is a block diagram illustrating a path through which power is transferred from a cooking appliance to a heater, according to an embodiment of the disclosure.

Referring to FIG. 5B, when the cooking appliance 1000 receives wireless power from the heating apparatus 2000 through the reception coil 1003, the cooking appliance 1000 generates resonance between inductance and a capacitor via a resonator 1006 to supply AC power to the load 1004. Resonant AC power passes through a relay 1007 and a thermal fuse 1008 and is then used to heat the heater 1014. To protect the heater 1014 of the cooking appliance 1000, in an emergency, the controller 1020 of the cooking appliance 1000 may control the relay 1007 or the thermal fuse 1008 to shut off power transferred to the heater 1014. According to an embodiment of the disclosure, when receiving an empty heating notification, the cooking appliance 1000 may control the relay 1007 or the thermal fuse 1008 via the controller 1020 to shut off power transferred to the heater 1014. Alternatively, the cooking appliance 1000 may detect on its own whether the cooking appliance 1000 itself undergoes empty heating and control the relay 1007 or the thermal fuse 1008 through the controller 1020 to shut off power to the heater 1014.

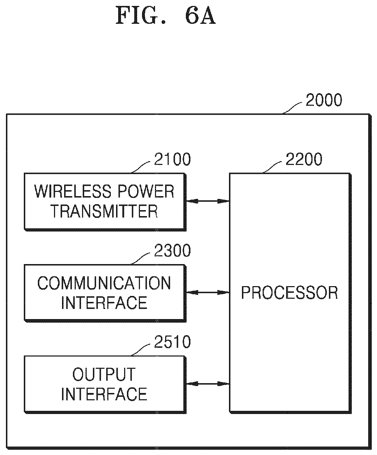

Hereinafter, the heating apparatus 2000 that transmits power to the cooking appliance 1000 is described with reference to FIGS. 6A and 6B.

FIG. 6A is a block diagram illustrating functions of a heating apparatus (wireless power transmission apparatus), according to an embodiment of the disclosure. FIG. 6B is a block diagram illustrating functions of a heating apparatus (wireless power transmission apparatus), according to an embodiment of the disclosure.

Referring to FIG. 6A, according to an embodiment of the disclosure, the heating apparatus 2000 may include a wireless power transmitter 2100, a processor 2200, a communication interface 2300, and an output interface 2510. However, all of the components shown in FIG. 6A are not essential components. The heating apparatus 2000 may be implemented with more or fewer components than those shown in FIG. 6A.

Referring to FIG. 6B, according to an embodiment of the disclosure, the heating apparatus 2000 may further include a sensor unit 2400, the user interface 2500, and a memory 2600 in addition to the wireless power transmitter 2100, the processor 2200, and the communication interface 2300. The communication interface 2300 may include a short-range communication interface 2310 and a long-range communication interface 2320.

Hereinafter, the above components are described.

The wireless power transmitter 2100 may include a driver 2110 and a working coil 2120, but is not limited thereto. The driver 2110 may receive power from an external source and supply currents to the working coil 2120 according to a driving control signal from the processor 2200. The driver 2110 may include an electromagnetic interference (EMI) filter 2111, a rectifier circuit 2112, an inverter circuit 2113, a distribution circuit 2114, a current detection circuit 2115, and a driving processor 2116, but is not limited thereto.

The EMI filter 2111 may block high-frequency noise included in AC power supplied from an external source while allowing an AC voltage and an AC current of a predetermined frequency (e.g., 50 Hz or 60 Hz) to pass through. A fuse and a relay may be provided between the EMI filter 2111 and the external source to block overcurrent. The AC power from which high-frequency noise is blocked by the EMI filter 2111 is supplied to the rectifier circuit 2112.

The rectifier circuit 2112 may convert AC power into DC power. For example, the rectifier circuit 2112 may convert an AC voltage whose magnitude and polarity (positive or negative voltage) change over time into a DC voltage whose polarity remains constant over time, and convert an AC current whose magnitude and direction (positive or negative current) change over time into a DC current having a constant magnitude. The rectifier circuit 2112 may include a bridge diode. For example, the rectifier circuit 2112 may include four diodes. A bridge diode may convert an AC voltage whose polarity changes over time into a positive voltage having a constant polarity, and convert an AC current whose direction changes over time into a positive current that flows in a constant direction. The rectifier circuit 2112 may include a DC link capacitor. The DC link capacitor may convert a positive voltage whose magnitude changes with time into a DC voltage having a constant magnitude.

The inverter circuit 2113 may include a switching circuit for supplying or blocking driving current to the working coil 2120 and a resonance circuit for generating resonance with the working coil 2120. The switching circuit may include a first switch and a second switch. The first switch and the second switch may be connected in series between a plus line and a minus line from the rectifier circuit 2112. The first switch and the second switch may be each turned on or off according to a driving control signal from the driving processor 2116.

The inverter circuit 2113 may control current supplied to the working coil 2120. For example, a magnitude and a direction of the current flowing through the working coil 2120 may change according to turning on/off of the first switch and the second switch included in the inverter circuit 2113. In this case, an AC current may be supplied to the working coil 2120. The AC current is supplied to the working coil 2120 according to switching operations of the first switch and the second switch. In addition, the longer the switching period of the first switch and the second switch (e.g., the lower the switching frequency of the first switch and the second switch), the larger the current supplied to the working coil 2120, and the greater the strength of a magnetic field (an output of the heating apparatus 2000) created by the working coil 2120.

When the heating apparatus 2000 includes a plurality of working coils 2120, the driver 2110 may include the distribution circuit 2114. The distribution circuit 2114 may include a plurality of switches that allow currents supplied to the plurality of working coils 2120 to pass or block the currents, and the plurality of switches may be turned on or off according to a distribution control signal from the driving processor 2116.

The current detection circuit 2115 may include a current sensor that measures the current output from the inverter circuit 2113. The current sensor may transmit an electrical signal corresponding to the measured current value to the driving processor 2116.

The driving processor 2116 may determine a switching frequency (turn-on/turn-off frequency) of the switching circuit included in the inverter circuit 2113, based on an output power (power level) of the heating apparatus 2000. The driving processor 2116 may generate a driving control signal for turning on/off the switching circuit according to the determined switching frequency.

The working coil 2120 may generate a magnetic field for heating the cooking appliance 1000. For example, when a driving current is supplied to the working coil 2120, a magnetic field may be induced around the working coil 2120. When a current whose magnitude and direction change with time, i.e., an AC current, is supplied to the working coil 2120, a magnetic field whose magnitude and direction vary with time may be induced around the working coil 2120. The magnetic field around the working coil 2120 may pass through a top plate made of tempered glass, and reach the cooking appliance 1000 placed on the top plate. Due to the magnetic field whose magnitude and direction vary with time, an induced magnetic field may be produced in the reception coil 1003 included in the cooking appliance 1000, and the induced magnetic field may cause current to flow through the reception coil 1003 to heat the load 1004.

The processor 2200 controls all operations of the heating apparatus 2000. For example, the processor 2200 may control the wireless power transmitter 2100, the communication interface 2300, the sensor unit 2400, the user interface 2500, and the memory 2600 by executing programs stored in the memory 2600.

According to an embodiment of the disclosure, the heating apparatus 2000 may be equipped with an AI processor. The AI processor may be manufactured in the form of a dedicated hardware chip for AI, or manufactured as part of an existing general-purpose processor (e.g., a central processing unit (CPU) or an application processor (AP)) or a dedicated graphics processor (e.g., a graphics processing unit (GPU)) and mounted on the heating apparatus 2000.

According to an embodiment of the disclosure, the processor 2200 may control the inverter circuit 2113 to supply power of a preset level to the cooking appliance 1000 in order to drive the communication interface 1030 of the cooking appliance 1000, and when the communication interface 1030 of the cooking appliance 1000 is driven by the power, the processor 2200 may receive a first wireless communication signal transmitted from the communication interface 1030 of the cooking appliance 1000.

In an embodiment of the disclosure, when detecting the first wireless communication signal transmitted from the cooking appliance 1000, the processor 2200 may control the inverter circuit 2113 so that the plurality of working coils 2120 generate magnetic fields according to a plurality of different power transmission patterns. The plurality of power transmission patterns may be each set differently based on at least one of a duration of a power transmission interval, a duration of a power cut-off interval, or a power level. For example, the processor 2200 may control the inverter circuit 2113 to transmit power by differently combining the duration of the power transmission interval, the duration of the power cut-off interval, or the power level for each cooking zone of the heating apparatus 2000.

In addition, the processor 2200 may receive, via the communication interface 1300, a second wireless communication signal including information about a first cooking zone corresponding to a first power transmission pattern detected at a location of the cooking appliance 1000 from among a plurality of power transmission patterns and identification information about the cooking appliance 1000, and output, based on the second wireless communication signal, via the output interface 2510, the information about the first cooking zone where the cooking appliance 1000 is located from among a plurality of cooking zones and the identification information about the cooking appliance 1000. In this way, the heating apparatus 2000 may identify a cooking zone where the cooking appliance 1000 is located by using the plurality of power transmission patterns.

In an embodiment of the disclosure, the processor 2200 may receive, from the cooking appliance 1000, information indicating whether the cooking appliance 1000 undergoes empty heating. The processor 2200 may output, via the output interface 2510, an indication that the cooking appliance 1000 undergoes empty heating.

According to an embodiment of the disclosure, the processor 2200 may establish a communication connection with the cooking appliance 1000 based on communication connection information included in the second wireless communication signal, and control the inverter circuit 2113 to transmit, to the pickup coil 1001 of the cooking appliance 1000, power of a first level (low power) for maintaining the communication connection with the cooking appliance 1000. In addition, when an operation command for the cooking appliance 1000 is received from the user, the processor 2200 may control the inverter circuit 2113 to transmit, to the cooking appliance 1000, power of a second level (high power) for operating the cooking appliance 1000. In this case, power of the first level is less than power of the second level. In an embodiment of the disclosure, the processor 2200 may transmit, to the cooking appliance 1000, power of a second level that is a separate level different from a level input by the user to heat the cooking appliance 1000, and determine whether the cooking appliance 1000 undergoes empty heating. For example, even when the level input by the user to heat the cooking appliance 1000 is 1500 watts (W), the processor 2200 may first heat the cooking appliance 1000 at power of 800 W that is a power for empty heating determination, instead of heating it at power of 1500 W corresponding to the user input level, in order to determine whether the cooking appliance 1000 undergoes empty heating.

The communication interface 2300 may include one or more components that enable communication between the heating apparatus 2000 and the cooking appliance 1000 or between the heating apparatus 2000 and a server apparatus (not shown). For example, the communication interface 2300 may include a short-range communication interface and a long-range communication interface. The short-range communication interface may include, but is not limited to, a Bluetooth communication interface, a BLE communication interface, an NFC interface, a WLAN (or Wi-Fi) communication interface, a Zigbee communication interface, an IrDA communication interface, a WFD communication interface, a UWB communication interface, an Ant+ communication interface, or the like. The long-range communication interface may be used to communicate with a server apparatus (not shown) when the cooking appliance 1000 is remotely controlled by the server apparatus in an IoT environment. The long-range communication interface may include the Internet, a computer network (e.g., a LAN or a WAN), and a mobile communication interface. The mobile communicator transmits or receives a wireless signal to or from at least one of a base station, an external terminal, or a server on a mobile communication network. In this case, the wireless signal may be a voice call signal, a video call signal, or data in any one of various formats according to transmission and reception of a text/multimedia message. The mobile communication interface may include, but is not limited to, a 3G module, a 4G module, an LTE module, a 5G module, a sixth-generation (6G) module, an NB-IoT module, an LTE-M module, or the like.

The sensor unit 2400 may include a vessel detection sensor 2410 and a temperature sensor 2420, but is not limited thereto.

The vessel detection sensor 2410 may be a sensor that detects whether the cooking appliance 1000 is placed on the top plate. For example, the vessel detection sensor 2410 may be implemented as a current sensor, but is not limited thereto The vessel detection sensor 2410 may be implemented as at least one of a proximity sensor, a touch sensor, a weight sensor, a temperature sensor, an illuminance sensor, or a magnetic sensor.

The temperature sensor 2420 may detect a temperature of a bottom surface of the cooking appliance 1000 placed on the top plate or a temperature of the top plate. The cooking appliance 1000 is inductively heated by the working coil 2120 and may be overheated depending on its material. Accordingly, the heating apparatus 2000 may detect the temperature of the cooking appliance 1000 placed on the top plate or the temperature of the top plate, and stop the working coil 2120 from operating when the cooking appliance 1000 is overheated. In an embodiment of the disclosure, the temperature sensor 2420 may be installed in a vicinity of the working coil 2120. For example, the temperature sensor 2420 may be located exactly at a center of the working coil 2120. In an embodiment of the disclosure, the processor 2200 may detect empty heating, based on the temperature of the bottom surface measured by the temperature sensor 2420 and an internal temperature of the cooking appliance 1000 received from the cooking appliance 1000.

According to an embodiment of the disclosure, the temperature sensor 2420 may include a thermistor whose electrical resistance changes depending on temperature. For example, the temperature sensor 2420 may be a negative temperature coefficient (NTC) temperature sensor, but is not limited thereto. The temperature sensor 2420 may be a positive temperature coefficient (PTC) temperature sensor.

The user interface 2500 may include the output interface 2510 and an input interface 2520. The output interface 2510 is for outputting an audio signal or a video signal, and may include a display, an audio output interface, or the like.

When the display and a touch pad form a layer structure to construct a touch screen, the display may serve as an input interface as well as an output interface. The display may include at least one of a liquid crystal display (LCD), a thin-film transistor LCD (TFT-LCD), a light-emitting diode (LED) display, an organic LED (OLED) display, a flexible display, a 3D display, or an electrophoretic display. In addition, the heating apparatus 2000 may include two or more displays according to its implemented configuration. When the cooking appliance 1000 on a particular cooking zone undergoes empty heating, the display may display a text-type alarm message "The cooking appliance on cooking zone 2 undergoes empty heating", or display a graphic icon corresponding to the cooking zone differently from other cooking zones, e.g., by displaying only an icon corresponding to the cooking zone where the empty heating is occurring in a blinking manner, so that the user may easily recognize that the cooking appliance 1000 on the corresponding cooking zone undergoes empty heating.

The audio output interface may output audio data received via the communication interface 2300 or stored in the memory 2600. The audio output interface may also output sound signals related to functions performed by the heating apparatus 2000. For example, the audio output interface may output audio information that "The cooking appliance on cooking zone 2 undergoes empty heating" so that the user may easily recognize which cooking zone corresponds to the cooking appliance undergoing empty heating. The audio output interface may include a speaker, a buzzer, and the like.

According to an embodiment of the disclosure, the output interface 2510 may display information about the cooking appliance 1000. For example, the output interface 2510 may output a graphical user interface (GUI) corresponding to identification information about the cooking appliance 1000. The output interface 2510 may output, based on the identification information about the cooking appliance 1000, information indicating whether the corresponding cooking appliance 1000 undergoes empty heating together with the identification information, and also output information indicating on which cooking zone the cooking appliance 1000 undergoes empty heating. For example, the output interface 2510 may output "The coffee dripper undergoes empty heating on cooking zone 2" via the display or the audio output interface.

According to an embodiment of the disclosure, when the processor 2200 does not receive information about a cooking zone where the cooking appliance 1000 is located within a predetermined time after controlling the inverter circuit 2113 so that the plurality of working coils 2120 generate magnetic fields according to a plurality of different power transmission patterns, the output interface 2510 may output a notification indicating that the location of the cooking appliance 1000 should bechecked. Furthermore, according to an embodiment of the disclosure, as the communication connection with the cooking appliance 1000 is released, the output interface 2510 may output a notification indicating that the location of the cooking appliance 1000 should be checked.

The input interface 2520 is for receiving an input from the user. The input interface 2520 may be at least one of a keypad, a dome switch, a touch pad (a capacitive overlay type, a resistive overlay type, an infrared beam type, a surface acoustic wave type, an integral strain gauge type, a piezoelectric type, or the like), a jog wheel, or a jog switch, but is not limited thereto.

The input interface 2520 may include a speech recognition module. For example, the heating apparatus 2000 may receive a speech signal, which is an analog signal, via a microphone, and convert a part of speech into a computer-readable text by using an automatic speech recognition (ASR) model. The heating apparatus 2000 may obtain an intent in a user's utterance by interpreting the text using a natural language understanding (NLU) model. Here, the ASR model or NLU model may be an AI model. An AI model may be processed by a dedicated AI processor designed with a hardware structure specialized for processing an AI model. The AI model may be created via a training process. In this case, the creation via the training process means that predefined operation rules or AI model set to perform desired characteristics (or purpose) are created by training a basic AI model based on a large number of training data via a learning algorithm. An AI model may consist of a plurality of neural network layers. Each of the plurality of neural network layers has a plurality of weight values and may perform neural network computations via calculations between a result of computations in a previous layer and the plurality of weight values.

Linguistic understanding is a technology for recognizing and applying/processing human language/characters and may include natural language processing, machine translation, a dialog system, question answering, speech recognition/synthesis, or the like.

The memory 2600 may store programs necessary for processing or control performed by the processor 2200 and input/output data (e.g., a plurality of power transmission patterns, or the like). The memory 2600 may also store an AI model.

The memory 2600 may include at least one type of storage medium, i.e., at least one of a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disc, or an optical disc. In addition, the heating apparatus 2000 may operate a web storage or cloud server that performs a storage function on the Internet.

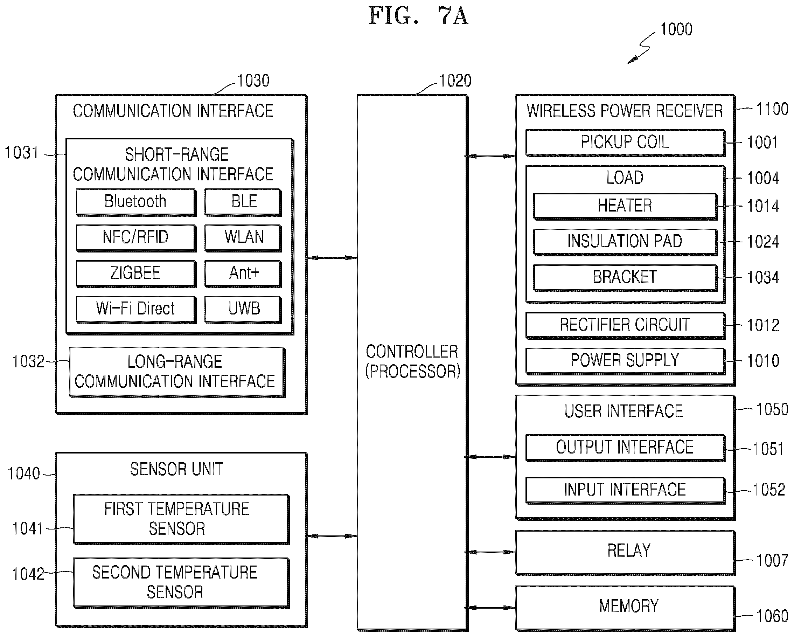

FIG. 7A a block diagram illustrating functions of a cooking appliance according to an embodiment of the disclosure.

A cooking appliance 1000 shown in FIG. 7A may include all of the above-described various cooking appliances as well as home appliances, such as small appliances and the like, which may be heated or driven by the wireless power transmission apparatus 2000.

Referring to FIG. 7A , the cooking appliance 1000 may include a wireless power receiver 1100, a power supply 1010, a controller 1020 including a processor, a communication interface 1030, a sensor unit 1040, a user interface 1050, a relay 1007, and a memory 1060. However, all of the components shown in FIG. 7A are not essential components. The cooking appliance 1000 may be implemented with more or fewer components than those shown in FIG. 7A.

Because the components of the cooking appliance 1000 have been described with reference to FIGS. 2 to 4, decryptions already provided above will be omitted herein.

The controller 1020 may include at least one processor.

The controller 1020 controls all operations of the cooking appliance 1000. The controller 1020 may control the wireless power receiver 1100, the communication interface 1030, the sensor unit 1040, the user interface 1050, and the memory 1060 by executing programs stored in the memory 1060.

According to an embodiment of the disclosure, the cooking appliance 1000 may be equipped with an AI processor. The AI processor may be manufactured in the form of a dedicated hardware chip for AI, or manufactured as part of an existing general-purpose processor (e.g., a CPU or an AP) or a dedicated graphics processor (e.g., a GPU) and mounted on the cooking appliance 1000. In an embodiment of the disclosure, the controller 1020 may determine on its own whether the cooking appliance 1000 undergoes empty heating, based on a water temperature (or an internal temperature of the cooking appliance 1000) measured by a first temperature sensor 1041 and a temperature of a bottom surface of the cooking appliance 1000 measured by a second temperature sensor 1042. In an embodiment of the disclosure, the controller 1020 may receive information indicating whether the cooking appliance 1000 undergoes empty heating from the wireless power transmission apparatus 2000. The controller 1020 may output, via an output interface 1052, an indication that the cooking appliance 1000 undergoes empty heating.

The wireless power receiver 1100 may include a pickup coil 1001, a rectifier circuit 1012, a power supply 1010, and a load 1004. In an embodiment of the disclosure, because the load 1004 is a component required when the cooking appliance 1000 is the 2-2 type cooking appliance 1000b-2, the load 1004 may be omitted when the cooking appliance 1000 is not the 2-2 type cooking appliance 1000b-2.

As described above with reference to FIG. 5A, the load 1004 may include a heater 1014, an insulation pad 1024 provided between the heater 1014 and a bracket 1034, and the bracket 1034. The load 1004 may further include the second temperature sensor 1042 for detecting a temperature of the bracket 1034, but in the block diagram of FIG. 7A, the second temperature sensor 1042 is included in the sensor unit 1040 for convenience of description. The rectifier circuit 1012 rectifies and converts AC power transmitted from the wireless power transmission apparatus 2000 to appropriate power required by the cooking appliance 1000. The power supply 1010 may be activated by power received by the pickup coil 1001.

The communication interface 1030 may include one or more components that enable communication between the cooking appliance 1000 and the wireless power transmission apparatus 2000, between the cooking appliance 1000 and a server apparatus (not shown), or between the cooking appliance 1000 and a mobile device (not shown). For example, the communication interface 1030 may include the short-range communication interface 1031 and the long-range communication interface 1032. The short-range communication interface 1031 may include, but is not limited to, a Bluetooth communication interface, a BLE communication interface, an NFC interface, a WLAN (or Wi-Fi) communication interface, a Zigbee communication interface, an IrDA communication interface, a WFD communication interface, a UWB communication interface, an Ant+ communication interface, or the like. The long-range communication interface 1032 may be used to communicate with the server apparatus when the cooking appliance 1000 is remotely controlled by the server apparatus in an IoT environment. The long-range communication interface 1032 may include the Internet, a computer network (e.g., a LAN or a WAN), and a mobile communication interface. The mobile communicator transmits or receives a wireless signal to or from at least one of a base station, an external terminal, or a server on a mobile communication network. In this case, the wireless signal may be a voice call signal, a video call signal, or data in any one of various formats according to transmission and reception of a text/multimedia message. The mobile communication interface may include, but is not limited to, a 3G module, a 4G module, an LTE module, a 5G module, a 6G module, an NB-IoT module, an LTE-M module, or the like.

The first temperature sensor 1041 of the sensor unit 1040 may be used to measure a temperature of water (an object being cooked) in the cooking appliance 1000 (an internal temperature of the cooking appliance 1000 when there is no water therein). The second temperature sensor 1042 may be used to measure a temperature of an outer surface of the cooking appliance 1000 (or the temperature of the bottom surface of the cooking appliance 1000).

The user interface 1050 may include the output interface 1051 and an input interface 1052. The output interface 1051 is for outputting an audio signal or a video signal, and may include a display, an audio output interface, or the like.

When the display and a touch pad form a layer structure to construct a touch screen, the display may serve as an input interface as well as an output interface. The display may include at least one of an LCD, a TFT-LCD, an LED display, an OLED display, a flexible display, a 3D display, or an electrophoretic display. When the cooking appliance 1000 undergoes empty heating, the display may display a text-type alarm message "The cooking appliance undergoes empty heating", or display an indication that the cooking appliance undergoes empty heating in a blinking manner, so that the user may easily recognize that the cooking appliance 1000 undergoes empty heating.

The audio output interface may output audio data received via the communication interface 1030 or stored in the memory 1060. The audio output interface may also output sound signals related to functions performed by the cooking appliance 1000. For example, the audio output interface may output audio information that "The cooking appliance undergoes empty heating," so that the user may easily recognize that the cooking appliance undergoes empty heating. The audio output interface may include a speaker, a buzzer, and the like.

According to an embodiment of the disclosure, the output interface 1051 may display information about the cooking appliance 1000. For example, the output interface 1051 may output a GUI corresponding to identification information about the cooking appliance 1000. The output interface 1051 may output information indicating whether the cooking appliance 1000 undergoes empty heating together with the identification information about the cooking appliance 1000 so as to distinguish the cooking appliance 1000 from other cooking appliances on the wireless power transmission apparatus 2000. For example, the output interface 1051 may output information that "The smart kettle undergoes empty heating" via the display or the audio output interface.

The input interface 1052 is for receiving an input from the user. The input interface 1052 may be at least one of a keypad, a dome switch, a touch pad (a capacitive overlay type, a resistive overlay type, an infrared beam type, a surface acoustic wave type, an integral strain gauge type, a piezoelectric type, or the like), a jog wheel, or a jog switch, but is not limited thereto.

The input interface 1052 may include a speech recognition module. For example, the cooking appliance 1000 may receive a speech signal, which is an analog signal, via a microphone, and convert a part of speech into a computer-readable text by using an ASR model. The cooking appliance 1000 may obtain an intent in a user's utterance by interpreting the text using an NLU model. Here, the ASR model or NLU model may be an AI model. An AI model may be processed by a dedicated AI processor designed with a hardware structure specialized for processing an AI model. The AI model may be created via a training process. In this case, the creation via the training process means that predefined operation rules or AI model set to perform desired characteristics (or purpose) are created by training a basic AI model based on a large number of training data via a learning algorithm. An AI model may consist of a plurality of neural network layers. Each of the plurality of neural network layers has a plurality of weight values and may perform neural network computations via calculations between a result of computations in a previous layer and the plurality of weight values.

Linguistic understanding is a technology for recognizing and applying/processing human language/characters and may include natural language processing, machine translation, a dialog system, question answering, speech recognition/synthesis, or the like.

The memory 1060 may store programs necessary for processing or control performed by the controller 1020 and input/output data (e.g., a plurality of power transmission patterns, or the like). The memory 1060 may also store an AI model.

The memory 1060 may include at least one type of storage medium, i.e., at least one of a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disc, or an optical disc.

A relay 1007 may be used to stop heating according to control by the controller 1020 when the cooking appliance 1000 undergoes empty heating. Stopping heating via the relay 1007 has been described with reference to FIG. 5B, and thus, a detailed description thereof will be omitted. According to an embodiment of the disclosure, the controller 1020 may control a thermal fuse 1008 instead of the relay 1007 to prevent heating.

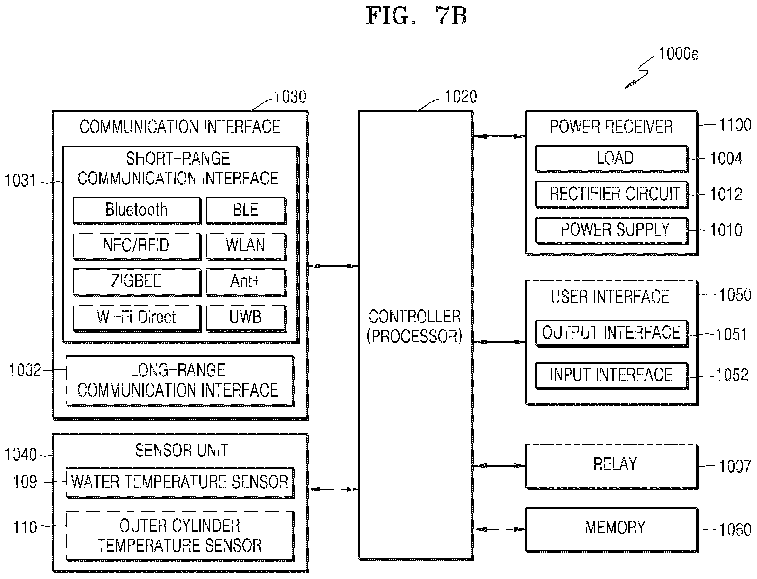

FIG. 7B is a block diagram illustrating a wired cooking appliance according to an embodiment of the disclosure.

In a wired cooking appliance 1000e shown in FIG. 7B, the wireless power receiver 1100 is replaced with a power receiver 1110, compared to in the cooking appliance 1000 of FIG. 7A wirelessly receiving power. Because a communication interface 1030, a sensor unit 1040, a user interface 1050, and a memory 1060 included in the wired cooking appliance 1000e of FIG. 7B perform the same functions as those of their counterparts included in the cooking appliance 1000 of FIG. 7A, detailed descriptions thereof will be omitted here. In addition, because a load 1004 included in the power receiver 1110 may be regarded as the same as the load 1004 in FIG. 7A, a description of the load 1004 will be omitted here.

The power receiver 1110 receives power through a wire. The power receiver 1110 may receive AC power via a general outlet or DC power from a battery. When AC power is received, a rectifier circuit 1012 is used to internally convert the AC power. A power supply 1010 is activated by power received through the outlet and converted by rectifier circuit 1012.

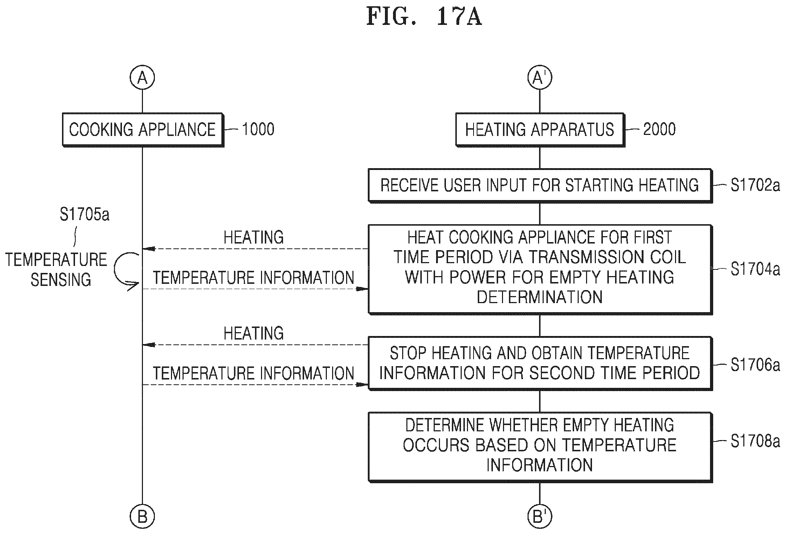

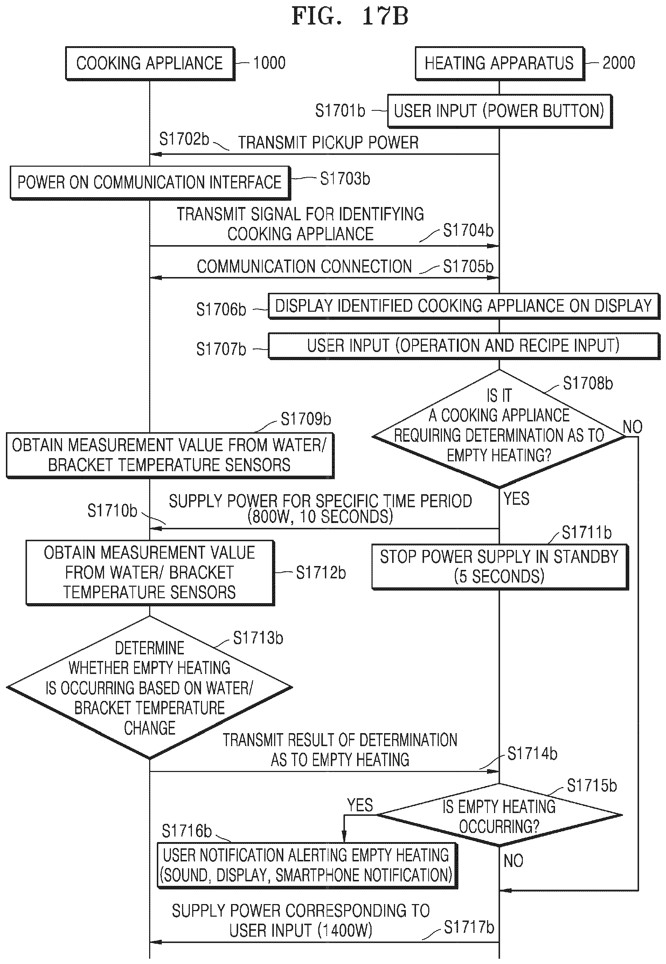

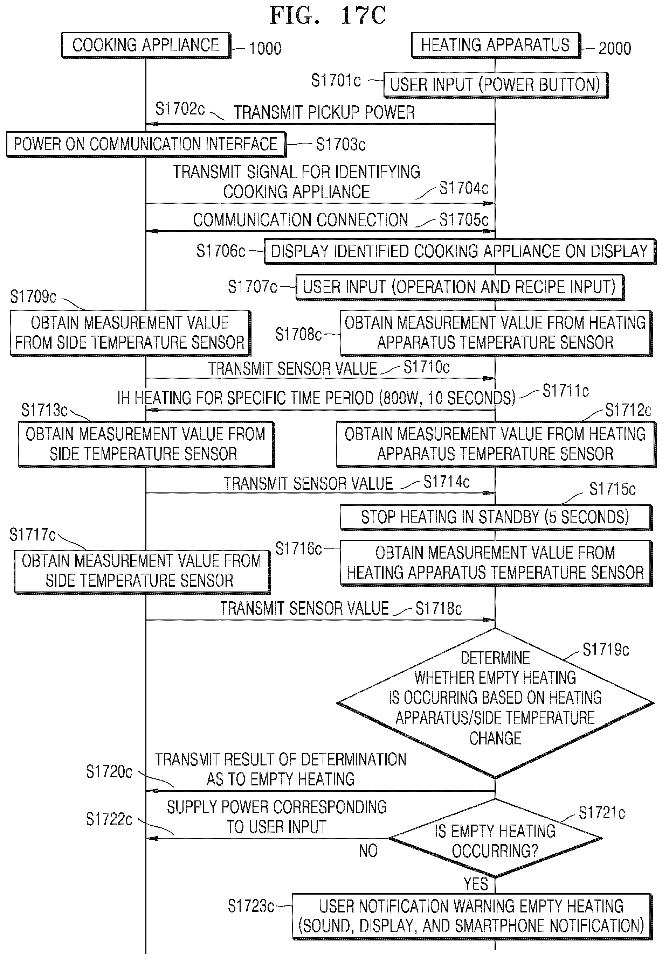

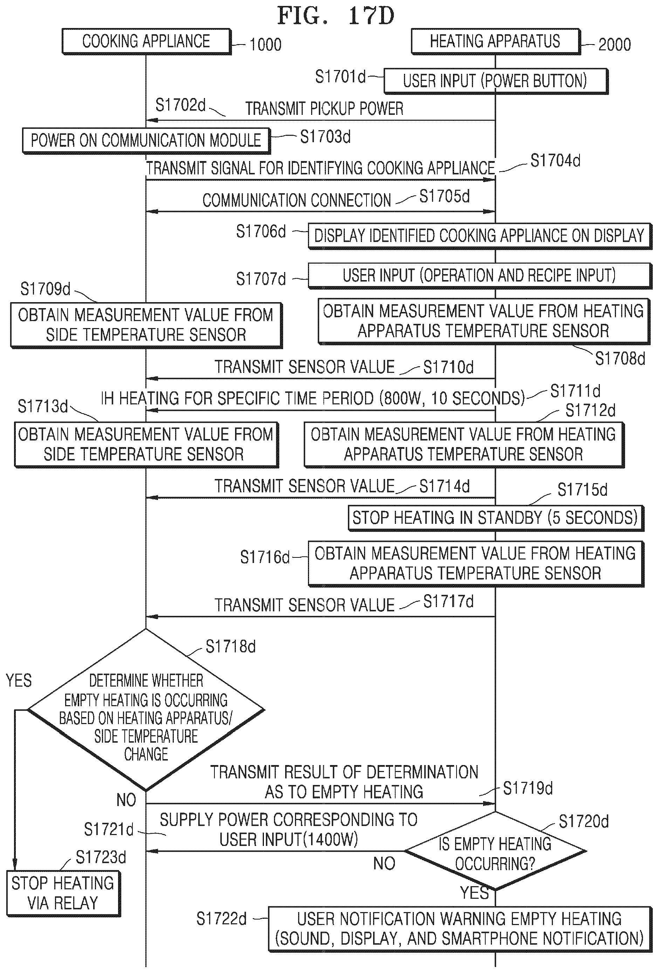

According to an embodiment of the disclosure, the cooking appliance 1000 may be the cooking appliance 1000e that receives power via a wire as shown in FIG. 7B. A method of detecting empty heating when the cooking appliance 1000e is heated may be implemented by replacing the heating apparatus 2000 of FIGS. 17A, 17B, 17C, and 17D with an apparatus for supplying power via a wire.

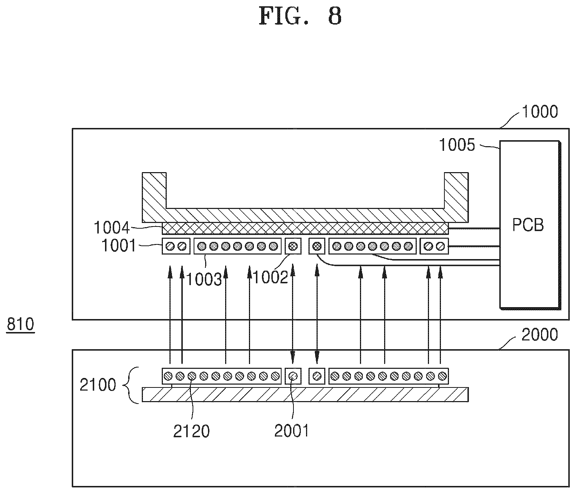

FIG. 8 is a diagram illustrating a wireless power transmitter of a heating apparatus (a wireless power transmission apparatus), according to an embodiment of the disclosure.

Referring to 810 of FIG. 8, the heating apparatus 2000 may further include a communication coil 2001 in the same plane as a transmission coil (a working coil 2120). In this case, the communication coil 2001 may be an NFC antenna coil for NFC communication. Although FIG. 8 shows that the number of turns in the communication coil 2001 is 1, the number of turns therein is not limited thereto. The communication coil 2001 may have a plurality of number of turns. For example, the communication coil 2001 may be wound with 5 to 6 turns.

According to an embodiment of the disclosure, the communication coil 2001 included in the heating apparatus 2000 may be arranged at a position corresponding to a position of a communication coil 1002 included in a cooking appliance 1000. For example, when the communication coil 2001 included in the heating apparatus 2000 is arranged in a central portion of each cooking zone, the communication coil 1002 included in the cooking appliance 1000 may also be arranged in a bottom central portion of the cooking appliance 1000.

Referring to 810 of FIG. 8, when the cooking appliance 1000 is placed on the heating apparatus 2000, the heating apparatus 2000 may supply power to a pickup coil 1001 via the transmission coil 2120. In addition, when the heating apparatus 2000 wirelessly transmits power via the transmission coil 2120, an induced current flows through a reception coil 1003 of the cooking appliance 1000 so that energy may be supplied to a load 1004. The load 1004 may include a motor or the heater 1014, and when the load 1004 is a heater load, as shown in FIG. 5A, the load 1004 may further include the insulation pad 1024, the bracket 1034, and the second temperature sensor 1042. Furthermore, the load 1004 may be arranged at a position spaced apart from the reception coil 1003. For example, power generated by the induced current may drive a motor of a blender or supply energy to the heater 1014 of a coffee dripper.

Although an example in which the heating apparatus 2000 includes the communication coil 2001 has been described with reference to FIG. 8, when the cooking appliance 1000 does not include the communication coil 1002, the heating apparatus 2000 may not also include the communication coil 2001.

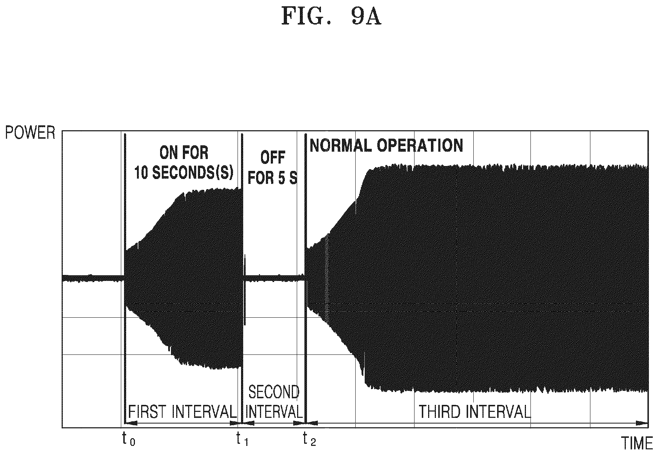

A method, performed by the heating apparatus 2000, of detecting whether the cooking appliance 1000 placed on its top plate undergoes empty heating is described with reference to FIG. 9A.

FIG. 9A is a waveform diagram illustrating a power transmission pattern output from a heating apparatus to determine whether a cooking appliance undergoes empty heating, according to an embodiment of the disclosure.

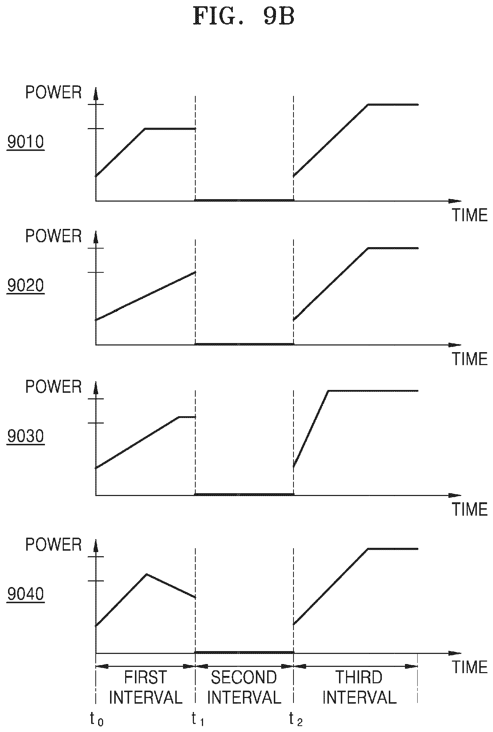

Referring to FIG. 9A, the heating apparatus 2000 starts heating (power transmission or power transmission output) when a user performs a heating start operation (a heating start input) at time point t₀. In general, the heating apparatus 2000 may have a heating pattern (a power transmission pattern) that is different from that shown in the waveform diagram of FIG. 9A. This is described below with reference to FIG. 9B.

The heating apparatus 2000 gradually increases a power transmission output for a stable output operation. As seen on FIG. 9A, a power transmission output is low at the time point t₀ when power transmission starts, and the power transmission output gradually reaches a target power output. When it is determined that the load 1004 has constant characteristics, the heating apparatus 2000 may adjust an output gain so that the power transmission output may reach the target power output faster within a stable power transmission output range.

In an embodiment of the disclosure, in order to determine whether the cooking appliance 1000 undergoes empty heating, the heating apparatus 2000 first outputs a predetermined power for empty heating determination during a first interval from t₀ to t₁. Because the user input for heating the cooking appliance 1000 has already been performed at the time point t₀ when power transmission by the heating apparatus 2000 starts, the heating apparatus 2000 has to output power corresponding to the user input, but hold off the output of the power corresponding to the user input for a while, i.e., during the first interval from t₀ to t₁ and a second interval from t₁ to t₂ in order to determine empty heating. Instead, the heating apparatus 2000 first outputs the power for empty heating determination during the first interval from t₀ to t₁. For example, when the power corresponding to the user input (e.g., level 6) on a panel of the heating apparatus 2000 is 1500 W, the power for empty heating determination may be output as 800 W. In an embodiment of the disclosure, the power for empty heating determination may not be fixed by the heating apparatus 2000 but vary according to the type of the cooking appliance 1000. In other words, when the cooking appliance 1000 is a small appliance having a capacity capable of detecting a temperature change within a short time even with power of 800 W, the heating apparatus 2000 outputs power of 800W to determine empty heating. When the heating apparatus 2000 establishes a communication with the cooking appliance 1000 before the time point t₀ and receives identification information about the cooking appliance 1000 through communication to determine that the cooking appliance 1000 is a large-capacity home appliance, the heating apparatus 2000 may change a magnitude of power for empty heating determination from 800 W to a higher power of 1000 W. The identification information about the cooking appliance 1000 may include information about the type of the cooking appliance 1000 (e.g., a coffee dripper, a blender, a pot, a smart kettle, or the like) and a capacity of the cooking appliance 1000. When the cooking appliance 1000 is a type of cooking appliance that does not require determination of empty heating (e.g., when the cooking appliance 1000 is a blender), the heating apparatus 2000 may not determine empty heating.

In an embodiment of the disclosure, the heating apparatus 2000 may transmit time information (time points t₀, t₁, and t₂) for detecting empty heating to the cooking appliance 1000 via the communication interface 2300, so that the cooking appliance 1000 may autonomously detect empty heating.

In an embodiment of the disclosure, after outputting the power for empty heating determination during the first interval of FIG. 9A, the heating apparatus 2000 then stops outputting the power for empty heating determination at time point t1. While the power for empty heating determination is output, the first temperature sensor 1041 of the cooking appliance 1000 senses a temperature of an object being cooked in the cooking appliance 1000 or an internal temperature of the cooking appliance 1000, and the second temperature sensor 1042 of the cooking appliance 1000 senses a temperature of a heater (a bracket) in the cooking appliance 1000. The controller 1020 of the cooking appliance 1000 controls the communication interface 1030 to transmit the detected temperature of the object being cooked or internal temperature or the detected temperature of the heater (bracket) to the communication interface 2300 of the heating apparatus 2000. In an embodiment of the disclosure, the object being cooked in the cooking appliance 1000 may be water. In other words, during the determination of whether the cooking appliance 1000 undergoes empty heating, the cooking appliance 1000 may detect the temperature of water that is the object being cooked via the first temperature sensor 1041 and transmit information about the temperature of water to the heating apparatus 2000. When there is no water in the cooking appliance 1000, the first temperature sensor 1041 may detect the internal temperature of the cooking appliance 1000. When the cooking appliance 1000 is a cooking appliance without the second temperature sensor 1042 and the heating apparatus 2000 senses a temperature of a bottom surface of the cooking appliance 1000, the temperature of the heater is replaced with the temperature of the bottom surface.

The first interval may have a varying length depending on various conditions, such as the capacity of the cooking appliance 1000, a magnitude of power for empty heating determination, or the like, but may be, for example, about 10 seconds long. As described above, the second temperature sensor 1042 may be attached to the bracket to prevent damage thereto, but because the second temperature sensor 1042 may also be seen as a sensor for detecting the temperature of the heater, throughout the specification, information about the bracket temperature detected by the second temperature sensor 1042 may be considered as information about a heater temperature.

In an embodiment of the disclosure, the heating apparatus 2000 stops outputting power for empty heating determination during the second interval, and continuously receives information about the temperature of the object being cooked and information about the heater temperature from the cooking appliance 1000 via the communication interface 2300. The second interval may have a varying length depending on various conditions, such as the capacity of the cooking appliance 1000, the magnitude of power for empty heating determination, or the like, but may be, for example, about 5 seconds long. The heating apparatus 2000 may determine whether the cooking appliance 1000 undergoes empty heating, based on changes in temperatures of the object being cooked and the heater during the first interval and changes in temperatures of the object being cooked and the heater during the second interval. In an embodiment of the disclosure, when the heating apparatus 2000 does not receive heater temperature information from the cooking appliance 1000 because the cooking appliance 1000 does not include a heater, the heating apparatus 2000 may measure a temperature of a bottom surface of the cooking appliance 1000 via a bottom surface temperature sensor and store the temperature therein. In an embodiment of the disclosure, even when the cooking appliance 1000 is a cooking appliance without a heater, the temperature of the bottom surface of the cooking appliance 1000 may be measured by the second temperature sensor 1042 for measuring the temperature of the bottom surface, and the measured temperature of the bottom surface of the cooking appliance 1000 may be transmitted to the heating apparatus 2000. A pattern of an output power for empty heating determination is described with reference to FIG. 9B.

FIG. 9B is a diagram illustrating a power pattern output from a heating apparatus to determine empty heating, according to an embodiment of the disclosure.

FIG. 9B illustrates examples of various power transmission patterns according to an embodiment of the disclosure. A power transmission pattern in FIG. 9B shows only an envelope of the power transmission waveform of FIG. 9A.

For example, a power transmission pattern 9010 of FIG. 9B is a power transmission pattern graph showing an envelope of the power transmission pattern of FIG. 9A.

Blocking power transmission during the second interval to determine empty heating is the same as in all power transmission patterns. However, as shown in a power transmission pattern 9020 of FIG. 9B, power transmission may have a pattern in which a power output is continuously increased during the first interval. While in the power transmission pattern 9010, the first interval is determined by a predetermined time length, in the power transmission pattern 9020, the first interval ends when a magnitude of transmitted power reaches a certain magnitude of power. The power transmission pattern 9020 shows that the first interval may be set according to a power magnitude limit associated with the power capacity of the heating apparatus 2000.

In a power transmission pattern 9030, a power output is gradually increased during the first interval, and a reheating output is rapidly increased to a power output set by the user during a third interval, compared to in the power transmission pattern 9010. When the cooking appliance 1000 or the heating apparatus 2000 has high overheating resistance characteristics, the heating apparatus 2000 may rapidly increase power during the third interval.

In a power transmission pattern 9040, a period in which a heating output is lowered may occur when passing from the first interval to the second interval. Changes in temperature of bracket-water when the cooking appliance 1000 undergoes empty heating may not be clearly distinguished from changes when empty heating does not occur according to the type of the cooking appliance 1000, and thus, to clarify the distinction between the temperature changes, the heating apparatus 2000 may heat the cooking appliance 1000 with a power transmission pattern, such as the power transmission pattern 9040 by lowering a heating output at a time point in the first interval.

The processor 2200 of the heating apparatus 2000 may detect or determine empty heating by selecting an appropriate power transmission pattern according to the type and capacity of the cooking appliance 1000.

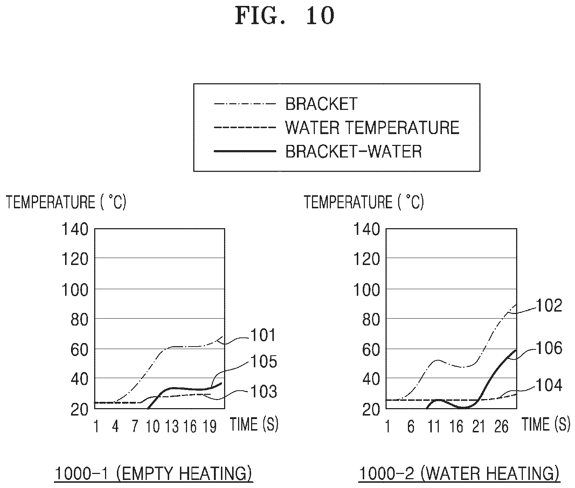

Determination as to empty heating is described with reference to FIG. 10.

FIG. 10 is a temperature change graph for determining empty heating, according to an embodiment of the disclosure.

In the graph of FIG. 10, a y-axis represents temperature (°C) and an x-axis denotes time (seconds). According to the example of FIGS. 9A and 9B, the first interval is from 0 to 10 seconds, the second interval is from 10 to 15 seconds, and the third interval is after 15 seconds. 1000-1 of FIG. 10 is a graph showing changes in temperature of a bracket, temperature of water, and temperature obtained by subtracting the temperature of water from the temperature of bracket (hereinafter, referred to as a 'temperature of bracket-water') when the cooking appliance 1000 undergoes empty heating. Referring to 1000-1 of FIG. 10, a bracket temperature 101, a water temperature 103, and a bracket-water temperature 105 at 10 seconds (time point t₁) when the second interval during which output of power from the heating apparatus 2000 is stopped starts after the first interval ends do not fall down until the time point t₂ when the second interval ends. For example, the temperatures of the bracket, water, and bracket-water have continuously increasing values during the second interval. In other words, slopes representing changes in temperatures of the bracket, water, and bracket-water may each have a positive value during the second interval. However, the temperatures of the bracket, water, and bracket-water may have slightly decreasing values rather than increasing values during the second interval according to various conditions, such as a length of the first interval, a magnitude of an output power for empty heating determination, the capacity of the cooking appliance 1000, the amount of water (an object to be cooked) in the cooking appliance 1000, or the like. However, such slightly decreasing values are significantly less than values to which a bracket temperature 102, a water temperature 104, and a bracket-water temperature 106 drop down during the second interval in the graph 1000-2 of FIG. 10 when subsequent water heating takes place. In an embodiment of the disclosure, in the second interval in 1000-1 of FIG. 10, the temperatures of bracket, water and bracket-water may all have increasing values, or at least one of the temperature of bracket, the temperature of water, or the temperature of bracket-water may have a slightly decreasing value.

When the second interval ends and then the heating apparatus 2000 outputs power corresponding to a user input during the third interval, the temperatures of the bracket, water and bracket-water increase again.

1000-2 of FIG. 10 is a graph showing changes in the bracket temperature 102, water temperature 104, and bracket-water temperature 106 when water is present in the cooking appliance 1000 and water heating occurs.

Referring to 1000-2 in FIG. 10, it can be seen that temperatures of the bracket, water, and bracket-water all increase during the first interval, and then, during the second interval when an output from the heating apparatus 2000 is cut off, the temperatures of the bracket and bracket-water respectively decrease compared to temperatures of the bracket and bracket-water at time point t₁ (10 seconds). In other words, in an embodiment of the disclosure, slopes representing changes in the temperatures of the bracket and bracket-water may each have a negative value during the second interval. During the second interval, not only the temperatures of the bracket and bracket-water, but also the temperature of the water may have a decreasing value. The temperatures of the bracket and bracket-water having decreasing values during the second interval may be expressed in other words as slopes of changes in the temperatures of the bracket and bracket-water having a negative value during the second interval. Referring to 1000-2, when the second interval ends and the heating apparatus 2000 outputs power corresponding to the user input, the temperatures of the bracket, water, and bracket-water increase again.

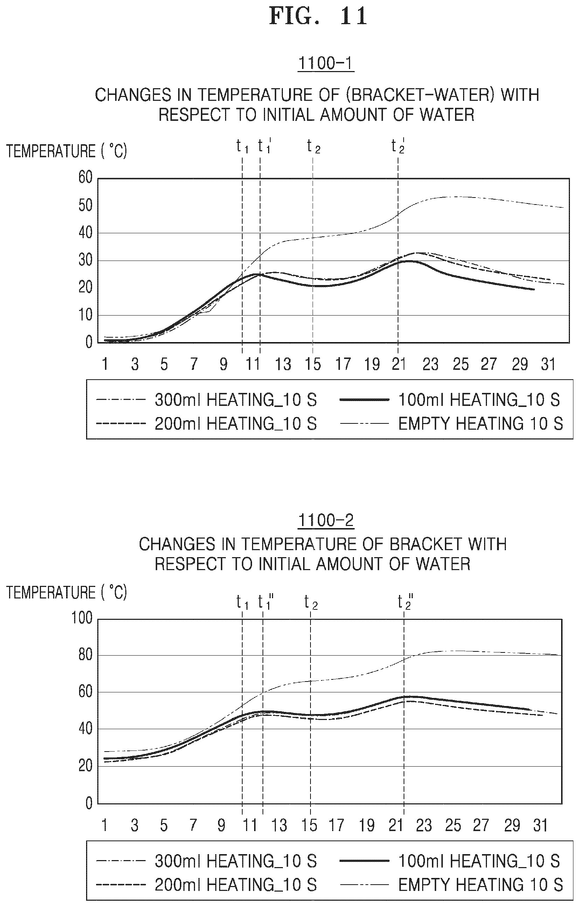

FIG. 11 is a graph of a temperature change with respect to the amount of water, according to an embodiment of the disclosure.

Referring to FIG. 11, 1100-1 is a graph of changes in temperature of bracket-water with respect to the amount of water in the cooking appliance 1000, and 1100-2 is a graph of changes in temperature of a bracket with respect to the amount of water in the cooking appliance 1000.

Referring to the graph 1100-1 showing changes in temperature of bracket-water with respect to the amount of water in the cooking appliance 1000, the graph 1100-1 illustrates the changes in temperature of bracket-water when the amount of water is 300 ml, 200 ml, 100 ml, and 0 ml (empty heating), respectively. As in the above example, the processor 2200 of the heating apparatus 2000 cuts off a power output transmitted to heat the cooking appliance 1000 at time point t₁ that occurs 10 seconds after heating started. In the graph 1100-1 of FIG. 11, the reason why an inflection point at which the temperature of bracket-water changes occurs a few seconds after the time point t₁ when the power output is cut off is that even when the power output is cut off, there is a delay of several seconds before the effect of power output cut-off is directly reflected in temperatures of a bracket and water. For the same reason, the temperature of bracket-water increases again from a time point that is a few seconds later than a time point t₂ when reheating starts after a lapse of 15 seconds. In an embodiment of the disclosure, empty heating may be determined and detected based on a change in temperature of bracket-water over an interval between t₁' and t₂^{'} instead of the interval between t₁ and t₂ by reflecting a delay of a certain time that occurs before the change in the temperature of bracket-water in the cooking appliance 1000. In an embodiment of the disclosure, the heating apparatus 2000 may transmit such time delay information to the cooking appliance 1000 so that the cooking appliance 1000 may use the time delay information when determining empty heating.

As seen in the graph 1100-1 of FIG. 11, when the cooking appliance 1000 undergoes empty heating during the interval between t₁ and t₂, the temperature of bracket-water continuously increases in the interval between t₁ and t₂ (precisely, between t₁' and t₂') or a slope corresponding to such a temperature change has a positive value. On the other hand, when the cooking appliance 1000 does not undergo empty heating and water remains in the cooking appliance 1000 even though the amount of water varies like 300ml, 200ml, and 100ml, the temperature of bracket-water drops in the interval between t₁ and t₂ (precisely between t₁' and t₂') where the power output is cut off by the heating apparatus 2000 or a slope corresponding to such a temperature change has a negative value. As seen in the graph 1100-1 of FIG. 11, when cooking is stopped after a time point t₂^{'}, the heating apparatus 2000 cuts off a power output and the temperature of bracket-water decreases.

Referring to the graph 1100-2 showing changes in temperature of the bracket with respect to the amount of water in the cooking appliance 1000, the graph 1100-2 illustrates the changes in the temperature of the bracket when the amount of water is 300 ml, 200 ml, 100 ml, and 0 ml (empty heating), respectively. As in the above example, the processor 2200 of the heating apparatus 2000 cuts off a power output for heating the cooking appliance 1000 at time point t1 that occurs 10 seconds after heating started. In the graph 1100-2 of FIG. 11, an inflection point at which the temperature of the bracket changes occurs a few seconds after the time point t₁ when the power output is cut off because even when the power output is cut off, there is a delay of several seconds before the effect of output cut-off is directly reflected in temperatures of a bracket and water. For the same reason, the temperature of the bracket increases again from a time point that is a few seconds later than time point t₂ when reheating starts after a lapse of 15 seconds. In an embodiment of the disclosure, it may be desirable to determine and detect empty heating based on a change in temperature of the bracket over an interval between t₁'' and t₂^{"} instead of the interval between t₁ and t₂ by reflecting a delay of a predetermined time that occurs before the change in the temperature of the bracket in the cooking appliance 1000. When compared to the graph 1100-1, time points t₁ and t₂ in the graph 1100-2 are the same as time points t₁ and t₂ in the graph 1100-1, but time points t₁" and t₂^{"} in the graph 1100-2 may be different from time points t₁' and t₂^{'} in the graph 1100-1. In an embodiment of the disclosure, the heating apparatus 2000 may transmit such time delay information to the cooking appliance 1000 so that the cooking appliance 1000 may use the time delay information when determining empty heating.

As seen in the graph 1100-2 of FIG. 11, when the cooking appliance 1000 undergoes empty heating during the interval between t₁ and t₂, a change in the temperature of the bracket or a slope representing the change may continuously have a positive value in the interval between t₁ and t₂ (precisely, between t₁'' and t₂^{'}'). On the other hand, when the cooking appliance 1000 does not undergo empty heating and water remains in the cooking appliance 1000 even though the amount of water varies like 300ml, 200ml, and 100ml, a change in the temperature of the bracket or a slope representing the change may have a negative value in the interval between t₁ and t₂ (precisely between t₁" and t₂^{'}') where the power output is cut off by the heating apparatus 2000. As seen in the graph 1100-2 of FIG. 11, when cooking is stopped after a time point t₂^{'}', the heating apparatus 2000 cuts off a power output and the temperature of the bracket decreases.

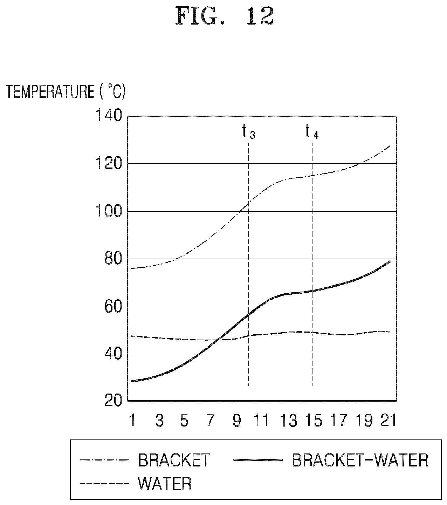

FIG. 12 is a graph for determining empty heating when reheating a heating apparatus, according to an embodiment of the disclosure.

It is assumed that when the heating apparatus 2000 starts an operation of heating the cooking appliance 1000 and completes a process of determining empty heating as shown in FIG. 11, the heating apparatus 2000 determines that the cooking appliance 1000 does not undergo empty heating. In an embodiment of the disclosure, while reheating the cooking appliance 1000 by outputting power corresponding to a user input, the heating apparatus 2000 may determine empty heating again.

As seen in the graph of FIG. 12, temperatures of the bracket 1034 and water do not start at low values unlike in FIG. 11 but at relatively high values because the cooking appliance 1000 is being heated.

The processor 2200 of the heating apparatus 2000 stops transmission of an output power to the cooking appliance 1000 from time point t₃ to time point t₄ (an interval between t₃ and t₄) in order to determine whether the cooking appliance 1000 undergoes empty heating. A time length of the interval between t₃ and t₄ may be set differently according to various conditions, but may be approximately 5 seconds. As described above with reference to FIG. 11, when a temperature of bracket-water continuously increases as a result of measuring temperatures of the bracket 1034 and water during the interval between t₃ and t₄ , the processor 2200 of the heating apparatus 2000 may determine that the cooking appliance 1000 undergoes empty heating. On the other hand, when the temperature of bracket-water decreases as a result of measuring temperatures of the bracket 1034 and water during the interval between t₃ and t₄ , the processor 2200 of the heating apparatus 2000 may determine that the cooking appliance 1000 does not undergo empty heating. When determining empty heating, the processor 2200 of the heating apparatus 2000 may determine whether not only the temperature of bracket-water but also the temperature of the bracket 1034 is increasing or decreasing, and determine that the empty heating is occurring when the temperatures thereof are increasing or determine that the empty heating is not occurring when the temperatures thereof are decreasing.

By measuring the temperatures of the bracket 1034 and water as shown in FIG. 12, it may be determined whether the cooking appliance 1000 undergoes empty heating in preparation for a case where all of the water in the cooking appliance 1000 evaporates during heating or there is no object to be cooked in the cooking appliance 1000 for other reasons. When it is determined that the cooking appliance 1000 undergoes empty heating during reheating, the processor 2200 of the heating apparatus 2000 may notify the cooking appliance 1000 of empty heating, and output information indicating that the cooking appliance 1000 undergoes empty heating in the form of audio or on a display via the output interface 2510 of the heating apparatus 2000. In addition, the processor 2200 of the heating apparatus 2000 may transmit the information indicating that the cooking appliance 1000 undergoes empty heating to a user's mobile device or a server. In an embodiment of the disclosure, the cooking appliance 1000 may also detect on its own that it undergoes empty heating during reheating.

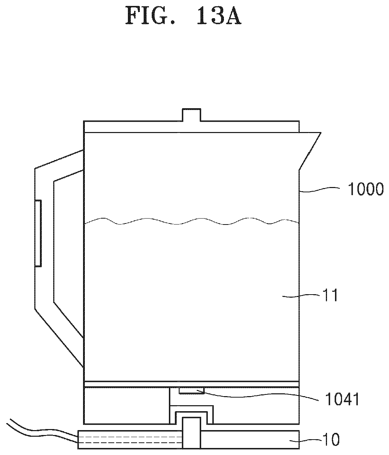

FIG. 13A illustrates a location of a first temperature sensor for detecting a temperature of an object being cooked, according to an embodiment of the disclosure.

Referring to FIG. 13A, a smart kettle is illustrated as an example of the cooking appliance 1000. To detect a temperature of water 11, which is an object being cooked in the cooking appliance 1000, a first temperature sensor 1041 for measuring the temperature of water 11 is attached to a bottom portion of the cooking appliance 1000. A bottom surface 10 of the cooking appliance 1000 may include a load for heating the smart kettle via a reception coil as a part of the cooking appliance 1000, the reception coil may be included in an upper body of the cooking appliance 1000, and the bottom surface 10 may also be a part of the heating apparatus 2000 capable of transmitting power to the reception coil of the cooking appliance 1000.

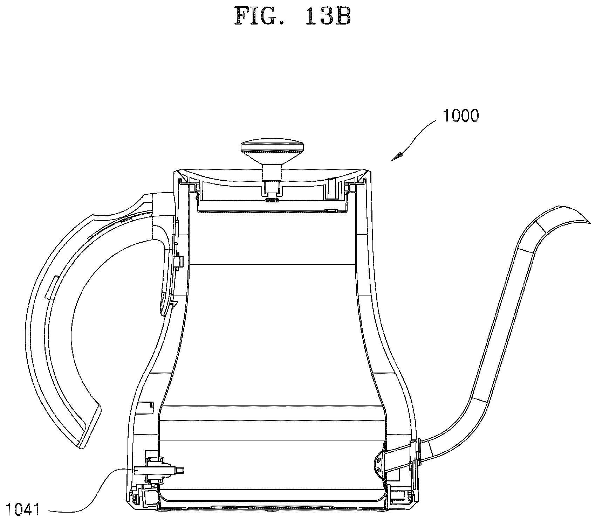

FIG. 13B illustrates a location of a first temperature sensor for detecting a temperature of an object being cooked, according to an embodiment of the disclosure.

Referring to FIG. 13B, the cooking appliance 1000 is a smart kettle like in FIG. 13A, and the first temperature sensor 1041 is attached to a side of an inner cylinder of the smart kettle to detect the temperature of water. The first temperature sensor 1041 may be installed through the side of the inner cylinder of the smart kettle to more accurately measure an internal temperature of the cooking appliance 1000 (or a temperature of an object being cooked therein).

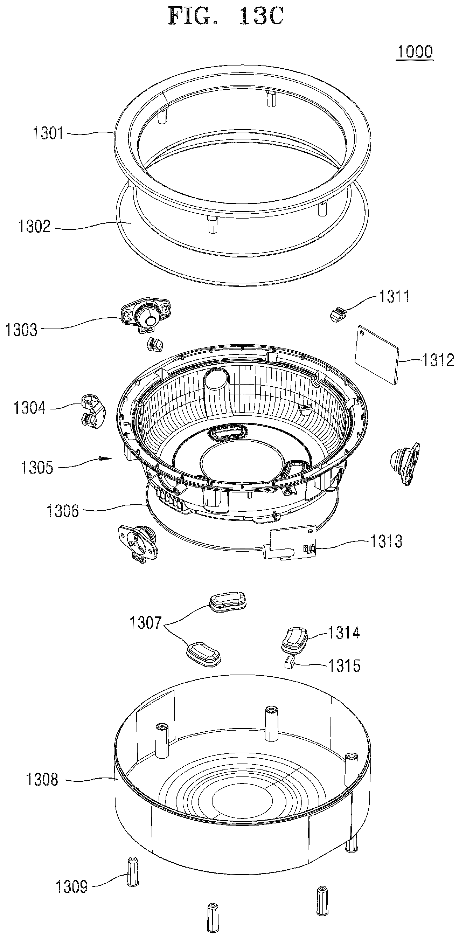

Hereinafter, a structure of the cooking appliance 1000 is described with reference to FIG. 13C.

FIG. 13C illustrates a structure of a cooking appliance according to an embodiment of the disclosure.

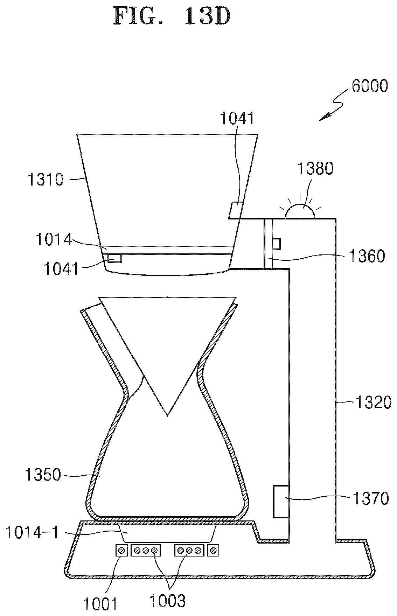

Referring to FIG. 13C, the cooking appliance 1000 is a smart pot. The smart pot does not have a heating heater, unlike a coffee dripper as shown in FIG. 13D.

Referring to FIG. 13C, the cooking appliance 1000 may include, but is not limited to, a top cover 1301, an inner/outer sealing 1302, a side sensor assembly module 1303, a buzzer assembly module 1304, an inner case 1305, a pickup coil 1306, rubber legs 1307, a body 1308, screw covers 1309, a guide rubber 1311, a BLE printed board assembly (PBA) assembly (ASM) 1312, a power PBA ASM 1313, a sensor leg 1314, and a bottom sensor 1315. The components are described.

The top cover 1301 forms an exterior of the cooking appliance 1000 and is a component that allows a cooking vessel (not shown) for an inner pot to be seated. The inner/outer sealing 1302 is pressed when assembling the cooking appliance 1000 to block a water permeation path, thereby enhancing the waterproofness of the cooking appliance 1000.

The side sensor module 1303 may include a first temperature sensor 1041 (a side temperature sensor) for measuring the temperature of a cooking vessel (not shown), a fixing member for fixing the first temperature sensor 1041, and an elastic member (e.g., a spring) compressively deformed when the cooking vessel is seated, but is not limited thereto. According to an embodiment of the disclosure, as shown in FIG. 13C, the side sensor module 1303 including the first temperature sensor 1041 may be mounted in three positions to increase the accuracy of side temperature measurement by measuring temperatures on various sides of the cooking appliance 1000.

The side sensor module 1303 including the first temperature sensor 1041 may be installed through the inner case 1305 to more accurately measure an internal temperature of the inner case 1305. The bottom sensor 1315 may include a second temperature sensor 1042 for measuring a temperature of a bottom surface of the cooking appliance 1000. The bottom sensor 1315 may be assembled to and supported by the sensor leg 1314. The bottom sensor 1315 may detect abnormal overheating of the cooking vessel.

The buzzer assembly module 1304 is a module for outputting an alarm when a cooking vessel (not shown) is overheated. The inner case 1305 supports the cooking vessel, and the rubber legs 1307 reduce shock and prevent slipping when the cooking vessel is seated. The body 1308 forms the exterior of the smart pot and covers internal objects, such as the cooking vessel. In addition, the cooking appliance 1000 may include a handle that prevents heat from escaping to the outside during a cooking operation of the smart pot and may be held by a consumer's hand together with the cooking vessel. The screw covers 1309 cover screws for assembly, forms an exterior, and relieves shock and prevents slipping when the smart pot is mounted on the top plate of the heating apparatus 2000. The guide rubber 1311 serves as a guide to prevent eccentricity when the cooking vessel is seated in the smart pot while mitigating shock and preventing slipping. The BLE PBA ASM 1312 may wirelessly communicate with the heating apparatus 2000 to control an output of the heating apparatus 2000 and detect the temperature of the smart pot. The power PBA ASM 1313 converts power received from the pickup coil 1306 into a voltage that may be used by an MCU and the BLE PBA ASM 1312. The sensor leg 1314 is used to mitigate shock and prevent slipping when the cooking vessel is seated in the smart pot.

The MCU of the smart pot that is the cooking appliance 1000 of FIG. 13C may determine whether the smart pot undergoes empty heating, based on a bottom temperature of the smart pot detected by the bottom sensor 1315 and a side (or internal) temperature of the smart pot detected by the side sensor module 1303. In an embodiment of the disclosure, when a change in a temperature obtained by subtracting the side temperature of the smart pot from the bottom temperature of the smart pot still has a positive value for a certain period of time when heating by the heating apparatus 2000 is stopped, the MCU of the smart pot may determine that the smart pot undergoes empty heating. Alternatively, the processor 2200 of the heating apparatus 2000 may determine empty heating by receiving, from the BLE PBA ASM 1312 of the smart pot, information about the bottom temperature of the smart pot detected by the bottom sensor 1315 and the side (or internal) temperature of the smart pot detected by the side sensor module 1303. A method of determining empty heating is the same as the method performed by the MCU of the smart pot.

FIG. 13D illustrates a coffee dripper according to an embodiment of the disclosure.

A coffee dripper 6000 of FIG. 13D may correspond to the 2-2 type cooking appliance 1000b-2 in which the reception coil 1003 heats the heater 1014 among the cooking appliances 1000.

Referring to FIG. 13D, the coffee dripper 6000 is divided into a water heater 1310 provided at an upper portion for boiling water and a coffee server 1350 provided at a lower portion for accommodating dripped coffee. The water heater 1310 may include the heater 1014 and a first temperature sensor 1041 for measuring a temperature of water or a temperature inside the water heater 1310.

The coffee server 1350 may include a pickup coil 1001, a reception coil 1003, and a server heater 1014-1. The coffee server 1350 may be made of a borosilicate material, but is not limited thereto. The reception coil 1003 of the coffee server 1350 may be electrically connected to a reception coil (not shown) included in the water heater 1310 via a connector 1320. The reception coil 1003 and the server heater 1014-1 of the coffee server 1350 may be used to warm and heat the accommodated coffee, and may not be included in the coffee server 1350 depending on the specifications of the coffee dripper 6000. The reception coil 1003 may be protected from heat by a 200 degree heat resistant wire. The connector 1320 for connecting the coffee server 1350 to the water heater 1310 may include a server detection sensor 1370, a solenoid valve 1360, and an LED 1380.

The server detection sensor 1370 determines whether the coffee server 1350 is present, and a time-of-flight (ToF) sensor may be applied. The solenoid valve 1360 may discharge water while opening and closing a valve according to a control signal to fill the water heater 1310 with water, and a direct acting solenoid valve may be used. The LED 1380 may emit light while the coffee dripper 6000 is in operation to indicate that the coffee dripper is in operation.

The coffee dripper 6000 may include a PCB (not shown), and the PCB may be included in the coffee server 1350 or provided in the water heater 1310 or the connector 1320. The PCB may receive power via the pickup coil 1001, and in an embodiment of the disclosure, the MCU that is a type of processor in the PCB may determine whether empty heating occurs through the first temperature sensor 1041 for measuring the temperature of water or the temperature inside the water heater 1310 and the second temperature sensor 1042 attached to the heater 1014.

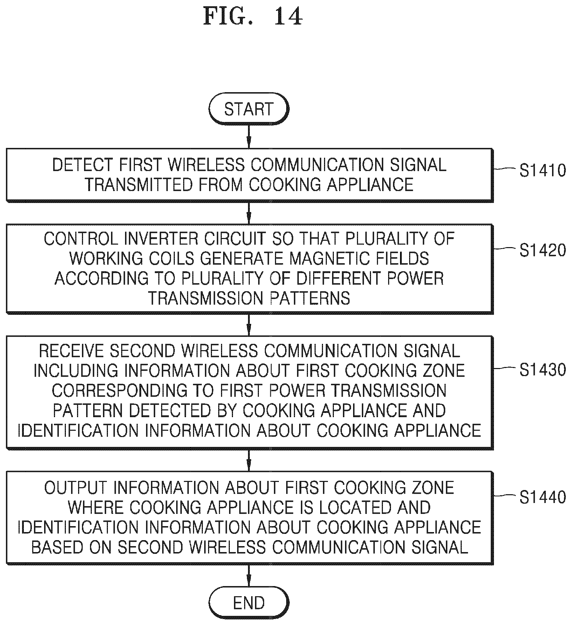

FIG. 14 is a flowchart of a method, performed by a heating apparatus, of identifying a location of a cooking appliance, according to an embodiment of the disclosure.

In operation S1410, according to an embodiment of the disclosure, the heating apparatus 2000 may detect, via the communication interface 2300 of the heating apparatus 2000, a first wireless communication signal transmitted from the cooking appliance 1000 located on a top plate of the heating apparatus 2000.

According to an embodiment of the disclosure, when operating in a small appliance detection mode, the heating apparatus 2000 may transmit power of a preset first level (e.g., 100 W to 300 W) to the cooking appliance 1000 in order to drive the communication interface 1030 of the cooking appliance 1000. The small appliance detection mode is a mode for detecting the second type cooking appliance 1000b capable of communicating with the heating apparatus 2000.

When the communication interface 1030 of the cooking appliance 1000 is driven by power transmitted from the heating apparatus 2000, the cooking appliance 1000 may transmit a first wireless communication signal. For example, the cooking appliance 1000 may advertise the first wireless communication signal including a first packet at regular intervals by using short-range wireless communication (e.g., Bluetooth, BLE, or the like). The heating apparatus 2000 may receive the first wireless communication signal transmitted from the communication interface 1030 of the cooking appliance 1000. The first packet included in the first wireless communication signal may include identification information about the cooking appliance 1000, but is not limited thereto. Meanwhile, the first packet included in the first wireless communication signal may not include location information of the cooking appliance 1000 (e.g., information about a cooking zone where the cooking appliance 1000 is currently located).

In operation S1420, according to an embodiment of the disclosure, when detecting the first wireless communication signal, the heating apparatus 2000 may control the inverter circuit 2113 so that the plurality of working coils 2120 respectively corresponding to a plurality of cooking zones generate magnetic fields according to a plurality of different power transmission patterns.

According to an embodiment of the disclosure, the first packet included in the first wireless communication signal transmitted from the cooking appliance 1000 may not include location information of the cooking appliance 1000. In this case, the heating apparatus 2000 may not accurately identify which cooking zone the cooking appliance 1000 is located on. Therefore, to identify the location of the cooking appliance 1000, the heating apparatus 2000 may control the inverter circuit 2113 to output power according to a different power transmission pattern for each cooking zone. For example, when the heating apparatus 2000 includes three cooking zones, i.e., first to third cooking zones, the heating apparatus 2000 may control the inverter circuit 2113 to output power according to a first power transmission pattern via a first working coil corresponding to the first cooking zone, to output power according to a second power transmission pattern via a second working coil corresponding to the second cooking zone, and to output power according to a third power transmission pattern via a third working coil corresponding to the third cooking zone.

The plurality of power transmission patterns may be each set differently based on at least one of a duration of a power transmission interval, a duration of a power cut-off interval, or a power level.

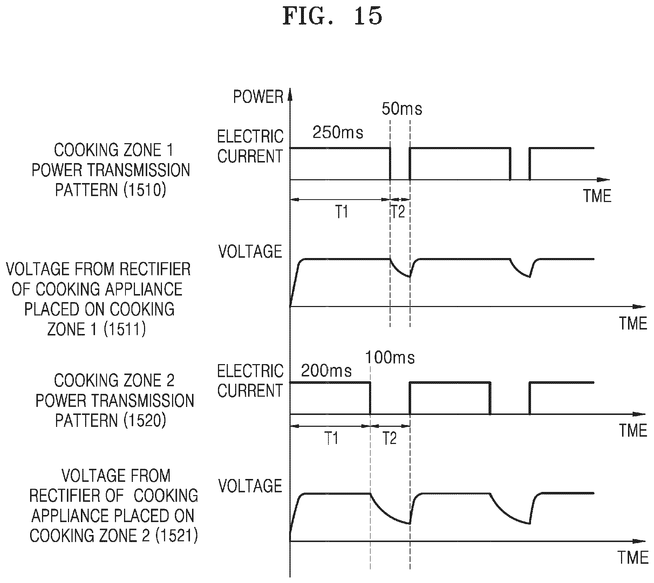

FIG. 15 is a diagram illustrating a power transmission pattern according to an embodiment of the disclosure.

Referring to FIG. 15, a plurality of power transmission patterns may be set differently according to a duration of a power transmission interval T1 and a duration of a power cut-off interval T2. For example, in a first power transmission pattern 1510 corresponding to a first cooking zone, the power transmission interval T1 has a duration of 250 milliseconds (ms) and the power cut-off interval T2 has a duration of 50 ms. In other words, in the first power transmission pattern 1510, a pattern in which power is transmitted for 250 ms and then is cut off for 50 ms may be repeated. In a second power transmission pattern 1520 corresponding to a second cooking zone, the power transmission interval T1 has a duration of 200 ms and the power cutoff interval T2 has a duration of 100 ms. For example, according to the second power transmission pattern 1520, a pattern in which power is transmitted for 200 ms and then is cut off for 100 ms may be repeated.

Therefore, according to an embodiment of the disclosure, when the heating apparatus 2000 receives the first wireless communication signal from the cooking appliance 1000 and operates in a mode for determining a cooking zone where the cooking appliance 1000 is located (hereinafter, referred to as a cooking zone determination mode), the heating apparatus 2000 may control the inverter circuit 2113 to supply an AC current to the first working coil corresponding to the first cooking zone for 250 ms and then cut off the supply of AC current for 50 ms according to the first power transmission pattern 1510, and control the inverter circuit 2113 to supply an AC current to the second working coil corresponding to the second cooking zone for 200 ms and then cut off the supply of AC current for 100 ms according to the second power transmission pattern 1520.

At this time, the cooking appliance 1000 may analyze a voltage output from the rectifier to detect one of a plurality of power transmission patterns. For example, referring to FIG. 15, when the cooking appliance 1000 is located on the first cooking zone, the cooking appliance 1000 may analyze a first voltage 1511 output from the rectifier to detect the first power transmission pattern 1510 in which the duration of the power transmission interval T1 is 250 ms and the duration of the power cut-off interval T2 is 50 ms. In addition, the cooking appliance 1000 may determine that the cooking appliance 1000 is located on the first cooking zone by identifying a cooking zone outputting the first power transmission pattern 1510 as being the first cooking zone, based on information about a plurality of prestored power transmission patterns output from the heating apparatus 2000. Furthermore, when the cooking appliance 1000 is located on the second cooking zone, the cooking appliance 1000 may analyze a second voltage 1521 output from the rectifier to detect the second power transmission pattern 1520 in which the duration of the power transmission interval T1 is 200 ms and the duration of the power cut-off interval T2 is 100 ms. In addition, the cooking appliance 1000 may determine that the cooking appliance 1000 is located on the second cooking zone by identifying a cooking zone outputting the second power transmission pattern 1520 as being the second cooking zone, based on the information about the plurality of prestored power transmission patterns of power from the heating apparatus 2000.

Moreover, according to an embodiment of the disclosure, the cooking appliance 1000 may identify a cooking zone where the cooking appliance 1000 is located only based on the duration of the power cut-off interval T2. For example, when a power cut-off interval has a duration of 50 ms as a result of analyzing power output from the rectifier, the cooking appliance 1000 may determine that it is located on the first cooking zone outputting the first power transmission pattern 1510, and when the power cut-off interval has a duration of 100 ms, the cooking appliance 1000 may determine that it is located on the second cooking zone outputting the second power transmission pattern 1520.

According to an embodiment of the disclosure, the plurality of power transmission patterns may be set in various ways based on a duration of a power transmission interval, a duration of a power cutoff interval, and a power level.

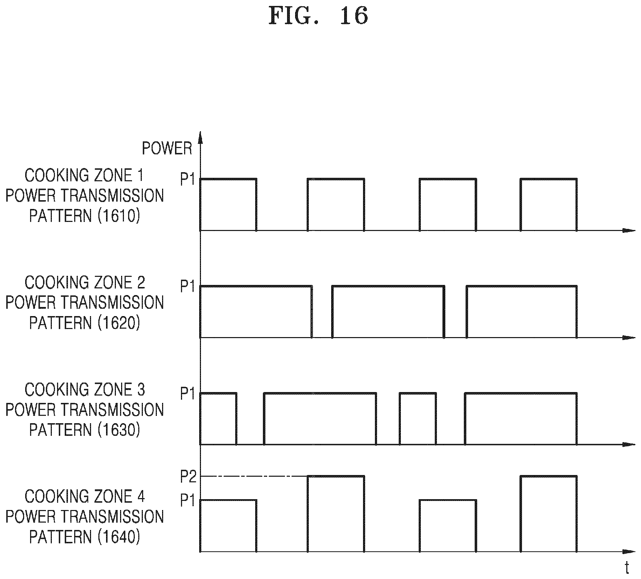

FIG. 16 is a diagram illustrating a power transmission pattern according to an embodiment of the disclosure.

Referring to FIG. 16, a first power transmission pattern 1610 corresponding to a first cooking zone may be a pattern in which power is transmitted at a first level P1 for 2 seconds and then power is cut off for 2 seconds. A second power transmission pattern 1620 may be a pattern in which power is transmitted at the first level P1 for 2 seconds and then power is cut off for 1 second. A third power transmission pattern 1630 may be a pattern in which power is transmitted at the first level P1 for 4 seconds and is then cut off for 1 second, and power is transmitted again at the first level P1 for 1 second and is then cut off for 1 second. A fourth power transmission pattern 1640 may be a pattern in which power at the first level P1 is transmitted for 2 seconds, then power is cut off for 2 seconds, power at the second level P2 is transmitted again for 2 seconds, and then the power is cut off for 2 seconds.

Moreover, according to an embodiment of the disclosure, power transmitted to the cooking appliance 1000 according to a plurality of power transmission patterns may be sufficiently high to drive the communication interface 1030 of the cooking appliance 1000. Therefore, according to an embodiment of the disclosure, when the cooking appliance 1000 determines that it is located on the first cooking zone based on the detected first power transmission pattern, the cooking appliance 1000 may transmit a second wireless communication signal including information about the first cooking zone, determine whether the cooking appliance 1000 on the first cooking zone undergoes empty heating, and notify the user whether the cooking appliance 1000 on the first cooking zone undergoes empty heating. The notification may be made using at least one of a notification through a display or a notification through an audio output. In addition, the cooking appliance 1000 may advertise a second packet including information about the first cooking zone by using short-range wireless communication.

Referring back to FIG. 14, in operation S1430, according to an embodiment of the disclosure, the heating apparatus 2000 may receive, from the cooking appliance 1000, a second wireless communication signal including information about a first cooking zone corresponding to a first power transmission pattern detected at a location of the cooking appliance 1000 from among the plurality of power transmission patterns and identification information about the cooking appliance 1000.

For example, the heating apparatus 2000 may receive, from the cooking appliance, a second packet including information about the first cooking zone where the cooking appliance 1000 is located and the identification information about the cooking appliance 1000 via short-range wireless communication. The information about the first cooking zone where the cooking appliance 1000 is located may include identification information (e.g., a first heating zone, an upper left heating zone, or the like) indicating the first cooking zone among a plurality of cooking zones, and also include coordinate information of the first cooking zone. The identification information about the cooking appliance 1000 is unique information for identifying the cooking appliance 1000, and may include, but is not limited to, at least one of a MAC address, a model name, appliance type information (e.g., an IH type ID, a heater type ID, and a motor type ID), manufacturer information (e.g., a manufacturer ID), a serial number, or a manufacturing date. According to an embodiment of the disclosure, the identification information about the cooking appliance 1000 may be expressed as a series of identification numbers or a combination of numbers and alphabets.

Moreover, the second packet included in the second wireless communication signal may further include communication connection information. In a case where the cooking appliance 1000 has been previously paired with the heating apparatus 2000, the communication connection information may include pairing information (e.g., an authentication key, or the like). 'Pairing' may refer to a procedure for verifying a password, identification information, security information, authentication information, or the like, designated for a communication connection between the cooking appliance 1000 and the heating apparatus 2000 both supporting, for example, Bluetooth.

According to an embodiment of the disclosure, by receiving, from the cooking appliance 1000, the second wireless communication signal including the information about the first cooking zone where the cooking appliance 1000 is located and the identification information about the cooking appliance 1000, the heating apparatus 2000 may identify a type of cooking appliance 1000 and which cooking zone the cooking appliance 1000 is located on.

Moreover, when a plurality of cooking appliances are located on a plurality of cooking zones, the heating apparatus 2000 may receive identification information and location information of each of the cooking appliances from a corresponding cooking appliance. For example, when a coffee machine is located on the first cooking zone, the heating apparatus 2000 may receive, from the coffee machine, information about the first cooking zone and identification information about the coffee machine, and when a toaster is located on the second cooking zone, the heating apparatus 2000 may receive, from the toaster, information about the second cooking zone and identification information about the toaster. In this case, the heating apparatus 2000 may determine that the coffee machine is located on the first cooking zone and the toaster is located on the second cooking zone.

In operation S1440, according to an embodiment of the disclosure, the heating apparatus 2000 may output, based on the second wireless communication signal, the information about the first cooking zone where the cooking appliance 1000 is located among a plurality of cooking zones (hereinafter, also referred to as location information of the cooking appliance 1000) and the identification information about the cooking appliance 1000.

According to an embodiment of the disclosure, the heating apparatus 2000 may display the identification information about the cooking appliance 1000 in the form of a text or image on the display. For example, the heating apparatus 2000 may display a text representing a name or type of the cooking appliance 1000, or display an icon image of the first cooking appliance 1000 together with the text. According to an embodiment of the disclosure, the heating apparatus 2000 may output the identification information about the cooking appliance 1000 as a voice via the audio output interface.

Moreover, according to an embodiment of the disclosure, the heating apparatus 2000 may indicate that the cooking appliance 1000 is located on the first cooking zone by displaying the identification information about the cooking appliance 1000 at a location where a power level of the first cooking zone is displayed on a GUI. In addition, when the cooking appliance 1000 undergoes empty heating, the heating apparatus 2000 may also display, at the position where the power level of the first cooking zone is displayed on the GUI, information about whether empty heating is occurring together with the identification information about the cooking appliance 1000 by using a special display method, e.g., by displaying an image corresponding to the identification information in a blinking manner, showing the image corresponding to the identification information in different color, or displaying a text 'undergoing empty heating' around the image corresponding to the identification information. For example, when the cooking appliance 1000 is a smart pot, and the smart pot is placed on a lower left cooking zone and undergoes empty heating, the heating apparatus 2000 may indicate that the smart pot undergoes empty heating by displaying an icon image of the smart pot at a lower left of the GUI in a blinking manner. According to an embodiment of the disclosure, the heating apparatus 2000 may output the information about the first cooking zone where the cooking appliance 1000 is located (location information of the cooking appliance 1000) and whether the cooking appliance 1000 undergoes empty heating as a voice, e.g., "The smart pot on the first cooking zone undergoes empty heating," via the audio output interface.

In the case of using a general induction range, user convenience is reduced because the user needs to identify a type of the cooking appliance 1000 and a position of a heating zone on which the cooking appliance 1000 is placed and input the type of the cooking appliance 1000 and then a particular operation via a manipulation interface for the corresponding heating zone. On the other hand, according to an embodiment of the disclosure, when the user places the cooking appliance 1000 on any cooking zone and presses a power button, the heating apparatus 2000 autonomously identifies and displays identification information about the cooking appliance 1000 and a location of the cooking zone where the cooking appliance 1000 is placed, so that user convenience is increased. Furthermore, according to an embodiment of the disclosure, even when the user places the cooking appliance 1000 on the first cooking zone while the power is on or moves the cooking appliance 1000 placed on the first cooking zone to the second cooking zone, the heating apparatus 2000 may autonomously identify and display identification information about the cooking appliance 1000 and a location of a cooking zone where the cooking appliance 1000 is placed. Furthermore, when the user starts to heat the cooking appliance 1000 but the cooking appliance 1000 undergoes empty heating without an object to be cooked therein, the heating apparatus 2000 may determine that the cooking appliance 1000 undergoes empty heating and output information indicating the empty heating. In addition, based on the identification information about the cooking appliance 1000, the location of the cooking zone where the cooking appliance 1000 is placed, and determination as to whether the cooking appliance 1000 undergoes empty heating, the heating apparatus 2000 may all output, via the output interface 2510, the type of the cooking appliance 1000, the location of the cooking zone where the cooking appliance 1000 is placed, and whether the cooking appliance 1000 undergoes empty heating.

Although the embodiment of the disclosure in which a cooking zone where the cooking appliance 1000 is located and the cooking appliance 1000 are identified according to a plurality of power transmission patterns has been described with reference to FIGS. 14 to 16, operations in the embodiment of the disclosure described with reference to FIGS. 14 to 16 may be merely optional, and may not be considered essential when determining empty heating.

FIG. 17A is a flowchart of a method of determining whether a cooking appliance undergoes empty heating, according to an embodiment of the disclosure.

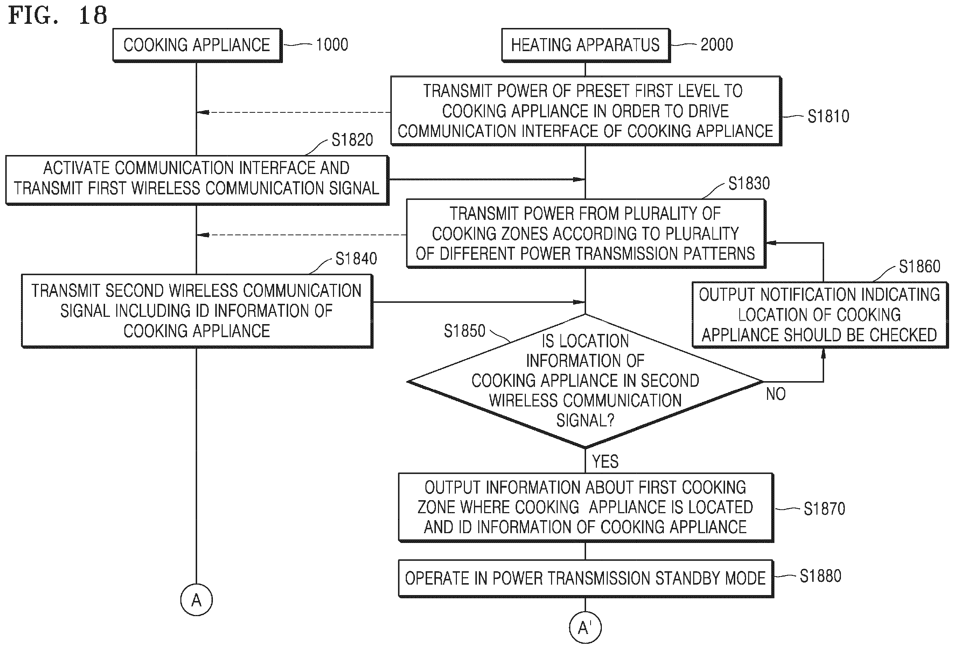

In operation S1702a, the heating apparatus 2000 receives a user input. The user input is a user input for heating the cooking appliance 1000, and the corresponding user input may also include an input regarding a power level at which the cooking appliance is to be heated. When the power level at which the cooking appliance is to be heated is not specified by the user, heating may be started at a default power level. In an embodiment of the disclosure, the operation of receiving the user input in operation S1702a may be performed prior to operation S1810 of FIG. 18 below.

In operation S1704a, the heating apparatus 2000 heats, for a first time period, the cooking appliance 1000 with power for empty heating determination, which is not power corresponding to a user input, via a transmission coil. In operation S1705a, as the PCB 1005 of the cooking appliance 1000 is activated by the pick-up coil 1001 via the power received from the heating apparatus 2000, the cooking appliance 1000 obtains information about a temperature detected by the first temperature sensor 1041 for detecting a temperature of an object being cooked, such as water contained in the cooking appliance 1000, or an internal temperature of the cooking appliance 1000, and a temperature detected by the second temperature sensor 1042 attached to the bracket 1034 to measure a temperature of the heater 1014, and transmits the information about the temperatures to the heating apparatus 2000. A length of the first time period may vary depending on various conditions, but may be approximately 10 seconds.

Unless there is a special reason for stopping temperature measurement, the cooking appliance 1000 may continue temperature detecting by the first temperature sensor 1041 and the second temperature sensor 1042 while the PCB 1005 of the cooking appliance 1000 is activated.

In operation S1706a, the heating apparatus 2000 stops heating of the cooking appliance 1000 for a second time period and continuously obtains information about the temperatures detected by the first temperature sensor 1041 and the second temperature sensor 1042 during the second time period. In operation S1708a, the heating apparatus 2000 determines whether the cooking appliance 1000 undergoes empty heating, based on information about the internal temperature of the cooking appliance 1000 detected by the first temperature sensor 1041 and information about the temperature of the heater 1014 detected by the second temperature sensor 1042 attached to the bracket 1034.

In order to save resources, the heating apparatus 2000 may selectively obtain such temperature information only for the second time period, or only for a period including a certain time (2 seconds) immediately before the start of the second time period and the second time period.

When determining empty heating, the processor 2200 of the heating apparatus 2000 may determine whether the cooking appliance 1000 undergoes empty heating based on a relationship between the temperature of the heater 1014 and the internal temperature of the cooking appliance 1000 (temperature of the object being cooked therein). In an embodiment of the disclosure, the heating apparatus 2000 may determine that the cooking appliance 1000 undergoes empty heating when a value obtained by subtracting the internal temperature of the cooking appliance 1000 from the temperature of the heater 1014 continues to increase for the second time period. In an embodiment of the disclosure, when the temperature of the heater 1014 continuously increases for the second time period, the processor 2200 may determine that the cooking appliance 1000 undergoes empty heating. In an embodiment of the disclosure, the processor 2200 may determine that the cooking appliance 1000 undergoes empty heating when a slope corresponding to the value obtained by subtracting the internal temperature of the cooking appliance 1000 from the temperature of the heater 1014 remains positive (+) for the second time period. The internal temperature of the cooking appliance 1000 may be a temperature of water when there is an object being cooked, such as water in the cooking appliance 1000, and may simply be the internal temperature of the cooking appliance 1000 when there is no water therein. In an embodiment of the disclosure, the processor 2200 may determine that the cooking appliance 1000 undergoes empty heating when the slope corresponding to the value obtained by subtracting the internal temperature of the cooking appliance 1000 from the temperature of the heater 1014 is greater than a predetermined value for the second time period.

FIG. 17B is a flowchart of a method of determining whether a cooking appliance undergoes empty heating, according to an embodiment of the disclosure.

In operation S1701b, when receiving a user input, the heating apparatus 2000 prepares to start heating the cooking appliance 1000. The user may start an operation of the heating apparatus 2000 by pressing a button for turning on power of the heating apparatus 2000. In response to reception of the user input, in operation S1702b, the heating apparatus 2000 may supply power to the pick-up coil 1001 of the cooking appliance 1000 via the transmission coil 2120. In operation S1703b, the power received via the pick-up coil 1001 is supplied to the PCB 1005 of the cooking appliance 1000 to activate the power supply 1010, the controller 1020, the communication interface 1030, and the sensor unit 1040 included in the PCB 1005. The communication interface 1030 may be activated when the power of the communication module 1030 included in the PCB 1005 is turned on. In operation S1704b, the cooking appliance 1000 transmits identification information about the cooking appliance 1000 to the heating apparatus 2000. The identification information about the cooking appliance 1000 may include at least one of a type of the cooking appliance 1000 (a coffee dripper, a smart pot, a frying pan, a smart kettle, or the like), capacity, a capacity of the cooking appliance 1000, a heating type (whether the cooking appliance 1000 is an induction heating cooking appliance or a heater heating cooking appliance), a MAC address, or information about whether the cooking appliance 1000 has a temperature sensor attached thereto. In this case, the heating apparatus 2000 may also determine a cooking zone where the cooking appliance 1000 is located and obtain information about the cooking zone. In operation S1705b, short-range communication may be established between the heating apparatus 2000 and the cooking appliance 1000. The short-range communication may include, but is not limited to, Bluetooth communication, a BLE communication, NFC, WLAN (or Wi-Fi) communication, Zigbee communication, IrDA communication, WFD communication, UWB communication, Ant+ communication, or the like.

In operation S1706b, at least some of the received identification information about the cooking appliance 1000 may be displayed on the output interface 2510, such as the display of the heating apparatus 2000. In addition, the heating apparatus 2000 may display a cooking zone where the cooking appliance 1000 is placed, together with the identification information about the cooking appliance 1000.

In operation S1707b, the user inputs a heating operation to the heating apparatus 2000. For example, the user may input the heating operation so that the heating apparatus 2000 capable of heating at levels 1 to 10 heats the cooking appliance at level 8. The user may also select recipe information from the heating apparatus 2000 to which a cooking recipe may be input. For example, the user may select recipe information (e.g., cooking temperature: 180 °C to 190 °C and time: 30 to 35 seconds) appropriate for an object to be currently cooked and the cooking appliance 1000. In this case, when the user presses a start button, the heating apparatus 2000 may cook the object to be cooked in the cooking appliance 1000 according to the recipe information (e.g., cooking temperature: 180 °C to 190 °C and time: 30 to 35 seconds).

In operation S1708b, the heating apparatus 2000 determines whether the cooking appliance 1000 is a cooking appliance capable of determining empty heating or a cooking appliance requiring determination as to empty heating, according to the received identification information about the cooking appliance 1000. For example, when the identification information about the cooking appliance 1000 includes information indicating that the cooking appliance 1000 does not have a temperature sensor, the heating apparatus 2000 may not determine whether empty heating is occurring. Alternatively, when the cooking appliance 1000 is the first type cooking appliance 1000a using an induction heating method, the heating apparatus 2000 may not determine whether empty heating is occurring. When not determining whether empty heating is occurring, in operation S1717b, the heating apparatus 2000 supplies power to the cooking appliance 1000, based on the heating operation and the recipe input by the user in operation S1707b.

When determining in operation S1708b that the cooking appliance 1000 is a cooking appliance requiring determination as to empty heating based on the received identification information about the cooking appliance 1000, in operation S1710b, the heating apparatus 2000 may supply power for empty heating determination to the cooking appliance 1000 for a predetermined time period. For example, the heating apparatus 2000 may supply power of 800 W for 10 seconds, and in operation S1711b, stop supplying power for 5 seconds. In this case, in operations S1709b and S1712b, the cooking appliance 1000 continuously measures a temperature of water in the cooking appliance 1000 (or the inside of the cooking appliance 1000) and a temperature of the bracket 1034 both while the cooking appliance 1000 itself is heated (S1710b) and while the heating is stopped(S1711b), and obtains the temperature measurement values.

In operation S1713b, the cooking appliance 1000 determines whether the cooking appliance 1000 itself undergoes empty heating based on the obtained temperature information. In an embodiment of the disclosure, the cooking appliance 1000 may receive, from the heating apparatus 2000, via the communication interface 1030, information about a time interval during which power for empty heating determination is supplied from the heating apparatus 2000, a time interval during which power is cut off, and a magnitude of power for empty heating determination. The cooking appliance 1000 may know, based on the received information, at what time point the heating apparatus 2000 outputs power for empty heating determination and at what point the heating apparatus 2000 stops heating. The cooking appliance 1000 may also know the lengths of time during which the heating apparatus 2000 outputs power for empty heating determination and stops heating. The cooking appliance 1000 may determine and detect empty heating, based on the information obtained from the heating apparatus 2000 and the temperature information obtained from the sensor unit 1040. In an embodiment of the disclosure, when a value obtained by subtracting the internal temperature of the cooking appliance 1000 from the temperature of the bracket 1034 continuously increases during a time period during which the heating is stopped by the heating apparatus 2000, the cooking appliance 1000 may determine that empty heating is occurring. Alternatively, when a slope corresponding to a value obtained by subtracting the internal temperature of the cooking appliance 1000 from the temperature of the bracket 1034 has a positive value, the cooking appliance 1000 may determine that empty heating is occurring.

In operation S1714b, the cooking appliance 1000 may transmit, via the communication interface 1030, a result of determining whether the empty heating is occurring to the heating apparatus 2000.

In operation S1715b, the heating apparatus 2000 may recognize whether the cooking appliance 1000 undergoes empty heating according to the result of the determining received from the cooking appliance 1000, or may independently determine whether the cooking appliance 1000 undergoes empty heating, based on the temperature information received from the cooking appliance 1000, i.e., information about the temperatures measured by the first temperature sensor 1041 and the second temperature sensor 1042. When determining that the cooking appliance 1000 undergoes empty heating, the heating apparatus 2000 notifies the user of the empty heating in operation S1716b. In this case, the notification indicating the empty heating may be made via the output interface 2510 of the heating apparatus 2000. In an embodiment of the disclosure, when the heating apparatus 2000 is connectable to a server or a user's mobile device via communication, the heating apparatus 2000 may notify the server or the user's mobile device of the empty heating. The notification of the empty heating may be made via sound, a display, as a smartphone notification, or the like.

In operation S1717b, the heating apparatus 2000 may supply power corresponding to the user input (e.g., 1400 W corresponding to a user input heating level) to the cooking appliance 1000 when it is determined that the cooking appliance 1000 does not undergo empty heating according to the result of determining as to empty heating, which is received from the cooking appliance 1000, or when the heating apparatus 2000 determines that the cooking appliance 1000 does not undergo empty heating as a result of independently determining whether the cooking appliance 1000 undergoes empty heating based on the temperature information received from the cooking appliance 1000, i.e., the information about the temperatures measured by the first temperature sensor 1041 and the second temperature sensor 1042.

FIG. 17C is a flowchart of a method of determining whether a cooking appliance undergoes empty heating, according to an embodiment of the disclosure.

In operation S1701c, when receiving a user input, the heating apparatus 2000 prepares to start heating the cooking appliance 1000. The user may start an operation of the heating apparatus 2000 by pressing a button for turning on power of the heating apparatus 2000. In response to reception of the user input, in operation S1702c, the heating apparatus 2000 may supply power to the pick-up coil 1001 of the cooking appliance 1000 via the transmission coil 2120. In operation S1703c, the power received via the pick-up coil 1001 is supplied to the PCB 1005 of the cooking appliance 1000 to activate the power supply 1010, the controller 1020, the communication interface 1030, and the sensor unit 1040 included in the PCB 1005. The communication interface 1030 may be activated when the power of the communication module 1030 included in the PCB 1005 is turned on. In operation S1704c, the cooking appliance 1000 transmits identification information about the cooking appliance 1000 to the heating apparatus 2000. The identification information about the cooking appliance 1000 may include at least one of a type of the cooking appliance 1000 (a coffee dripper, a smart pot, a frying pan, a smart kettle, or the like), capacity, a capacity of the cooking appliance 1000, a heating type (whether the cooking appliance 1000 is an induction heating cooking appliance or a heater heating cooking appliance), a MAC address, or information about whether the cooking appliance 1000 has a temperature sensor attached thereto. In this case, the heating apparatus 2000 may also determine a cooking zone where the cooking appliance 1000 is located and obtain information about the cooking zone. In operation S1705c, short-range communication may be established between the heating apparatus 2000 and the cooking appliance 1000. The short-range communication may include, but is not limited to, Bluetooth communication, a BLE communication, NFC, WLAN (or Wi-Fi) communication, Zigbee communication, IrDA communication, WFD communication, UWB communication, Ant communication, or the like.

In operation S1706c, at least some of the received identification information about the cooking appliance 1000 may be displayed on the output interface 2510, such as the display of the heating apparatus 2000. In addition, in an embodiment of the disclosure, the heating apparatus 2000 may display a cooking zone where the cooking appliance 1000 is placed, together with the identification information about the cooking appliance 1000.

In operation S1707c, the user inputs a heating operation to the heating apparatus 2000. For example, the user may input the heating operation so that the heating apparatus 2000 capable of heating at levels 1 to 10 heats the cooking appliance at level 6. The user may also select recipe information from the heating apparatus 2000 to which a cooking recipe may be input. For example, the user may select recipe information (e.g., cooking temperature: 180 °C to 190 °C and time: 30 to 35 seconds) appropriate for an object to be currently cooked and the cooking appliance 1000. In this case, when the user presses a start button, the heating apparatus 2000 may cook the object to be cooked in the cooking appliance 1000 according to the recipe information (e.g., cooking temperature: 180 °C to 190 °C and time: 30 to 35 seconds).

In operation S1708c, the heating apparatus 2000 may measure a temperature of a bottom surface of the cooking appliance 1000 via a temperature sensor on a top plate of the heating apparatus 2000.

In operation S1709c, the cooking appliance 1000 may measure a side temperature of the cooking appliance 1000 via the first temperature sensor 1041. The first temperature sensor 1041 may indirectly measure an internal temperature of the cooking appliance 1000 by measuring the side temperature of the cooking appliance 1000. In an embodiment of the disclosure, the first temperature sensor 1041 may be connected to the inside of the cooking appliance 1000 through a side of the cooking appliance 1000 to directly measure the internal temperature of the cooking appliance 1000.

In operation S1710c, the cooking appliance 1000 may transmit a value of the measured side temperature or internal temperature of the cooking appliance 1000 to the heating apparatus 2000 via the communication interface 1030.

In operation S1711c, the heating apparatus 2000 outputs power (e.g., 800 W) for empty heating determination to the cooking appliance 1000 for a predetermined time period (e.g., 10 seconds). The heating apparatus 2000 may transmit, to the cooking appliance 1000, information about the certain time period (e.g., 10 seconds) during which the power (e.g., 800W) for empty heating determination is output.

While outputting the power for empty heating determination (e.g., 800 W) for the certain time period (e.g.,10 seconds), in operation S1712c, the heating apparatus 2000 may measure a temperature of the bottom surface of the cooking appliance 1000 via the temperature sensor on the top plate of the heating apparatus 2000, and in operation S1713c, measure a side temperature or an internal temperature of the cooking appliance 1000 via the first temperature sensor 1041. Then, in operation S1714c, the cooking appliance 1000 may transmit a value of the measured side temperature or internal temperature of the cooking appliance 1000 to the heating apparatus 2000 via the communication interface 1030.

In operation S1715c, the heating apparatus 2000 stops heating for a predetermined time period (e.g., 5 seconds) to determine whether empty heating is occurring. While heating is stopped for the certain time period, in operation S1716c, the heating apparatus 2000 may measure a temperature of the bottom surface of the cooking appliance 1000 via the temperature sensor on the top plate of the heating apparatus 2000, and in operation S1717c, measure a side temperature or an internal temperature of the cooking appliance 1000 via the first temperature sensor 1041. Then, in operation S1718c, the cooking appliance 1000 may transmit a value of the measured side temperature or internal temperature of the cooking appliance 1000 to the heating apparatus 2000 via the communication interface 1030.

In operation S1719c, the heating apparatus 2000 may determine whether the cooking appliance 1000 undergoes empty heating, based on the temperature of the bottom surface of the cooking appliance 1000 and the side temperature or internal temperature of the cooking appliance 1000. In an embodiment of the disclosure, when a temperature obtained by subtracting the side temperature or internal temperature of the cooking appliance 1000 from the temperature of the bottom surface of the cooking appliance 1000 continues to increase for the certain time period when the heating is stopped, the heating apparatus 2000 determines that the cooking appliance 1000 undergoes empty heating, or otherwise, when a period in which the temperature obtained by subtracting the side temperature or internal temperature of the cooking appliance 1000 from the temperature of the bottom surface of the cooking appliance 1000 decreases occurs in the certain time period when the heating is stopped, the heating apparatus 2000 determines that the cooking appliance 1000 does not undergo empty heating.

In operation S1720c, the heating apparatus 2000 may transmit, via the communication interface 2300, a result of determining whether the cooking appliance 1000 undergoes empty heating to the cooking appliance 1000. In particular, when the heating apparatus 2000 does not need to notify the cooking appliance 1000 of the result of the determining as to empty heating, operation S1720c may be omitted.

When it is determined, based on the result of the determination in operation S1721c, that the cooking appliance 1000 does not undergo empty heating, the heating apparatus 2000 supplies power (e.g., 1400 W) corresponding to the user input to the cooking appliance 1000 in operation S1722c, and otherwise, when it is determined that the cooking appliance 1000 undergoes empty heating, the heating apparatus 2000 notifies the user of the empty heating in operation S1723c. In this case, the notification of the empty heating may be made via the output interface 2510 of the heating apparatus 2000. In an embodiment of the disclosure, when the heating apparatus 2000 is connectable to a server or a user's mobile device via communication, the heating apparatus 2000 may notify the server or the user's mobile device that the cooking appliance 1000 undergoes empty heating. The notification of the empty heating may be made via sound, display, as a smartphone notification, or the like.

FIG. 17D is a flowchart of a method of determining whether a cooking appliance undergoes empty heating, according to an embodiment of the disclosure.

In operation S1701d, when receiving a user input, the heating apparatus 2000 prepares to start heating the cooking appliance 1000. The user may start an operation of the heating apparatus 2000 by pressing a button for turning on power of the heating apparatus 2000. In response to reception of the user input, in operation S1702d, the heating apparatus 2000 may supply power to the pick-up coil 1001 of the cooking appliance 1000 via the transmission coil 2120. In operation S1703d, the power received via the pick-up coil 1001 is supplied to the PCB 1005 of the cooking appliance 1000. The power supply 1010, the controller 1020, the communication interface 1030, and the sensor unit 1040 included in the PCB 1005 are activated by the supplied power. The communication interface 1030 may be activated when the power of the communication module 1030 included in the PCB 1005 is turned on. In operation S1704d, the cooking appliance 1000 transmits identification information about the cooking appliance 1000 to the heating apparatus 2000. The identification information about the cooking appliance 1000 may include at least one of a type of the cooking appliance 1000 (a coffee dripper, a smart pot, a frying pan, a smart kettle, or the like), capacity, a capacity of the cooking appliance 1000, a heating type (whether the cooking appliance 1000 is an induction heating cooking appliance or a heater heating cooking appliance), a MAC address, or information about whether the cooking appliance 1000 has a temperature sensor attached thereto. In this case, the heating apparatus 2000 may also determine a cooking zone where the cooking appliance 1000 is located and obtain information about the cooking zone. In operation S1705d, short-range communication may be established between the heating apparatus 2000 and the cooking appliance 1000. The short-range communication may include, but is not limited to, Bluetooth communication, a BLE communication, NFC, WLAN (or Wi-Fi) communication, Zigbee communication, IrDA communication, WFD communication, UWB communication, Ant+ communication, or the like.

In operation S1706d, at least some of the received identification information about the cooking appliance 1000 may be displayed on the output interface 2510, such as the display of the heating apparatus 2000. In addition, in an embodiment of the disclosure, the heating apparatus 2000 may display a cooking zone where the cooking appliance 1000 is placed, together with the identification information about the cooking appliance 1000.

In operation S1707d, the user inputs a heating operation to the heating apparatus 2000. For example, the user may input the heating operation so that the heating apparatus 2000 capable of heating at levels 1 to 10 heats the cooking appliance at level 7. The user may also select recipe information when the heating apparatus 2000 is an apparatus to which a cooking recipe may be input. For example, the user may select recipe information (e.g., cooking temperature: 180°C to 190°C and time: 30 to 35 seconds) appropriate for an object to be currently cooked and the cooking appliance 1000. In this case, when the user presses a start button, the heating apparatus 2000 may cook the object to be cooked in the cooking appliance 1000 according to the recipe information (e.g., cooking temperature: 180°C to 190°C and time: 30 to 35 seconds).

In operation S1708d, the heating apparatus 2000 may measure a temperature of a bottom surface of the cooking appliance 1000 via a temperature sensor on a top plate of the heating apparatus 2000.

In operation S1709d, the cooking appliance 1000 may measure a side temperature of the cooking appliance 1000 via the first temperature sensor 1041. The first temperature sensor 1041 may indirectly measure an internal temperature of the cooking appliance 1000 by measuring the side temperature of the cooking appliance 1000. In an embodiment of the disclosure, the first temperature sensor 1041 may be connected to the inside of the cooking appliance 1000 through a side of the cooking appliance 1000 to directly measure the internal temperature of the cooking appliance 1000.

In operation S1710d, the cooking appliance 1000 may transmit a value of the measured side temperature or internal temperature of the cooking appliance 1000 to the heating apparatus 2000 via the communication interface 1030. In operation S1711d, the heating apparatus 2000 outputs power (e.g., 800 W) for empty heating determination to the cooking appliance 1000 for a predetermined time period (e.g., 10 seconds). In an embodiment of the disclosure, the heating apparatus 2000 may transmit information about a magnitude of the power for empty heating determination and the certain time period during which the power for empty heating determination is output.

While outputting the power for empty heating determination (e.g., 800 W) for the certain time period (e.g.,10 seconds), in operation S1712d, the heating apparatus 2000 may measure a temperature of the bottom surface of the cooking appliance 1000 via the temperature sensor on the top plate of the heating apparatus 2000, and in operation S1713d, measure a side temperature or an internal temperature of the cooking appliance 1000 via the first temperature sensor 1041. Then, in operation S1714d, the cooking appliance 1000 may transmit a value of the measured side temperature or internal temperature of the cooking appliance 1000 to the heating apparatus 2000 via the communication interface 1030.

In operation S1715d, the heating apparatus 2000 stops heating for a predetermined time period (e.g., 5 seconds) to determine whether empty heating is occurring. While heating is stopped for the certain time period, in operation S1716c, the heating apparatus 2000 may measure a temperature of the bottom surface of the cooking appliance 1000 via the temperature sensor on the top plate of the heating apparatus 2000, and in operation S1717d, transmit the measured temperature of the bottom surface to the cooking appliance 1000. In addition, the cooking appliance 1000 may measure a side temperature or internal temperature of the cooking appliance 1000 via the first temperature sensor 1041 while the heating by the heating apparatus 2000 is stopped. In operation S1718d, the cooking appliance 1000 may determine whether the cooking appliance 1000 undergoes empty heating, based the side temperature or internal temperature of the cooking appliance 1000 and on the temperature of the bottom surface of the cooking appliance 1000, which is received from the heating apparatus 2000. In operation S1723d, when the cooking appliance 1000 determines that the cooking appliance 1000 undergoes empty heating, the cooking appliance 1000 stops the heating via a relay. In an embodiment of the disclosure, when a temperature obtained by subtracting the side temperature or internal temperature of the cooking appliance 1000 from the temperature of the bottom surface of the cooking appliance 1000 continues to increase for the certain time period when the heating is stopped, the cooking appliance 1000 determines that the cooking appliance 1000 undergoes empty heating, or otherwise, when a period in which the temperature obtained by subtracting the side temperature or internal temperature of the cooking appliance 1000 from the temperature of the bottom surface of the cooking appliance 1000 decreases occurs in the certain time period when the heating is stopped, the heating apparatus 2000 determines that the cooking appliance 1000 does not undergo empty heating.

In operation S1719d, the cooking appliance 1000 transmits, to the heating apparatus 2000, a result of determining whether the cooking appliance 1000 undergoes empty heating.

In operation S1720d, the heating apparatus 2000 may receive and obtain the result of the determining whether the cooking appliance 1000 undergoes empty heating from the cooking appliance 1000 via the communication interface 2300.

When it is determined, based on the result of the determination in operation S1720d, that the cooking appliance 1000 does not undergo empty heating, the heating apparatus 2000 supplies power (e.g., 1400 W) corresponding to the user input to the cooking appliance 1000 in operation S1721d, and otherwise, when it is determined that the cooking appliance 1000 undergoes empty heating, the heating apparatus 2000 notifies the user of the empty heating in operation S1722d. In this case, the notification of the empty heating may be made via the output interface 2510 of the heating apparatus 2000. In an embodiment of the disclosure, when the heating apparatus 2000 is connectable to a server or a user's mobile device via communication, the heating apparatus 2000 may notify the server or the user's mobile device that the cooking appliance 1000 undergoes empty heating. The notification of the empty heating may be made via sound, display, as a smartphone notification, or the like.

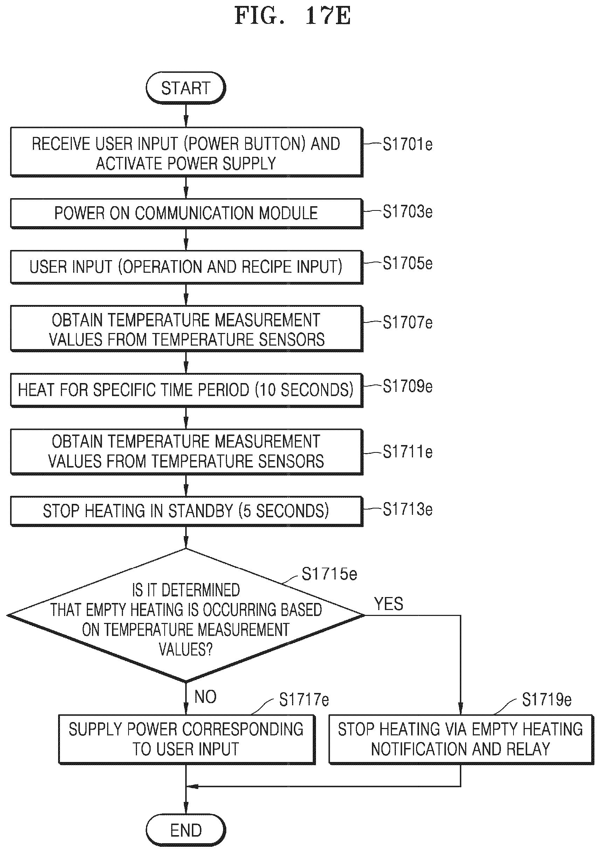

FIG. 17E is a flowchart of a method of determining whether a cooking appliance undergoes empty heating, according to an embodiment of the disclosure.

Referring to FIG. 17E, it is assumed that the cooking appliance 1000 is the wired cooking appliance 1000e as described with reference to FIG. 7B.

In operation S1701e, the cooking appliance 1000 receives a user input. The user input may be an input for pressing a power button to activate the cooking appliance 1000. By receiving the user input, the power supply 1010 of the cooking appliance 1000 may be activated and placed in a heating standby state.

As the power supply 1010 of the cooking appliance 1000 is activated, in operation S1703e, a communication module is also powered on to enable the cooking appliance 1000 to communicate. The wired cooking appliance 1000e may not include the communication module depending on the specifications of the cooking appliance 1000, and thus, operation S1703e may be omitted.

In operation S1705e, a user input for heating the cooking appliance 1000 is performed. The user input in operation S1705e may be a user input for starting a heating operation together with an operation input regarding how the cooking appliance 1000 is to be heated and/or a recipe input. When the cooking appliance 1000 is a cooking appliance 1000 in which a power input operation and a heating operation are not particularly distinguished from each other, the user input in operation S1705e may be omitted because heating is performed immediately as the power of the cooking appliance 1000 is turned on by the user input in operation S1701e.

In operation S1707e, as the sensor unit 1040 is activated, the cooking appliance 1000 obtains temperature measurement values from temperature sensors. As described in the embodiment of the disclosure, the cooking appliance 1000 may measure a temperature of the inside of the cooking appliance 1000 or water via the first temperature sensor 1041 and measure a temperature of a bottom surface of the cooking appliance 1000 via the second temperature sensor 1042. The temperatures may be continuously measured in operation S1707e while the cooking appliance 1000 is being activated, unless a special situation occurs.

In operation S1709e, according to an embodiment of the disclosure, the controller 1020 of the cooking appliance 1000 may control the cooking appliance 1000 to be heated with power for a certain time period (10 seconds) in order to first determine whether the cooking appliance 1000 undergoes empty heating instead of performing a heating operation corresponding to the user input in operation S1705e.

In operation S1711e, the cooking appliance 1000 may obtain temperature measurement values from the temperature sensors when being heated with the power for empty heating determination in operation S1709e. As described above in the embodiment of the disclosure, the cooking appliance 1000 may measure a temperature of the inside of the cooking appliance 1000 or water via the first temperature sensor 1041 and measure a temperature of the bottom surface of the cooking appliance 1000 via the second temperature sensor 1042. However, as described in the previous operation S1707e, unless a special situation occurs, the temperatures may be continuously measured while the cooking appliance 1000 is being activated, and thus, when the temperature measurement already started in operation S1707e continues, the temperature measurement in operation 1711e may be omitted.

In operation S1713e, the controller 1020 of the cooking appliance 1000 stops heating the cooking appliance 1000 for a certain time period (e.g., 5 seconds) and measures a temperature via the first temperature sensor 1041 and/or the second temperature sensor 1042 during the time period.

In operation S1715e, the controller 1020 of the cooking appliance 1000 determines whether the cooking appliance 1000 undergoes empty heating based on the temperature measurement values obtained in the previous operation. In operation S1717e, when it is determined in operation S1715e that the cooking appliance 1000 does not undergo empty heating, the controller 1020 may control the cooking appliance 1000 to supply power corresponding to the user input performed in operation S1705e.

In operation S1719e, when it is determined that the cooking appliance 1000 undergoes empty heating as a result of the determination by the controller 1020 in operation S1715e, the controller 1020 may display a notification that the cooking appliance 1000 undergoes empty heating via the output interface 1051 of the cooking appliance 1000 and control the relay 1007 to stop the heating operation.

FIG. 18 is a flowchart of a method, performed by a heating apparatus, of identifying a location of a cooking appliance, according to an embodiment of the disclosure.

In operation S1810, according to an embodiment of the disclosure, the heating apparatus 2000 may transmit power of a preset first level to the cooking appliance 1000 in order to detect the cooking appliance 1000 capable of communicating therewith. In this case, the heating apparatus 2000 may operate in a small appliance detection mode. The power of the first level is power for driving the communication interface 1030 of the cooking appliance 1000, and may be, for example, 100 W to 300 W.

In operation S1820, according to an embodiment of the disclosure, when receiving the power of the first level from the heating apparatus 2000, the cooking appliance 1000 may activate the communication interface 1030 and transmit a first wireless communication signal. For example, the cooking appliance 1000 may advertise a first wireless communication signal including a first packet at regular intervals by using short-range wireless communication (e.g., Bluetooth, BLE, or the like).

In operation S1830, according to an embodiment of the disclosure, when receiving the first wireless communication signal transmitted via the communication interface 1030 of the cooking appliance 1000, the heating apparatus 2000 may transmit power to a plurality of cooking zones according to a plurality of different power transmission patterns.

According to an embodiment of the disclosure, the first packet included in the first wireless communication signal transmitted from the cooking appliance 1000 may not include location information of the cooking appliance 1000. In this case, the heating apparatus 2000 may not accurately identify which cooking zone the cooking appliance 1000 is located on. Therefore, to identify the location of the cooking appliance 1000, the heating apparatus 2000 may control the inverter circuit 2113 to output power according to a different power transmission pattern for each cooking zone. For example, when the heating apparatus 2000 includes three cooking zones, i.e., first to third cooking zones, the heating apparatus 2000 may control the inverter circuit 2113 to output power according to a first power transmission pattern via a first working coil corresponding to the first cooking zone, to output power according to a second power transmission pattern via a second working coil corresponding to the second cooking zone, and to output power according to a third power transmission pattern via a third working coil corresponding to the third cooking zone.

According to an embodiment of the disclosure, when the second type cooking appliance 1000b (a small appliance) is usable only on some of the plurality of cooking zones, the heating apparatus 2000 may output power from the some of the cooking zones according to a particular power transmission pattern. For example, when the heating apparatus 2000 includes the three cooking zones, but the second type cooking device 1000b is usable only on the first and third cooking zones, the heating apparatus 2000 may control the inverter circuit 2113 to output power according to the first power transmission pattern via the first working coil corresponding to the first cooking zone, to output power according to the third power transmission pattern via the third working coil corresponding to the third cooking zone, and not to output power according to the second power transmission pattern via the second working coil corresponding to the second cooking zone.

In operation S1830, according to an embodiment of the disclosure, when detecting the first wireless communication signal, the heating apparatus 2000 may control the inverter circuit 2113 so that the plurality of working coils 2120 respectively corresponding to the plurality of cooking zones generate magnetic fields according to the plurality of different power transmission patterns.

According to an embodiment of the disclosure, the first packet included in the first wireless communication signal transmitted from the cooking appliance 1000 may not include location information of the cooking appliance 1000. In this case, the heating apparatus 2000 may not accurately identify which cooking zone the cooking appliance 1000 is located on. Therefore, to identify the location of the cooking appliance 1000, the heating apparatus 2000 may control the inverter circuit 2113 to output power according to a different power transmission pattern for each cooking zone. For example, when the heating apparatus 2000 includes three cooking zones, i.e., first to third cooking zones, the heating apparatus 2000 may control the inverter circuit 2113 to output power according to a first power transmission pattern via a first working coil corresponding to the first cooking zone, to output power according to a second power transmission pattern via a second working coil corresponding to the second cooking zone, and to output power according to a third power transmission pattern via a third working coil corresponding to the third cooking zone.

The plurality of power transmission patterns may be each set differently based on at least one of a duration of a power transmission interval, a duration of a power cut-off interval, or a power level.

In operation S1840, according to an embodiment of the disclosure, the cooking appliance 1000 may transmit a second wireless communication signal including identification information about the cooking appliance 1000. In this case, when detecting a particular power transmission pattern, the cooking appliance 1000 may transmit, to the heating apparatus 2000, information about a cooking zone corresponding to the particular power transmission pattern as location information of the cooking appliance 1000, together with identification information about the cooking appliance 1000. For example, the heating apparatus 2000 may advertise a second packet including both location information of the cooking appliance 1000 and identification information thereof. On the other hand, when the cooking appliance 1000 does not detect the particular power transmission pattern, the cooking appliance 1000 may advertise a second packet that does not include the location information of the cooking appliance 1000 but includes only the identification information about the cooking appliance 1000 at certain intervals.

In operation S1850, according to an embodiment of the disclosure, the heating apparatus 2000 may determine whether location information of the cooking appliance 1000 is included in the second wireless communication signal. For example, the heating apparatus 2000 may determine whether the second packet received from the cooking appliance 1000 includes information about a cooking zone where the cooking appliance 1000 is located.

In operation S1860, according to an embodiment of the disclosure, when the location information of the cooking appliance 1000 is not included in the second wireless communication signal, the heating apparatus 2000 may output a notification indicating that a location of the cooking appliance 1000 should be checked.

When the heating apparatus 2000 receives the second wireless communication signal but the second wireless communication signal does not include the location information of the cooking appliance 1000, the cooking appliance 1000 may be misplaced and fail to detect the particular power transmission pattern despite being the second type cooking appliance 1000b (a small appliance) capable of communicating, and thus, the heating apparatus 2000 may output a notification indicating that the location of the cooking appliance 1000 should be checked. For example, when an area where the cooking appliance 1000 is placed overlaps a part of the first cooking zone, the cooking appliance 1000 may not accurately detect the first power transmission pattern corresponding to the first cooking zone.

According to an embodiment of the disclosure, the heating apparatus 2000 may also display a notification that the location of the cooking appliance 1000 should be checked on the display or output the notification as an audio. After outputting the notification indicating that the location of the cooking appliance 1000 should be checked, the heating apparatus 2000 returns to operation S1830 to transmit power again from the plurality of cooking zones according to the plurality of different power transmission patterns.

In operation S1870, according to an embodiment of the disclosure, when the second wireless communication signal includes the location information of the cooking appliance 1000, the heating apparatus 2000 may output information about a first cooking zone where the cooking appliance 1000 is located and the identification information about the cooking appliance 1000. For example, the heating apparatus 2000 may indicate that the cooking appliance 1000 is located on the first cooking zone by displaying the identification information about the cooking appliance 1000 in a region where a power level of the first cooking zone is displayed on a GUI.

In operation S1870, according to an embodiment of the disclosure, the heating apparatus 2000 may output, based on the second wireless communication signal, information about the first cooking zone where the cooking appliance 1000 is located among the plurality of cooking zones (hereinafter, referred to as location information of the cooking appliance 1000) and the identification information about the cooking appliance 1000.

According to an embodiment of the disclosure, the heating apparatus 2000 may display the identification information about the cooking appliance 1000 in the form of a text or image on the display. For example, the heating apparatus 2000 may display a text representing a name or type of the cooking appliance 1000 or an icon image of the cooking appliance 1000. According to an embodiment of the disclosure, the heating apparatus 2000 may output the identification information about the cooking appliance 1000 as a voice via the audio output interface.

Moreover, according to an embodiment of the disclosure, the heating apparatus 2000 may indicate that the cooking appliance 1000 is located on the first cooking zone by displaying the identification information about the cooking appliance 1000 at a location where a power level of the first cooking zone is displayed on a GUI. For example, when the cooking appliance 1000 is a smart pot, and the smart pot is placed on a lower left cooking zone, the heating apparatus 2000 may display an icon image of the smart pot at a lower left of the GUI. According to an embodiment of the disclosure, the heating apparatus 2000 may output the information about the first cooking zone where the cooking appliance 1000 is located (location information of the cooking appliance 1000) as a voice via the audio output interface.

In operation S1880, according to an embodiment of the disclosure, the heating apparatus 2000 may operate in a power transmission standby mode. For example, when receiving, from the cooking appliance 1000, the second wireless communication signal including the information about the first cooking zone and the identification information about the cooking appliance 1000, the heating apparatus 2000 may operate in a power transmission standby mode for transmitting power to the cooking appliance 1000.

According to an embodiment of the disclosure, the power transmission standby mode may be a mode in which the heating apparatus 2000 waits for a user input for requesting transmission of power to the cooking appliance 1000. The user input for requesting transmission of power to the cooking appliance 1000 may include various types of inputs, such as an input for pressing an operation button, an input for selecting a menu, an input for adjusting a temperature, an input for selecting a particular recipe, an input for selecting a power level, or the like. After operation S1880, an operation for determining empty heating illustrated in FIG. 17A may be subsequently performed. Although the embodiment of the disclosure in which a cooking zone where the cooking appliance 1000 is located and the cooking appliance 1000 are identified has been described with reference to FIG. 18, operations in embodiments of the disclosure in FIG. 18 and FIGS. 19 to 24 below may be merely optional, and may not be considered essential when determining empty heating.

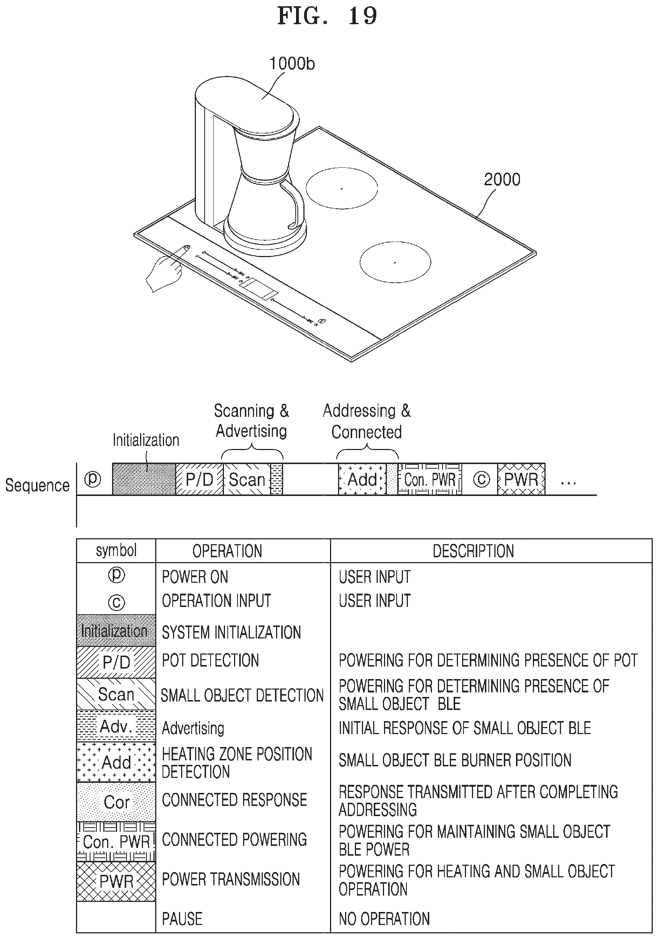

FIG. 19 is a diagram illustrating an operation of a heating apparatus when a cooking appliance (a small appliance) is placed on the heating apparatus, according to an embodiment of the disclosure.

Referring to FIG. 19, when the user turns on the heating apparatus 2000 while the second type cooking appliance 1000b is placed on the top plate of the heating apparatus 2000, the heating apparatus 2000 may initialize a system including the heating apparatus 2000 and perform an IH vessel detection operation (a pot detection operation). In this case, when the second-type cooking appliance 1000b is the 2-1-type cooking appliance 1000b-1 including a magnetic material, the heating apparatus 2000 may use a current sensor to detect that the 2-1 type cooking appliance 1000b-1 is placed on the top plate. On the other hand, when the second-type cooking appliance 1000b is the 2-2-type cooking appliance 1000b-2 including the reception coil 1003, the heating apparatus 2000 may not detect that the 2-2 type cooking appliance 1000b-2 is placed on the top plate by using a current sensor.

The heating apparatus 2000 may perform a small appliance detection operation (a small object detection operation) after performing the IH vessel detection operation. For example, the heating apparatus 2000 may transmit, to the second type cooking appliance 1000b, power of a first level for driving the communication interface 1030 of the second type cooking appliance 1000b and operate in a scan mode. When receiving the power of the first level, the second type cooking appliance 1000b may drive the communication interface 1030 and advertise a first packet. The heating apparatus 2000 operating in the scan mode may recognize that the second type cooking appliance 1000b is located on the top plate by receiving the first packet advertised by the second type cooking appliance 1000b.

However, when the first packet does not include information about a cooking zone where the second type cooking appliance 1000b is located, the heating apparatus 2000 may operate in a cooking zone determination mode to determine a location of the second type cooking appliance 1000b. For example, the heating apparatus 2000 may output power according to a different power transmission pattern for each cooking zone. In this case, because the second type cooking appliance 1000b is placed on a lower left cooking zone, the second type cooking appliance 1000b may detect a particular power transmission pattern corresponding to the lower left cooking zone. The second type cooking appliance 1000b may recognize that the second type cooking appliance 1000b is located on the lower left cooking zone by comparing each of a plurality of prestored power transmission patterns from the heating apparatus 2000 with the particular power transmission pattern. In this case, the second type cooking appliance 1000b may transmit (e.g., address), to the heating apparatus 2000, a second packet including information indicating that the second type cooking appliance 1000b is located on the lower left cooking zone and identification information about the second type cooking appliance 1000b. In this case, the second packet may further include communication connection information.

The heating apparatus 2000 may establish a communication connection with the second type cooking appliance 1000b based on the communication connection information included in the second packet. In a case where the second type cooking appliance 1000b has been previously paired with the heating apparatus 2000, the communication connection information may include pairing information. According to an embodiment of the disclosure, the heating apparatus 2000 may establish a short-range wireless communication channel (e.g., a Bluetooth communication channel or a BLE communication channel) with the second type cooking appliance 1000b. Establishing a Bluetooth communication channel may mean enabling the second type cooking appliance 1000b and the heating apparatus 2000 to transmit and receive data by using a Bluetooth communication method. The BLE communication channel may be a connectionless virtual communication channel where the second type cooking appliance 1000b and the heating apparatus 2000 transmit and receive advertising packets via mutual scanning, or may be a connection-based communication channel where a session is created using a BLE connection request from the heating apparatus 2000.

When the heating apparatus 2000 has established the communication connection with the second type cooking appliance 1000b, the heating apparatus 2000 may control the inverter circuit 2113 to transmit, to the pickup coil 1001 of the second type cooking appliance 1000b, power of the first level for maintaining the communication connection with the second type cooking appliance 1000b. In this case, when an operation command (e.g., coffee extraction start, automatic cooking start, heating, keeping warm, or the like) is received from the user, the heating apparatus 2000 may control the inverter circuit 2113 to transmit power of a second level for operating the second type cooking appliance 1000b to the second type cooking appliance 1000b. The power of the second level may be power for driving a load (e.g., a heater, a motor, a battery, or the like) of the second type cooking appliance 1000b.

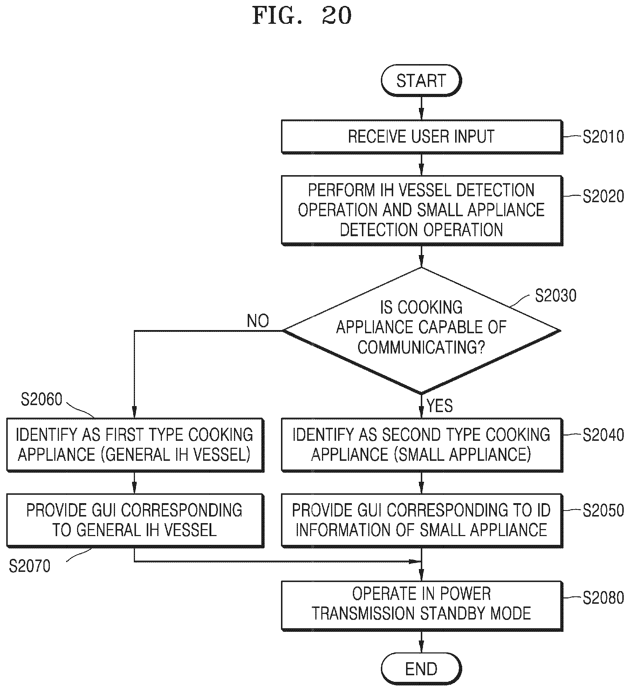

FIG. 20 is a flowchart of a method, performed by a heating apparatus, of providing a GUI according to identification information about a cooking appliance, according to an embodiment of the disclosure.

In operation S2010, the heating apparatus 2000 receives a user input. The user input may be an input for pressing a power button of the heating apparatus 2000, but is not limited thereto.

In operation S2020, according to an embodiment of the disclosure, the heating apparatus 2000 may perform an IH vessel detection operation and a small appliance detection operation.

For example, the heating apparatus 2000 may detect the first type cooking appliance 1000a and the 2-1 type cooking appliance 1000b-1, each including magnetic material, by transmitting power for detecting an IH vessel and then detecting a current value of a working coil. In addition, the heating apparatus 2000 may detect the second type cooking appliance 1000b capable of communicating therewith (e.g., the 2-1 type cooking appliance 1000b-1 and the 2-2 type cooking appliance 1000b-2) by transmitting power for driving the communication interface 1030 of the cooking appliance 1000 and detecting a wireless communication signal transmitted from the cooking appliance 1000. In this case, power for detecting the IH vessel may be less than power for driving the communication interface 1030 of the cooking appliance 1000.

According to an embodiment of the disclosure, the heating apparatus 2000 may perform the small appliance detection operation after first performing the IH vessel detection operation, or perform the IH vessel detection operation after performing the small appliance detection operation. Furthermore, the order of such operations may be determined by a user's selection. For example, in a case where the user purchases the heating apparatus 2000 to mainly use it with the second type cooking appliance 1000b (a small appliance) capable of communicating, the user may set the order of the detection operations so that the heating apparatus 2000 first performs the small appliance detection operation. The user may set the order of the IH vessel detection operation and the small appliance detection operation via the user interface 2500 of the heating apparatus 2000 or via a mobile terminal connected to the heating apparatus 2000 with the same account.

In operations S2030 and S2040, when the cooking appliance 1000 placed on a top plate is capable of communicating, the heating apparatus 2000 may identify the cooking appliance 1000 as being the second type cooking appliance 1000b (a small appliance).

In operation S2050, when the cooking appliance 1000 is identified as the second type cooking appliance 1000b, the heating apparatus 2000 may provide a GUI corresponding to identification information about the second type cooking appliance 1000b (a small appliance). Because the second type cooking appliance 1000b may include various small appliances, such as a kettle, a toaster, a rice cooker, a coffee machine, a blender, or the like, the heating apparatus 2000 may provide various types of GUIs corresponding to pieces of identification information about small appliances.

In operations S2030 and S2060, when the cooking appliance 1000 includes a magnetic material but is not capable of communicating with the heating apparatus 2000, the heating apparatus 2000 may identify the cooking appliance 1000 located on the top plate of the heating apparatus 2000 as being the first type cooking appliance 1000a (a general IH vessel). When the cooking appliance 1000 includes a magnetic material but is not capable of communicating, the heating apparatus 2000 identifies the cooking appliance 1000 as being a cooking appliance not capable of determining empty heating. On the other hand, the heating apparatus 2000 may identify the cooking appliance 1000 placed on the top plate of the heating apparatus 2000 as being the second type cooking appliance 1000b. The heating apparatus 2000 identifies the identified second type cooking appliance 1000b as being a cooking appliance capable of determining empty heating.

In operation S2070, when the cooking appliance 1000 is identified as the first type cooking appliance 1000a, the heating apparatus 2000 may provide a GUI corresponding to a general IH vessel. For example, instead of displaying identification information corresponding to the cooking appliance 1000 on the display, the heating apparatus 2000 may display an initial power level in a region corresponding to a cooking zone where the cooking appliance 1000 is located. In addition, the heating apparatus 2000 may output a notification indicating that a general IH vessel has been detected.

In operation S2080, the heating apparatus 2000 may operate in a power transmission standby mode while providing a GUI corresponding to the cooking appliance 1000.

According to an embodiment of the disclosure, the power transmission standby mode may be a mode in which the heating apparatus 2000 waits for a user input for transmitting power to the cooking appliance 1000. The user input for transmitting power to the cooking appliance 1000 may include various types of inputs, such as an input for pressing an operation button, an input for selecting a menu, an input for adjusting a temperature, an input for selecting a particular recipe, an input for selecting a power level, or the like.

Moreover, when the cooking appliance 1000 is the second type cooking appliance 1000b, the heating apparatus 2000 may continuously transmit, to the cooking appliance 1000, power for maintaining driving of the communication interface 1030 of the cooking appliance 1000 in the power transmission standby mode.

According to an embodiment of the disclosure, the heating apparatus 2000 may identify a type of the cooking appliance 1000 that wirelessly receives power as well as whether the cooking appliance 1000 is a cooking appliance requiring determination as to empty heating by performing the IH vessel detection operation and the small appliance detection operation together even when the user does not input the type of the cooking appliance 1000.

When identification as to the type of the cooking appliance 1000 is completed, whether the cooking appliance 1000 undergoes empty heating may be determined using the methods illustrated in FIGS. 17A to 17D.

Hereinafter, an operation in which the heating apparatus 2000 outputs a GUI is described.

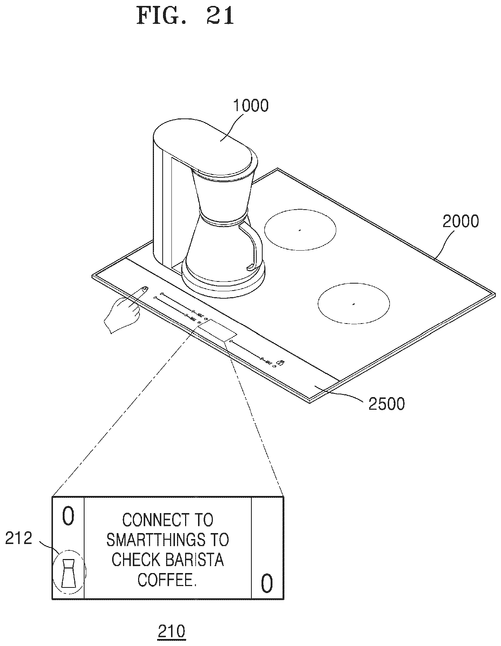

FIG. 21 is a diagram illustrating an operation of providing a GUI according to identification information about a cooking appliance and whether a cooking appliance undergoes empty heating, according to an embodiment of the disclosure.

Referring to 210 of FIG. 21, when a heating apparatus 2000 may detect a cooking appliance 1000 placed on a second cooking zone (a cooking zone at a lower left), and determines that the cooking appliance 1000 undergoes empty heating according to the methods illustrated in FIGS. 17A to 17D, the heating apparatus 2000 may display, on a user interface 2500, location information and identification information about the cooking appliance 1000 and whether the cooking appliance 1000 undergoes empty heating. For example, when the cooking appliance 1000 is a coffee machine, the heating apparatus 2000 may indicate that the coffee machine is located on the second cooking zone (the cooking zone at the lower left) by displaying a coffee machine icon 212 at a location corresponding to the second cooking zone (the cooking zone at the lower left). In addition, when the coffee machine undergoes empty heating without water inside, the heating apparatus 2000 may notify the user that the coffee machine undergoes empty heating by displaying the coffee machine icon 212 flashing on or off. Alternatively, the heating apparatus 2000 may output the location information and the identification information about the cooking appliance 1000 and information indicating whether the cooking appliance 1000 undergoes empty heating in the form of a text notification (e.g., "The coffee machine in cooking zone 1 undergoes empty heating") and an audio notification. Alternatively, the heating apparatus 2000 may notify the user that the coffee machine undergoes empty heating via an operation of displaying a circular graphic around the coffee machine icon 212 flashing on or off. In an embodiment of the disclosure, the user may be notified that the coffee machine undergoes empty heating via combinations of various methods.

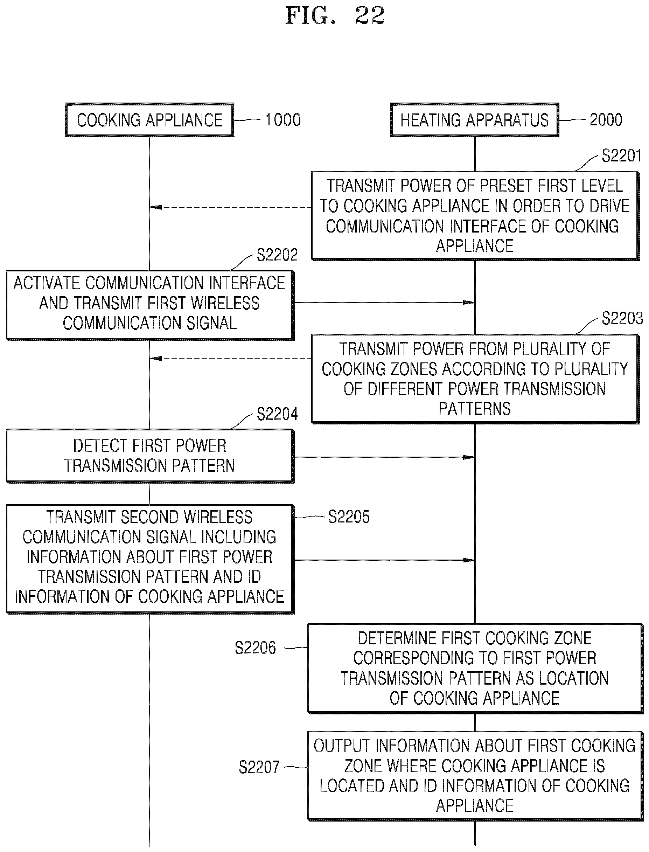

FIG. 22 is a flowchart of a method, performed by a heating apparatus, of determining a location of a cooking appliance, according to an embodiment of the disclosure.

In operation S2201, according to an embodiment of the disclosure, the heating apparatus 2000 may transmit power of a preset first level to the cooking appliance 1000 in order to drive the communication interface 1030 of the cooking appliance 1000. In this case, the heating apparatus 2000 may operate in a small appliance detection mode. The power of the first level is power for driving the communication interface 1030 of the cooking appliance 1000, and may be, for example, 100 W to 300 W.

In operation S2202, according to an embodiment of the disclosure, when receiving the power of the first level from the heating apparatus 2000, the cooking appliance 1000 may activate the communication interface 1030 and transmit a first wireless communication signal. For example, the cooking appliance 1000 may advertise the first wireless communication signal including a first packet at regular intervals by using short-range wireless communication (e.g., Bluetooth, BLE, or the like).

In operation S2203, according to an embodiment of the disclosure, when receiving the first wireless communication signal transmitted via the communication interface 1030 of the cooking appliance 1000, the heating apparatus 2000 may transmit power at a plurality of cooking zones according to a plurality of different power transmission patterns.

According to an embodiment of the disclosure, the first packet included in the first wireless communication signal transmitted from the cooking appliance 1000 may not include location information of the cooking appliance 1000. In this case, the heating apparatus 2000 may not accurately identify which cooking zone the cooking appliance 1000 is located on. Therefore, to identify the location of the cooking appliance 1000, the heating apparatus 2000 may control the inverter circuit 2113 to output power according to a different power transmission pattern for each cooking zone. For example, when the heating apparatus 2000 includes three cooking zones, i.e., first to third cooking zones, the heating apparatus 2000 may control the inverter circuit 2113 to output power according to a first power transmission pattern via a first working coil corresponding to the first cooking zone, to output power according to a second power transmission pattern via a second working coil corresponding to the second cooking zone, and to output power according to a third power transmission pattern via a third working coil corresponding to the third cooking zone. Because operation S2203 corresponds to operation S1830 of FIG. 18, descriptions already provided above will be omitted here.

In operation S2204, according to an embodiment of the disclosure, the cooking appliance 1000 may detect a first power transmission pattern. According to an embodiment of the disclosure, the cooking appliance 1000 may analyze a voltage output from the rectifier of the cooking appliance 1000 to detect one of a plurality of power transmission patterns. For example, when the cooking appliance 1000 is located on the first cooking zone, the cooking appliance 1000 may analyze a first voltage output from the rectifier to detect a first power transmission pattern in which a duration of a power transmission interval T1 is 3 seconds and a duration of a power cut-off interval T2 is 1 second.

In operation S2205, according to an embodiment of the disclosure, the cooking appliance 1000 may transmit a second wireless communication signal including information about the first power transmission pattern and identification information about the cooking appliance 1000.

The information about the first power transmission pattern may include, but is not limited to, at least one of an identification value of the first power transmission pattern, a duration of a power transmission interval, a duration of a power cut-off interval, or a power level. The identification information about the cooking appliance 1000 is unique information for identifying the cooking appliance 1000, and may include, but is not limited to, at least one of a MAC address, a model name, appliance type information (e.g., an IH type ID, a heater type ID, and a motor type ID), manufacturer information (e.g., a manufacturer ID), a serial number, or a manufacturing date.

In operation S2206, according to an embodiment of the disclosure, the heating apparatus 2000 may determine, based on the second wireless communication signal, a first cooking zone corresponding to the first power transmission pattern to be a location of the cooking appliance 1000. For example, the heating apparatus 2000 may determine the information about the first power transmission pattern included in the second wireless communication signal and compare the first power transmission pattern with information about a plurality of prestored power transmission patterns to thereby identify a first cooking zone corresponding to the first power transmission pattern. In this case, the heating apparatus 2000 may determine that the cooking appliance 1000 that has detected the first power transmission pattern is located in the first cooking zone.

According to an embodiment of the disclosure, when the second wireless communication signal does not include information about a particular power transmission pattern, the heating apparatus 2000 may output a notification indicating that the location of the cooking appliance 1000 should be checked. For example, when the heating apparatus 2000 receives the second wireless communication signal but the second wireless communication signal does not include a particular power transmission pattern, this may be because the cooking appliance 1000 is misplaced and fails to detect the particular power transmission pattern despite being a cooking appliance capable of communicating, and thus, the heating apparatus 2000 may output a notification indicating that the location of the cooking appliance 1000 should be checked.

According to an embodiment of the disclosure, the heating apparatus 2000 may also display the notification that the location of the cooking appliance 1000 should be checked on the display or output the notification as a voice. After outputting the notification indicating that the location of the cooking appliance 1000 should be checked, the heating apparatus may transmit power again from the plurality of cooking zones according to the plurality of different power transmission patterns.

In operation S2207, the heating apparatus 2000 may output information about the first cooking zone where the cooking appliance 1000 is located and the identification information about the cooking appliance 1000. For example, the heating apparatus 2000 may indicate that the first cooking appliance 1000 is located on the first cooking zone by displaying the identification information about the cooking appliance 1000 in a region where a power level of the first cooking zone is displayed on a GUI. Because operation S2207 corresponds to operation S1870 of FIG. 18, descriptions already provided above will be omitted here.

Moreover, according to an embodiment of the disclosure, the heating device 2000 may identify the location of the cooking appliance 1000 by using an NFC function instead of a power transmission pattern. For example, each of the heating apparatus 2000 and the cooking appliance 1000 may have the communication coil 1002 (or 2001) and an NFC module (an NFC chip) therein. The communication coil 1002 (2001) may be an NFC antenna coil, and the NFC module may include a circuitry for NFC communication. Moreover, when the heating apparatus 2000 includes a plurality of cooking zones, an NFC antenna coil may be arranged in each of the plurality of cooking zones.

According to an embodiment of the disclosure, an NFC antenna coil included in the heating apparatus 2000 may be arranged at a position corresponding to a position of an NFC antenna coil included in the cooking appliance 1000. For example, when an NFC antenna coil included in the heating apparatus 2000 is arranged in a central portion of each of the cooking zones, an NFC antenna coil included in the cooking appliance 1000 may also be arranged in a bottom central portion of the cooking appliance 1000. In another example, when an NFC antenna coil included in the heating apparatus 2000 is arranged at an edge (e.g., outside the transmission coil), an NFC antenna coil in the cooking appliance 1000 may also be arranged at a bottom edge of the cooking appliance 1000.

According to an embodiment of the disclosure, an NFC antenna coil included in the heating apparatus 2000 may be arranged at an edge of each of the cooking zones while an NFC antenna coil included in the cooking appliance 1000 may be arranged in a bottom central portion of the cooking appliance 1000. On the other hand, the NFC antenna coil included in the heating apparatus 2000 may be arranged in a central portion of each cooking zone while the NFC antenna coil included in the cooking appliance 1000 may be arranged at a bottom edge of the cooking appliance 1000.

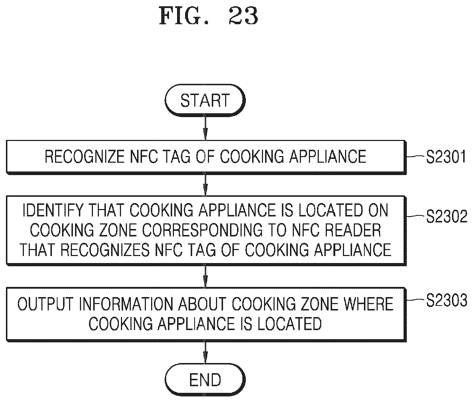

Moreover, an NFC module included in each of the heating apparatus 2000 and the cooking appliance 1000 may operate as an NFC tag or an NFC reader depending on the circumstances. An embodiment of the disclosure in which an NFC module of the heating apparatus 2000 operates as an NFC reader and an NFC module of the cooking appliance 1000 operates as an NFC tag is first described with reference to FIG. 23.

FIG. 23 is a flowchart of a method, performed by a heating apparatus, of identifying a location of a cooking appliance by using an NFC tag embedded in the cooking appliance, according to an embodiment of the disclosure.

In operation S2301, the heating apparatus 2000 may recognize an NFC tag of the cooking appliance 1000. When the heating apparatus 2000 includes a plurality of cooking zones, an NFC reader may be provided for each of the plurality of cooking zones. Each of an NFC reader and an NFC tag may include an NFC antenna coil. According to an embodiment of the disclosure, when the cooking appliance 1000 is placed on a cooking zone, one of a plurality of NFC readers respectively corresponding to the plurality of cooking zones may recognize an NFC tag of the cooking appliance 1000. For example, when the cooking appliance 1000 is placed on a first cooking zone, a first NFC reader provided in the first cooking zone may recognize the NFC tag of the cooking appliance 1000. For example, when the cooking appliance 1000 is placed on the first cooking zone, a distance between an NFC antenna coil included in the first cooking zone and an NFC antenna coil in the cooking appliance 1000 is less than a certain distance (e.g.,10 cm), and accordingly, the first NFC reader of the heating apparatus 2000 may recognize the NFC tag of the cooking appliance 1000.

Recognizing the NFC tag may include receiving information stored in the NFC tag. For example, the heating apparatus 2000 may obtain information stored in the NFC tag of the cooking appliance 1000 by recognizing the NFC tag of the cooking appliance 1000. According to an embodiment of the disclosure, the NFC tag of the cooking appliance 1000 may store prearranged simple information so that the heating apparatus 2000 may recognize the cooking appliance 1000. For example, the NFC tag of the cooking appliance 1000 may include identification information representing a type of the cooking appliance 1000.

In operation S2302, the heating apparatus 2000 may identify that the cooking appliance 1000 is located on a cooking zone corresponding to an NFC reader that recognizes the NFC tag of the cooking appliance 1000. NFC is a contactless wireless communication technology that uses a frequency of 13.56 megahertz (MHz) for exchange of data over a short distance below 10 cm. Therefore, when the first NFC reader among the plurality of NFC readers recognizes the NFC tag of the cooking appliance 1000, the heating apparatus 2000 may determine that the cooking appliance 1000 is located near the first NFC reader (i.e., on the first cooking zone where the first NFC reader is provided).

In operation S2303, the heating apparatus 2000 may output information about the cooking zone where the cooking appliance 1000 is located. In addition, the heating apparatus 2000 may also output identification information about the cooking appliance 1000 obtained from the NFC tag of the cooking appliance 1000. For example, the heating apparatus 2000 may indicate that the cooking appliance 1000 is located on the first cooking zone by displaying the identification information (e.g., an icon) about the cooking appliance 1000 in a region where a power level of the first cooking zone is displayed on a GUI.

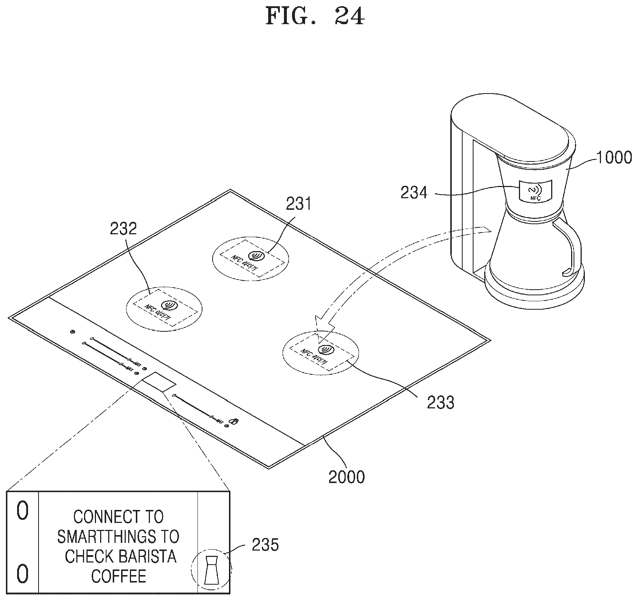

The operation in which the heating apparatus 2000 identifies the location of the cooking appliance 1000 by using the NFC tag included in the cooking appliance 1000 is described with reference to FIG. 24.

FIG. 24 is a diagram illustrating an operation in which a heating apparatus identifies a location of a cooking appliance by using an NFC tag included in the cooking appliance, according to an embodiment of the disclosure. An example in which the cooking appliance 1000 is a coffee machine is described with reference to FIG. 24.

Referring to FIG. 24, the heating apparatus 2000 may include a first NFC reader 231 on a first cooking zone at an upper left and a second NFC reader 232 on a second cooking zone at a lower left, and a third NFC reader 233 may be included on a third cooking zone at a right center. The first NFC reader 231, the second NFC reader 232, and the third NFC reader 233 may be disposed on or beneath the top plate (tempered glass) of the heating apparatus 2000. In addition, the first NFC reader 231, the second NFC reader 232, and the third NFC reader 233 may be each arranged at a central portion of each cooking zone or at an edge of each cooking zone. Each of the first NFC reader 231, the second NFC reader 232, and the third NFC reader 233 may include an NFC antenna coil.

When the user places the cooking appliance 1000 on the third cooking zone at the right center and presses a power button, the third NFC reader 233 of the heating apparatus 2000 may recognize an NFC tag 234 of the cooking appliance 1000 and transmit a recognition result to the processor 2200. For example, because the third NFC reader 233 is located within a certain distance (e.g., 10 cm) from the NFC tag 234, the third NFC reader 233 may obtain identification information (e.g., product type (coffee machine) information) of the cooking appliance 1000 stored in the NFC tag 234 and transmit the obtained identification information about the cooking appliance 1000 to the processor 2200.

Because the third NFC reader 233 recognizes the NFC tag 234 of the cooking appliance 1000, the processor 2200 of the heating apparatus 2000 may identify that the cooking appliance 1000 is located on the third cooking zone where the third NFC reader 2323 is arranged. Furthermore, the processor 2200 of the heating apparatus 2000 may identify whether the cooking appliance 1000 is the first type cooking appliance 1000a or the second type cooking appliance 1000b, based on the identification information (e.g., product type (coffee machine) information) of the cooking appliance 1000.

The heating apparatus 2000 may output, via the user interface 2500, location information of the cooking appliance 1000, identification information about the cooking appliance 1000, and information indicating whether the cooking appliance 1000 undergoes empty heating. For example, when the cooking appliance 1000 is a coffee machine that is the second type cooking appliance 1000b, the heating apparatus 2000 may indicate that the coffee machine is located on the third cooking zone (the cooking zone at the right center) by displaying a coffee machine icon 235 at a location corresponding to the third cooking zone (the cooking zone at the right center). In addition, when the coffee machine undergoes empty heating, the heating apparatus 2000 may output a notification, e.g., "The coffee machine on cooking zone 3 undergoes empty heating".

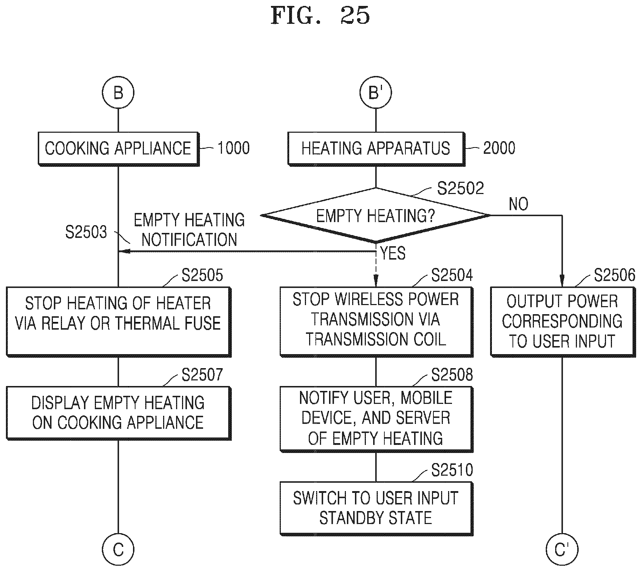

FIG. 25 is a flowchart illustrating operations between a heating apparatus and a cooking appliance when it is determined that the cooking appliance undergoes empty heating, according to an embodiment of the disclosure.

Operations illustrated in the flowchart of FIG. 25 may be performed after the method of determining empty heating in the flowchart of FIG. 17A. Alternatively, operations of the cooking appliance 1000 may be performed after the methods illustrated in FIGS. 17B to 17D.

In operation S2502, the heating apparatus 2000 determines whether the cooking appliance 1000 undergoes empty heating according to the methods of determining empty heating as described above with reference to FIGS. 17A to 17D. When determining that the cooking appliance 1000 undergoes empty heating, in operation S2503, the processor 2200 of the heating apparatus 2000 notifies the cooking appliance 1000 that the cooking appliance 1000 undergoes empty heating.

When it is determined in operation S2502 that the cooking appliance 1000 does not undergo empty heating, power is output corresponding to a user input in operation S2506. However, when receiving the notification of the empty heating, in operation S2505, the cooking appliance 1000 stops heating a heater via the relay 1007 or the thermal fuse 1008 to prevent the heater from overheating due to the empty heating. In addition, in operation S2507, when the cooking appliance 1000 is capable of displaying information or outputting audio, the cooking appliance 1000 may notify the user that the cooking appliance 1000 undergoes empty heating by displaying 'empty heating' or outputting this information as an audio.

In addition, when it is determined in operation S2502 that the cooking appliance 1000 undergoes empty heating, in operation S2504, the processor 2200 of the heating apparatus 2000 performs control to stop wireless power transmission via the transmission coil 2120.

In operation S2508, the processor 2200 of the heating apparatus 2000 may output information indicating that the cooking appliance 1000 undergoes empty heating via the output interface 2510. According to an embodiment of the disclosure, the processor 2200 may output, on the output interface 2510, a type of the cooking appliance 1000 undergoing empty heating as well as information indicating on which cooking zone the cooking appliance 1000 is placed. Optionally, the processor 2200 of the heating apparatus 2000 may notify a registered mobile device that the cooking appliance 1000 undergoes empty heating via the communication interface 2300. In addition, the processor 2200 may notify the registered mobile device that the cooking appliance 1000 undergoes empty heating via the communication interface 2300, together with the type of the cooking appliance 1000 and information indicating on which cooking zone the cooking appliance 1000 is placed. Optionally, the processor 2200 of the heating apparatus 2000 may notify a registered remote server that the cooking appliance 1000 undergoes empty heating via the communication interface 2300. In addition, the processor 2200 may perform control to notify the registered remote server that the cooking appliance 1000 undergoes empty heating via the communication interface 2300, together with the type of the cooking appliance 1000 and information indicating on which cooking zone the cooking appliance 1000 is placed.

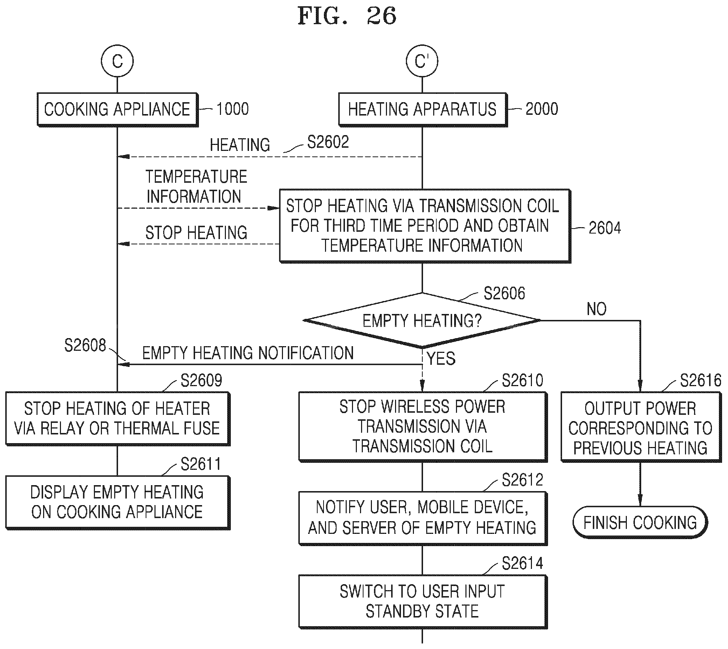

FIG. 26 is a flowchart of a method, performed by a heating apparatus, of determining empty heating while reheating a cooking appliance, according to an embodiment of the disclosure.

Referring to FIG. 26, in operation S2602, the heating apparatus 2000 continues to heat the cooking appliance 1000. Even after the heating apparatus 2000 initially determines empty heating when starting an operation according to a user input or even when determination as to empty heating is not performed upon starting an operation, the determination as to empty heating may be performed during heating as illustrated in FIG. 26. Determination as to empty heating may be performed during heating in a situation where all the water in the cooking appliance 1000 evaporates during heating or where the user removes water or an object being cooked from the cooking appliance 1000 and places the cooking appliance 1000 back on the heating apparatus 2000 after cooking is finished, but the determination as to empty heating during heating is not limited thereto.

In operation S2604, the heating apparatus 2000 stops heating for a third time period during heating of the cooking appliance 1000 via the transmission coil 2120. During heating and while the heating is stopped for the third time period, the heating apparatus 2000 may continuously obtain temperature information via the first temperature sensor 1041 for measuring an internal temperature of the cooking appliance 1000 and the second temperature sensor 1042 attached to the bracket 1034 to measure a temperature of the heater 1014. In order to save resources, the heating apparatus 2000 may selectively obtain the temperature information only for the third time period, or only for a period including a certain time (3 seconds) immediately before the start of the third time period and the third time period.

In operation S2606, the processor 2200 of the heating apparatus 2000 determines whether the cooking appliance 1000 undergoes empty heating based on a relationship between a temperature of an object being cooked (water) and a temperature of the heater 1014. The empty heating may be determined using the same method as described with reference to FIG. 12. The processor 2200 of the heating apparatus 2000 stops transmission of an output power to the cooking appliance 1000 during the third time period (the interval between t₃ and t₄ of FIG. 12) in order to determine whether the cooking appliance 1000 undergoes empty heating. A length of the third time period may be set differently according to various conditions, but may be approximately 5 seconds. When a temperature of bracket-water continuously maintains an increasing value as a result of measuring a temperature of the bracket 1034 (indirectly measuring the temperature of the heater 1014) and a temperature of water (an internal temperature of the cooking appliance 1000) for the third time period, the processor 2200 of the heating apparatus 2000 may determine that the cooking appliance 1000 undergoes empty heating. On the other hand, when the temperature of bracket-water has a decreasing value as a result of measuring temperatures of the bracket 1034 and water for the third time period, the processor 2200 of the heating apparatus 2000 may determine that the cooking appliance 1000 does not undergo empty heating. When determining empty heating, the processor 2200 of the heating apparatus 2000 may determine whether not only the temperature of bracket-water but also the temperature of the bracket 1034 increases or decreases, and determine that the empty heating is occurring when the temperatures thereof increases or determine that the empty heating is not occurring when the temperatures thereof decreases.

In operation S2608, when it is determined that the cooking appliance 1000 undergoes empty heating during heating, the processor 2200 of the heating apparatus 2000 may notify the cooking appliance 1000 of the empty heating, and display information on the empty heating or output this information as an audio via the output interface 2510 of the heating apparatus 2000. When determining that the cooking appliance 1000 undergoes empty heating, in operation S2610, the processor 2200 of the heating apparatus 2000 may control the inverter circuit 2113 to stop wireless power transmission to the cooking appliance 1000 via the transmission coil 2120.

When it is determined in operation S2602 that the cooking appliance 1000 undergoes empty heating, in operation S2610, the processor 2200 of the heating apparatus 2000 performs control to stop wireless power transmission via the transmission coil 2120. In addition, in operation S2612, the processor 2200 of the heating apparatus 2000 may transmit information indicating that the cooking appliance 1000 undergoes empty heating to a user's mobile device or server, and in operation S2614, after stopping heating the cooking appliance 1000, the processor 2200 may switch the heating apparatus 2000 to a standby state for additional user input.

In addition, when it is determined in operation S2606 that the cooking appliance 1000 does not undergo empty heating, in operation S2616, the heating apparatus 2000 may heat the cooking appliance 1000 again according to the same output condition as an output condition for heating before determination as to empty heating, and complete cooking when a particular cooking condition (cooking time or receiving a user input) is satisfied.

In operation S2609, when receiving the notification indicating the empty heating from the heating apparatus 2000, the cooking appliance 1000 controls the relay 1007 or the thermal fuse 1008 to stop heating the heater 1014 via the controller 1020. In operation S2611, the controller 1020 of the cooking appliance 1000 may selectively output occurrence of the empty heating via the output interface 1051 of the cooking appliance 1000 ( display, audio output, or the like).

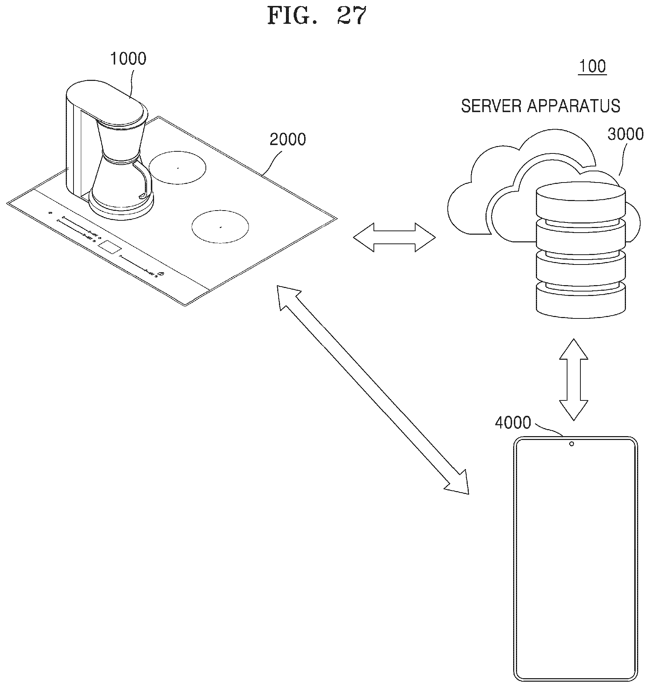

FIG. 27 is a diagram illustrating an operation in which a heating apparatus interworks with a server apparatus and a display device, according to an embodiment of the disclosure.

Referring to FIG. 27, according to an embodiment of the disclosure, the cooking system 100 may further include a server apparatus 3000 and a display device 4000 in addition to the cooking appliance 1000 and the heating apparatus 2000. Because the cooking system 100 including the cooking appliance 1000 and the heating apparatus 2000 has been described with reference to FIG. 1, the server apparatus 3000 and the display device 4000 are described here.

According to an embodiment of the disclosure, the server apparatus 3000 may include a communication interface for communicating with an external device. The server apparatus 3000 may communicate with the cooking appliance 1000, the heating apparatus 2000, or the display device 4000 via the communication interface. According to an embodiment of the disclosure, the cooking appliance 1000 may transmit identification information about the cooking appliance 1000 or user identification information (login information and account information) to the server apparatus 3000, and may be given access to the server apparatus 3000 when the identification information about the cooking appliance 1000 or the user identification information (login information and account information) is authenticated by the server apparatus 3000. In addition, the heating apparatus 2000 may transmit identification information about the heating apparatus 2000 or user identification information (login information and account information) to the server apparatus 3000, and may be given access to the server apparatus 3000 when the identification information about the heating apparatus 2000 or the user identification information (login information and account information) is authenticated by the server apparatus 3000.

According to an embodiment of the disclosure, the server apparatus 3000 may include an AI processor. The AI processor may generate an AI model for recommending a temperature control method and/or an empty heating determination method by training an artificial neural network. 'Training' an artificial neural network may mean creating a mathematical model that enables connections between neurons constituting the artificial neural network to make optimal decisions while appropriately changing weights based on data.

According to an embodiment of the disclosure, the display device 4000 may be a device that is connected to the heating apparatus 2000 and/or the server apparatus 3000 and display information provided by the heating apparatus 2000 and/or the server apparatus 3000. According to an embodiment of the disclosure, the display device 4000 may transmit and receive information to and from the server apparatus 3000 through a specific application (e.g., a home appliance management application) installed on the display device 4000.

According to an embodiment of the disclosure, the display device 4000 may be a device connected to the cooking appliance 1000 and the heating apparatus 2000 with the same account information. The display device 4000 may be directly connected to the cooking appliance 1000 and the heating apparatus 2000 via a short-range wireless communication channel, or indirectly connected to the cooking appliance 1000 and the heating apparatus 2000 through the server apparatus 3000.

According to an embodiment of the disclosure, the display device 4000 may be implemented in various forms. For example, the display device 4000 described in this disclosure may be a mobile terminal, a refrigerator including a display, a television (TV), a computer, an oven including a display, or the like, but is not limited thereto. Furthermore, the mobile terminal may be a smartphone, a laptop computer, a tablet personal computer (PC), a digital camera, an e-book terminal, a digital broadcasting terminal, a personal digital assistant (PDA), a portable multimedia player (PMP), a navigation device, a moving picture experts group phase 1 or phase 2 (MPEG-1 or MPEG-2) audio layer 3 (MP3) player, or the like, but is not limited thereto. For example, the mobile terminal may be a wearable device worn by a user. Hereinafter, for convenience of description, an example in which the display device 4000 is a smartphone is described.

For example, the display device 4000 or the heating apparatus 2000 may receive a speech signal, which is an analog signal, via a microphone, and convert a part of speech into a computer-readable text by using an ASR model. The display device 4000 or the heating apparatus 2000 may obtain an intent in a user's utterance by interpreting the text using an NLU model. Here, the ASR model or NLU model may be an AI model. An AI model may be processed by a dedicated AI processor designed with a hardware structure specialized for processing an AI model. The AI model may be created via a training process. The training process may be performed by an apparatus itself (e.g., the display device 4000 or the heating apparatus 2000) in which AI is performed or via the separate server apparatus 3000 and/or system. Examples of a learning algorithm may include, but are not limited to, supervised learning, unsupervised learning, semi-supervised learning, and reinforcement learning.

An AI model may consist of a plurality of neural network layers. Each of the plurality of neural network layers has a plurality of weight values and may perform neural network computations via calculations between a result of computations in a previous layer and the plurality of weight values. A plurality of weight values assigned to each of the plurality of neural network layers may be optimized by a result of training the AI model. For example, the plurality of weight values may be refined or updated to reduce or minimize a loss or cost value obtained in the AI model during a training process. An artificial neural network may include a deep neural network (DNN), and may be, for example, a convolutional neural network (CNN), a DNN, a recurrent neural network (RNN), a restricted Boltzmann machine (RBM), a deep belief network (DBN), a bidirectional recurrent DNN (BRDNN), or deep Q-networks (DQNs) but is not limited thereto.

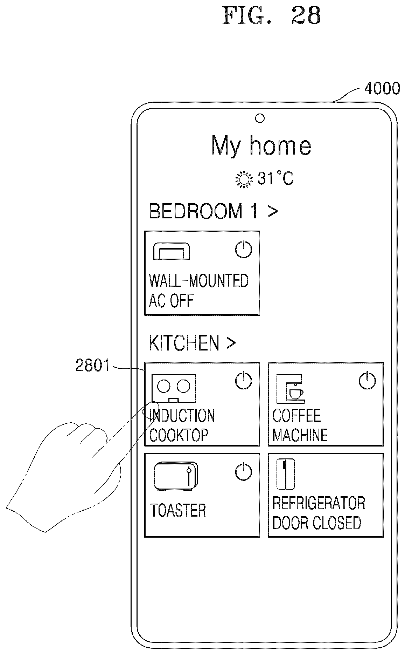

According to an embodiment of the disclosure, the display device 4000 may execute, based on a user input, a particular application (e.g., a home appliance management application) provided by the server apparatus 3000. In this case, the user may set the order of an IH vessel detection operation and a small appliance detection operation via an execution window of the application, and may set the heating apparatus 2000 to detect empty heating of the cooking appliance 1000. Hereinafter, an operation in which the user sets the order of the IH vessel detection operation and the small appliance detection operation using a particular application (e.g., a home appliance management application) provided by the server apparatus 3000 is described. FIG. 28 is a diagram illustrating an operation of providing information about a heating apparatus via a display device, according to an embodiment of the disclosure.

Referring to FIG. 28, when the user executes an application for managing a user's home appliances on the display device 4000, the display device 4000 may receive information from the server apparatus 3000 and display a list of home appliances in an application execution window. The user's home appliances may be registered with the server apparatus 3000 via the same account. The user's home appliances may include the cooking appliance 1000 and the heating apparatus 2000.

For example, the display device 4000 may display, in the application execution window, a list of icons representing the heating apparatus 2000 (an induction cooktop), a coffee machine, a toaster, a refrigerator, or the like. In this case, the display device 4000 may receive a user input for selecting an icon 2801 representing the heating apparatus 2000.

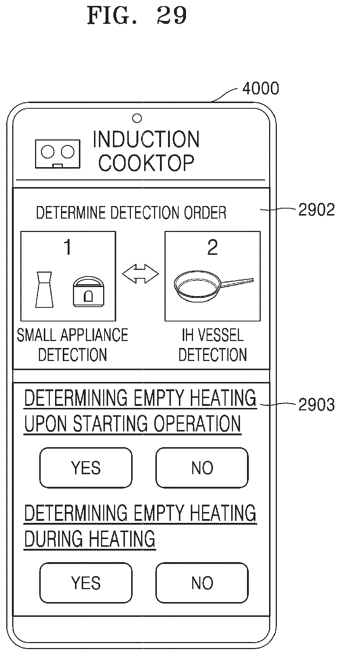

FIG. 29 is a diagram illustrating an operation of providing, via a display device, a screen for setting the order of detection operations and empty heating, according to an embodiment of the disclosure.

Referring to FIG. 29, the display device 4000 may display a settings screen related to the heating apparatus 2000 in the application execution window in response to the user input for selecting the icon 2801.

For example, the display device 4000 may display, in the application execution window, a first field 2902 for selecting the order of detection operations and a second field 2903 for inquiring whether to determine empty heating of detected small appliances. The first field 2902 may include, but is not limited to, a GUI capable of determining the order of small appliance detection and IH vessel detection. The user may set, via the first field 2902, the order of detection operations so that the heating apparatus 2000 may perform small appliance detection before IH vessel detection or perform the IH vessel detection before the small home detection.

A window for selecting whether the heating apparatus 2000 is to determine empty heating of detected small appliances may be displayed in the second field 2903. In this case, the user may select whether to determine empty heating of the cooking appliance 1000 when starting heating the cooking appliance 1000 or whether to determine empty heating thereof during heating. Although not shown, a menu for determining a length of a heating cut-off time period (a second time period and a third time period) may be provided in the second field 2903 to determine the empty heating, and the user may also set the length of the heating cut-off time period via the menu. When the user does not select a heating cut-off time period (the second time period and the third time period), a cut-off time period for empty heating may be set as a default value. Depending on the type and cooking capacity of the detected small appliances, the processor 2200 of the heating apparatus 2000 may automatically change a first time period, which is an initial heating time period, and a heating cut-off time period (the second time period and the third time period) from default setting values. For example, when a length of the first time period for the cooking appliance 1000 having a cooking capacity of 800 ml is 10 seconds, a length of the first time period for the cooking appliance 1000 having a cooking capacity of 1200 ml may be changed to 13 seconds.

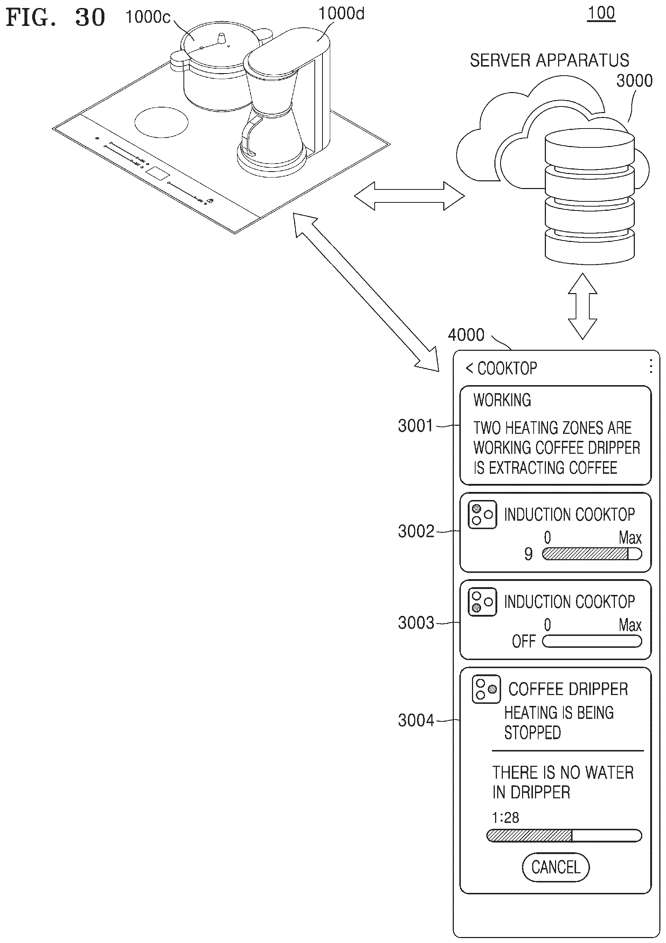

FIG. 30 is a diagram illustrating an operation of notifying that empty heating is occurring via a display device, according to an embodiment of the disclosure.

Referring to FIG. 30, according to an embodiment of the disclosure, when it is detected that a certain cooking appliance 1000 undergoes empty heating by the heating apparatus 2000 in the cooking system 100, the display device 4000 may display a type and a location of the cooking appliance 1000 undergoing empty heating and information indicating that the cooking appliance 1000 undergoes empty heating.

A pot 1000c is placed on a first cooking zone at an upper left of the top plate of the heating apparatus 2000, a coffee dripper 1000d is placed on a third cooking zone on a right side of the top plate of the heating apparatus 2000, and the coffee dripper 1000d undergoes empty heating without water inside. Information indicating that two heating zones are currently working on the heating apparatus 2000 and that the coffee dripper 1000d is extracting coffee is displayed in a first field 3001 of the display device 4000. In a second field 3002, a state in which the first cooking zone at the upper left of the top plate of the heating apparatus 2000 is being heated at level 9 is displayed as a graphic and numbers. In the second field 3002, a graphic image (an icon) at an upper left indicates which of the three cooking zones is being heated. In a third field 3003, a state in which the cooking appliance 1000 is not placed on a second cooking zone at a lower left of the top plate of the heating apparatus 2000 is displayed. In a fourth field 3004, a graphic image (icon) at an upper left indicates that a cooking appliance placed on a cooking zone on the right side among the three heating zones is a coffee dripper 1000d and undergoes empty heating ("There is no water in the dripper"), a state in which the heating is being stopped is displayed, and a 'cancel' button is displayed so that the user may cancel a state in which the heating is currently being stopped. When the user fills the coffee dripper 1000d with water and presses the 'cancel' button in the fourth field 3004, the heating apparatus 2000 may resume heating the coffee dripper 1000d.

A method according to an embodiment of the disclosure may be implemented in the form of program commands executable by various types of computers and may be recorded on computer-readable recording media. The computer-readable recording media may include program commands, data files, data structures, or the like, either alone or in combination. The program commands recorded on the computer-readable recording media may be designed and configured specially for the disclosure or may be known to and be usable by those of skill in the art of computer software. Examples of the computer-readable recording media include magnetic media, such as hard disks, floppy disks, and magnetic tapes, optical media, such as a compact disk read-only memory (CD-ROM) and digital versatile disks (DVDs), magneto-optical media, such as floptical disks, and hardware devices that are specially configured to store and perform program commands, such as ROM, random access memory (RAM), flash memory, or the like. Examples of program commands include not only machine code, such as that created by a compiler but also high-level language code that may be executed by a computer using an interpreter or the like.

Some embodiments of the disclosure may also be implemented in the form of recording media including instructions executable by a computer, such as a program module executed by the computer. The computer-readable recording media may be any available media that are accessible by a computer and include both volatile and nonvolatile media and both removable and non-removable media. Furthermore, the computer-readable recording media may include both computer storage media and communication media. The computer storage media include both volatile and nonvolatile, removable and non-removable media implemented using any method or technology for storage of information, such as computer-readable instructions, data structures, program modules, or other data. The communication media typically embody computer-readable instructions, data structures, program modules, other data in a modulated data signal, such as a carrier wave, or other transmission mechanism, and may include any information transmission media. Furthermore, some embodiments of the disclosure may also be implemented as a computer program product or computer program including instructions executable by a computer.

A computer-readable storage medium may be provided in the form of a non-transitory storage medium. In this regard, the term 'non-transitory storage medium' only means that the storage medium does not include a signal (e.g., electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment of the disclosure, methods according to the embodiments of the disclosure may be included in a computer program product when provided. The computer program product may be traded, as a product, between a seller and a buyer. The computer program product may be distributed in the form of a computer-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in the computer-readable storage medium, such as a memory of a server of a manufacturer, a server of an application store, or a relay server.

While the disclosure has been shown and described with reference to various embodiments thereof, it will be understood by those skilled in the art that various changes in form and details may be made therein without departing from the scope of the disclosure as defined by the appended claims.

## Claims

1. A wireless power transmission apparatus (2000) comprising:
a wireless power transmitter (2100) including a transmission coil (2120) configured to transmit power wirelessly and an inverter circuit (2113) configured to drive the transmission coil;
at least one processor (2200) configured to control the inverter circuit; and
a communication interface (2300) configured to communicate with a cooking appliance (1000),
**characterized in that**
the communication interface is further configured to receive, from the cooking appliance, a temperature of a bottom surface of the cooking appliance and an internal temperature of the cooking appliance for a first time period during which a heating operation is performed via the transmission coil and for a second time period, following the first time period, during which the heating operation via the transmission coil is stopped, and
that the at least one processor is further configured to:
control the inverter circuit to stop the heating operation via the transmission coil for the second time period, and
determine whether the cooking appliance undergoes empty heating, based on a relationship between the temperature of the bottom surface of the cooking appliance and the internal temperature of the cooking appliance for the second time period.

2. The wireless power transmission apparatus of claim 1, wherein the at least one processor is further configured to determine that the cooking appliance undergoes empty heating when a value obtained by subtracting the internal temperature of the cooking appliance from the temperature of the bottom surface increases for the second time period.

3. The wireless power transmission apparatus of claim 1, wherein the at least one processor is further configured to determine that the cooking appliance does not undergo empty heating when a value obtained by subtracting the internal temperature of the cooking appliance from the temperature of the bottom surface decreases for the second time period.

4. The wireless power transmission apparatus of claim 1, wherein the at least one processor is further configured to determine that the cooking appliance undergoes empty heating when a slope corresponding to a value obtained by subtracting the internal temperature of the cooking appliance from the temperature of the bottom surface has a positive value for the second time period.

5. The wireless power transmission apparatus of claim 1, wherein the at least one processor is further configured to determine that the cooking appliance undergoes empty heating when a slope corresponding to a value obtained by subtracting the internal temperature of the cooking appliance from the temperature of the bottom surface is greater than a predetermined value for the second time period.

6. The wireless power transmission apparatus of claim 1, wherein the at least one processor is further configured to determine that the cooking appliance undergoes empty heating when the temperature of the bottom surface of the cooking appliance increases for the second time period.

7. The wireless power transmission apparatus of claim 1, wherein the at least one processor is further configured to control the inverter circuit to heat, for the first time period, the cooking appliance with predetermined power for determining empty heating, instead of power corresponding to a user input.

8. The wireless power transmission apparatus of claim 7,
wherein the communication interface is further configured to receive identification information about the cooking appliance from the cooking appliance, and
wherein the at least one processor is further configured to change, based on the identification information about the cooking appliance, a magnitude of a certain power.

9. The wireless power transmission apparatus of claim 7, wherein the at least one processor is further configured to, when determining that the cooking appliance does not undergo empty heating, control the inverter circuit to output the power corresponding to the user input after the second time period.

10. The wireless power transmission apparatus of claim 1, wherein the at least one processor is further configured to control the inverter circuit to transmit power for communication to the cooking appliance, based on a heating start input by a user.

11. The wireless power transmission apparatus of claim 1, wherein the at least one processor is further configured to, when determining that the cooking appliance undergoes empty heating, notify, via the communication interface, the cooking appliance that the cooking appliance undergoes empty heating.

12. The wireless power transmission apparatus of claim 1,
wherein the communication interface is further configured to receive a temperature of the bottom surface of the cooking appliance and an internal temperature of the cooking appliance for a third time period during which the heating operation via the transmission coil is stopped by the at least one processor while the heating operation is performed on the cooking appliance via the transmission coil after a lapse of the second time period, and
wherein the at least one processor is further configured to further determine whether the cooking appliance undergoes empty heating, based on a relationship between the temperature of the bottom surface of the cooking appliance and the internal temperature of the cooking appliance for the third time period.

13. The wireless power transmission apparatus of claim 12, wherein the at least one processor is further configured to further determine whether the cooking appliance undergoes empty heating, based on a change in the temperature of the bottom surface of the cooking appliance as well as the relationship between the temperature of the bottom surface and the internal temperature of the cooking appliance for the third time period.

14. The wireless power transmission apparatus of claim 13, wherein the at least one processor is further configured to determine that the cooking appliance undergoes empty heating when the temperature of the bottom surface of the cooking appliance increases and a value obtained by subtracting the internal temperature of the cooking appliance from the temperature of the bottom surface increases for the third time period.

15. The wireless power transmission apparatus of claim 1, further comprising:
an output interface (2510); and
a plurality of cooking zones,
wherein the at least one processor is further configured to:
identify, from among the plurality of cooking zones, at least one cooking zone where the cooking appliance is located according to a change in load by controlling the inverter circuit to transmit certain power to the plurality of cooking zones, and
when determining that the cooking appliance undergoes empty heating according to determination as to whether the cooking appliance undergoes empty heating, control the output interface to output the identified at least one cooking zone and information indicating whether the cooking appliance undergoes empty heating.

## Patentansprüche

1. Drahtlose Kraftübertragungseinrichtung (2000), umfassend:
einen drahtlosen Kraftsender (2100), der eine Übertragungsspule (2120), die dazu konfiguriert ist, Kraft drahtlos zu übertragen, und eine Wechselrichterschaltung (2113), die dazu konfiguriert ist, die Übertragungsspule anzutreiben, beinhaltet;
zumindest einen Prozessor (2200), der dazu konfiguriert ist, die Wechselrichterschaltung zu steuern; und
eine Kommunikationsschnittstelle (2300), die dazu konfiguriert ist, mit einem Kochgerät (1000) zu kommunizieren,
**dadurch gekennzeichnet, dass**
die Kommunikationsschnittstelle ferner dazu konfiguriert ist, von dem Kochgerät eine Temperatur einer Bodenfläche des Kochgeräts und eine Innentemperatur des Kochgeräts für einen ersten Zeitraum, während dessen ein Erwärmungsvorgang über die Übertragungsspule durchgeführt wird, und für einen zweiten Zeitraum, der auf den ersten Zeitraum folgt, während dessen der Erwärmungsvorgang über die Übertragungsspule gestoppt ist, zu empfangen und
dass der zumindest eine Prozessor ferner zu Folgendem konfiguriert ist:
Steuern der Wechselrichterschaltung, um den Erwärmungsvorgang über die Übertragungsspule für den zweiten Zeitraum zu stoppen, und
Bestimmen, ob das Kochgerät leere Erwärmung durchläuft, basierend auf einer Beziehung zwischen der Temperatur der Bodenfläche des Kochgeräts und der Innentemperatur des Kochgeräts für den zweiten Zeitraum.

2. Drahtlose Kraftübertragungseinrichtung nach Anspruch 1, wobei der zumindest eine Prozessor ferner dazu konfiguriert ist, zu bestimmen, dass das Kochgerät leere Erwärmung durchläuft, wenn sich ein Wert, der durch Subtrahieren der Innentemperatur des Kochgeräts von der Temperatur der Bodenfläche erhalten wird, für den zweiten Zeitraum erhöht.

3. Drahtlose Kraftübertragungseinrichtung nach Anspruch 1, wobei der zumindest eine Prozessor ferner dazu konfiguriert ist, zu bestimmen, dass das Kochgerät keine leere Erwärmung durchläuft, wenn ein Wert, der durch Subtrahieren der Innentemperatur des Kochgeräts von der Temperatur der Bodenfläche erhalten wird, für den zweiten Zeitraum abnimmt.

4. Drahtlose Kraftübertragungseinrichtung nach Anspruch 1, wobei der zumindest eine Prozessor ferner dazu konfiguriert ist, zu bestimmen, dass das Kochgerät leere Erwärmung durchläuft, wenn eine Steigung entsprechend einem Wert, der durch Subtrahieren der Innentemperatur des Kochgeräts von der Temperatur der Bodenfläche erhalten wird, einen positiven Wert für den zweiten Zeitraum aufweist.

5. Drahtlose Kraftübertragungseinrichtung nach Anspruch 1, wobei der zumindest eine Prozessor ferner dazu konfiguriert ist, zu bestimmen, dass das Kochgerät leere Erwärmung durchläuft, wenn eine Steigung entsprechend einem Wert, der durch Subtrahieren der Innentemperatur des Kochgeräts von der Temperatur der Bodenfläche erhalten wird, größer als ein vorbestimmter Wert für den zweiten Zeitraum ist.

6. Drahtlose Kraftübertragungseinrichtung nach Anspruch 1, wobei der zumindest eine Prozessor ferner dazu konfiguriert ist, zu bestimmen, dass das Kochgerät leere Erwärmung durchläuft, wenn sich die Temperatur der Bodenfläche des Kochgeräts für den zweiten Zeitraum erhöht.

7. Drahtlose Kraftübertragungseinrichtung nach Anspruch 1, wobei der zumindest eine Prozessor ferner dazu konfiguriert ist, die Wechselrichterschaltung zu steuern, um für den ersten Zeitraum das Kochgerät mit vorbestimmter Kraft zum Bestimmen von leerer Erwärmung anstelle von Kraft entsprechend einer Benutzereingabe zu erwärmen.

8. Drahtlose Kraftübertragungseinrichtung nach Anspruch 7,
wobei die Kommunikationsschnittstelle ferner dazu konfiguriert ist, Identifikationsinformationen über das Kochgerät von dem Kochgerät zu empfangen, und
wobei der zumindest eine Prozessor ferner dazu konfiguriert ist, basierend auf den Identifikationsinformationen über das Kochgerät eine Größe einer bestimmten Kraft zu ändern.

9. Drahtlose Kraftübertragungseinrichtung nach Anspruch 7, wobei der zumindest eine Prozessor ferner dazu konfiguriert ist, wenn bestimmt wird, dass das Kochgerät keine leere Erwärmung durchläuft, die Wechselrichterschaltung zu steuern, um die Kraft entsprechend der Benutzereingabe nach dem zweiten Zeitraum auszugeben.

10. Drahtlose Kraftübertragungseinrichtung nach Anspruch 1, wobei der zumindest eine Prozessor ferner dazu konfiguriert ist, die Wechselrichterschaltung zu steuern, um Kraft zur Kommunikation an das Kochgerät basierend auf einer Erwärmungsstarteingabe durch einen Benutzer zu übertragen.

11. Drahtlose Kraftübertragungseinrichtung nach Anspruch 1, wobei der zumindest eine Prozessor ferner dazu konfiguriert ist, wenn bestimmt wird, dass das Kochgerät leere Erwärmung durchläuft, über die Kommunikationsschnittstelle das Kochgerät zu benachrichtigen, dass das Kochgerät leere Erwärmung durchläuft.

12. Drahtlose Kraftübertragungseinrichtung nach Anspruch 1,
wobei die Kommunikationsschnittstelle ferner dazu konfiguriert ist, eine Temperatur der Bodenfläche des Kochgeräts und eine Innentemperatur des Kochgeräts für einen dritten Zeitraum zu empfangen, während dessen der Erwärmungsvorgang über die Übertragungsspule durch den zumindest einen Prozessor gestoppt ist, während der Erwärmungsvorgang an dem Kochgerät über die Übertragungsspule nach einem Ablauf des zweiten Zeitraums durchgeführt wird, und
wobei der zumindest eine Prozessor ferner dazu konfiguriert ist, basierend auf einer Beziehung zwischen der Temperatur der Bodenfläche des Kochgeräts und der Innentemperatur des Kochgeräts für den dritten Zeitraum ferner zu bestimmen, ob das Kochgerät leere Erwärmung durchläuft.

13. Drahtlose Kraftübertragungseinrichtung nach Anspruch 12, wobei der zumindest eine Prozessor ferner dazu konfiguriert ist, basierend auf einer Änderung der Temperatur der Bodenfläche des Kochgeräts sowie der Beziehung zwischen der Temperatur der Bodenfläche und der Innentemperatur des Kochgeräts für den dritten Zeitraum ferner zu bestimmen, ob das Kochgerät leere Erwärmung durchläuft.

14. Drahtlose Kraftübertragungseinrichtung nach Anspruch 13, wobei der zumindest eine Prozessor ferner dazu konfiguriert ist, zu bestimmen, dass das Kochgerät leere Erwärmung durchläuft, wenn sich für den dritten Zeitraum die Temperatur der Bodenfläche des Kochgeräts erhöht und sich ein Wert, der durch Subtrahieren der Innentemperatur des Kochgeräts von der Temperatur der Bodenfläche erhalten wird, erhöht.

15. Drahtlose Kraftübertragungseinrichtung nach Anspruch 1, ferner umfassend:
eine Ausgabeschnittstelle (2510); und
eine Vielzahl von Kochzonen,
wobei der zumindest eine Prozessor ferner zu Folgendem konfiguriert ist:
Identifizieren, aus der Vielzahl von Kochzonen, von zumindest einer Kochzone, in der sich das Kochgerät befindet, gemäß einer Laständerung, durch Steuern der Wechselrichterschaltung, um bestimmte Kraft an die Vielzahl von Kochzonen zu übertragen, und
wenn bestimmt wird, dass das Kochgerät leere Erwärmung durchläuft, gemäß Bestimmung, ob das Kochgerät leere Erwärmung durchläuft, Steuern der Ausgabeschnittstelle, um die identifizierte zumindest eine Kochzone und Informationen, die angeben, ob das Kochgerät leere Erwärmung durchläuft, auszugeben.

## Revendications

1. Appareil de transmission de puissance sans fil (2000) comprenant :
un émetteur de puissance sans fil (2100) comprenant une bobine de transmission (2120) configurée pour transmettre de la puissance sans fil et un circuit onduleur (2113) configuré pour entraîner la bobine de transmission :
au moins un processeur (2200) configuré pour commander le circuit onduleur ; et
une interface de communication (2300) configurée pour communiquer avec un appareil de cuisson (1000),
**caractérisé en ce que** l'interface de communication est en outre configurée pour recevoir, en provenance de l'appareil de cuisson, une température d'une surface inférieure de l'appareil de cuisson et une température interne de l'appareil de cuisson pendant une première période de temps au cours de laquelle une opération de chauffage est effectuée via la bobine de transmission et pendant une deuxième période de temps, suivant la première période de temps, au cours de laquelle l'opération de chauffage via la bobine de transmission est arrêtée, et **en ce que** l'au moins un processeur est en outre configuré pour :
commander le circuit onduleur pour arrêter l'opération de chauffage via la bobine de transmission pendant la deuxième période de temps, et
déterminer si l'appareil de cuisson subit un chauffage à vide, sur la base d'une relation entre la température de la surface inférieure de l'appareil de cuisson et la température interne de l'appareil de cuisson pendant la deuxième période de temps.

2. Appareil de transmission de puissance sans fil selon la revendication 1, dans lequel l'au moins un processeur est en outre configuré pour déterminer que l'appareil de cuisson subit un chauffage à vide lorsqu'une valeur obtenue en soustrayant la température interne de l'appareil de cuisson de la température de la surface inférieure augmente pendant la deuxième période de temps.

3. Appareil de transmission de puissance sans fil selon la revendication 1, dans lequel l'au moins un processeur est en outre configuré pour déterminer que l'appareil de cuisson ne subit pas de chauffage à vide lorsqu'une valeur obtenue en soustrayant la température interne de l'appareil de cuisson de la température de la surface inférieure diminue pendant la deuxième période de temps.

4. Appareil de transmission de puissance sans fil selon la revendication 1, dans lequel l'au moins un processeur est en outre configuré pour déterminer que l'appareil de cuisson subit un chauffage à vide lorsqu'une pente correspondant à une valeur obtenue en soustrayant la température interne de l'appareil de cuisson de la température de la surface inférieure présente une valeur positive pendant la deuxième période de temps.

5. Appareil de transmission de puissance sans fil selon la revendication 1, dans lequel l'au moins un processeur est en outre configuré pour déterminer que l'appareil de cuisson subit un chauffage à vide lorsqu'une pente correspondant à une valeur obtenue en soustrayant la température interne de l'appareil de cuisson de la température de la surface inférieure est supérieure à une valeur prédéterminée pendant la deuxième période de temps.

6. Appareil de transmission de puissance sans fil selon la revendication 1, dans lequel l'au moins un processeur est en outre configuré pour déterminer que l'appareil de cuisson subit un chauffage à vide lorsque la température de la surface inférieure de l'appareil de cuisson augmente pendant la deuxième période de temps.

7. Appareil de transmission de puissance sans fil selon la revendication 1, dans lequel l'au moins un processeur est en outre configuré pour commander le circuit onduleur pour chauffer, pendant la première période de temps, l'appareil de cuisson avec une puissance prédéterminée pour déterminer un chauffage à vide, au lieu d'une puissance correspondant à une entrée d'utilisateur.

8. Appareil de transmission de puissance sans fil selon la revendication 7,
dans lequel l'interface de communication est en outre configurée pour recevoir des informations d'identification concernant l'appareil de cuisson en provenance de l'appareil de cuisson, et
dans lequel l'au moins un processeur est en outre configuré pour changer, sur la base des informations d'identification concernant l'appareil de cuisson, une amplitude d'une certaine puissance.

9. Appareil de transmission de puissance sans fil selon la revendication 7, dans lequel l'au moins un processeur est en outre configuré pour, lors de la détermination que l'appareil de cuisson ne subit pas de chauffage à vide, commander le circuit onduleur pour délivrer la puissance correspondant à l'entrée d'utilisateur après la deuxième période de temps.

10. Appareil de transmission de puissance sans fil selon la revendication 1, dans lequel l'au moins un processeur est en outre configuré pour commander le circuit onduleur pour transmettre une puissance pour une communication à l'appareil de cuisson, sur la base d'une entrée de début de chauffage par un utilisateur.

11. Appareil de transmission de puissance sans fil selon la revendication 1, dans lequel l'au moins un processeur est en outre configuré pour, lors de la détermination que l'appareil de cuisson subit un chauffage à vide, notifier, via l'interface de communication, à l'appareil de cuisson que l'appareil de cuisson subit un chauffage à vide.

12. Appareil de transmission de puissance sans fil selon la revendication 1,
dans lequel l'interface de communication est en outre configurée pour recevoir une température de la surface inférieure de l'appareil de cuisson et une température interne de l'appareil de cuisson pendant une troisième période de temps au cours de laquelle l'opération de chauffage via la bobine de transmission est arrêtée par l'au moins un processeur pendant que l'opération de chauffage est effectuée sur l'appareil de cuisson via la bobine de transmission après l'écoulement de la deuxième période de temps, et
dans lequel l'au moins un processeur est en outre configuré pour déterminer en outre si l'appareil de cuisson subit un chauffage à vide, sur la base d'une relation entre la température de la surface inférieure de l'appareil de cuisson et la température interne de l'appareil de cuisson pendant la troisième période de temps.

13. Appareil de transmission de puissance sans fil selon la revendication 12, dans lequel l'au moins un processeur est en outre configuré pour déterminer en outre si l'appareil de cuisson subit un chauffage à vide, sur la base d'un changement de la température de la surface inférieure de l'appareil de cuisson ainsi que de la relation entre la température de la surface inférieure et la température interne de l'appareil de cuisson pendant la troisième période de temps.

14. Appareil de transmission de puissance sans fil selon la revendication 13, dans lequel l'au moins un processeur est en outre configuré pour déterminer que l'appareil de cuisson subit un chauffage à vide lorsque la température de la surface inférieure de l'appareil de cuisson augmente et qu'une valeur obtenue en soustrayant la température interne de l'appareil de cuisson de la température de la surface inférieure augmente pendant la troisième période de temps.

15. Appareil de transmission de puissance sans fil selon la revendication 1, comprenant en outre :
une interface de sortie (2510) ; et
une pluralité de zones de cuisson,
dans lequel l'au moins un processeur est en outre configuré pour :
identifier, parmi la pluralité de zones de cuisson, au moins une zone de cuisson où se situe l'appareil de cuisson en fonction d'un changement de charge en commandant le circuit onduleur pour transmettre une certaine puissance à la pluralité de zones de cuisson, et
lors de la détermination que l'appareil de cuisson subit un chauffage à vide en fonction de la détermination du fait que l'appareil de cuisson subit ou non un chauffage à vide, commander l'interface de sortie pour sortir l'au moins une zone de cuisson identifiée et des informations indiquant si l'appareil de cuisson subit un chauffage à vide.
